# EUROPEAN PATENT SPECIFICATION

(11) **EP 0 852 037 B1**
(45) Date of publication and mention of the grant of the patent: **01.12.1999**
(21) Application number: 96935813.4
(22) Date of filing: 13.09.1996
(51) Int. Cl.: G06F 17/22

(54) **UNICODE CONVERTER**
UNICODE-WANDLER
TRANSCODEUR UNICODE

(30) Priority: 13.09.1995 US 527438; 13.09.1995 US 527827; 13.09.1995 US 527837; 13.09.1995 US 527831
(43) Date of publication of application: 08.07.1998
(73) Proprietor: APPLE COMPUTER, INC., Cupertino, CA 95014 (US)
(72) Inventor: EDBERG, Peter, K., Eugene, OR 97403 (US); McCONNELL, John, I., Menlo Park, CA 94025 (US); TANG, Yung-Fong, Frank, Sunnyvale, CA 94082 (US); DANIELS, Andrew, M., Menlo Park, CA 94025 (US)
(74) Representative: Le Forestier, Eric
(86) International application number: US9614667
(87) International publication number: WO9710556

(56) References cited:
- US-A- 5 309 358
- OBJECTS IN EUROPE, vol. 2, no. 4, July 1995, pages 14, 16/17, 22-24, XP000565458 M. DAVIS ET AL: "International Support in Applications and Systems Software: Part Two"
- PROCEEDINGS OF THE INTERNATIONAL CONFERENCE ON SYSTEMS, MAN, AND CYBERNETICS, LOS ANGELES, 4 - 7 November 1990, INSTITUTE OF ELECTRICAL AND ELECTRONICS ENGINEERS, pages 499-504, XP000215394 M. DAVIS ET AL: "Unicode"
- IBM TECHNICAL DISCLOSURE BULLETIN, vol. 37, no. 11, 1 November 1994, pages 11-14, XP000487148 "Validation of Double-Byte Character Sets Text for Prompting in a Language-Sensitive Editing System"
- IBM TECHNICAL DISCLOSURE BULLETIN, vol. 35, no. 5, 1 October 1992, ARMONK, US, page 273 XP000312973 "Technique to Provide NLS Code Page Conversion with Roundtrip Fidelity"

## Description

### Technical Field

The present invention relates to a system for converting between character codes for written or displayed text, and more particularly, to a code converter for converting between one character set and another character set.

### Background Art

Computers and other electronic devices typically use text to interact with users. The text is usually displayed on a monitor or some other type of display device. Because the text must be represented in digital form inside the computer or other electronic device, a character set encoding must be used. Generally speaking, a character set encoding operates to encode each character of the character set with a unique digital representation. The characters (which are encoded) correspond to letters, numbers and various text symbols are assigned numeric codes for use by computers or other electronic devices. The most popular character set for use with computers and other electronic devices is the American Standard Code for Information Exchange (ASCII). ASCII uses 7-bit sequences for its encodings. In other countries, different character sets are used. In Europe, the dominant character encoding standards are the ISO 8859-X family, especially ISO 8859-1 (called "Latin-1") developed by the International Standards Organization (ISO). In Japan, the dominant character encoding standard is JIS X0208 where JIS refers to the Japanese Information Standard and was developed by Japan Standards Association (JSA). Examples of other existing character sets include Mac™ OS Standard Roman encoding (by Apple Computer, Inc.), Shift-JIS (Japan), Big5 (Taiwan), and many more.

With the ongoing globalization of business and networks, it has become important for computers or other electronic devices to be able to handle multiple character encodings. For example, the same computer or electronic device may be used by persons of different nationalities who wish to interact with the computer or other electronic device in a different language. For each such language a different character set encoding is usually needed. However, character sets for the same language can also differ.

There is also a need to be able to convert from one character set encoding to another encoding. For example, a user in France using ISO 8859-1 may want to send an electronic mail message in French to a user in Israel who is using ISO 8859-8. Because the sender and receiver are using different character set encodings, the non-ASCII characters in the message will be garbled for the user in Israel. Ideally, one of the computers or electronic devices would convert from one character set to another character set. This has been achieved to a limited extent between a few character sets, but is largely not possible with modern computers or electronic devices. Code conversion is made difficult because of the numerous different character standards and the often conflicting or inconsistent national standards.

The Unicode™ standard (hereafter simply Unicode or Unicode standard) was developed to provide an international character encoding standard. The designers of the Unicode standard wanted and did provide a more efficient and flexible method of character identification. The Unicode standard includes characters of all major International Standards approved and published before December 31, 1990, as well as other characters not in previous standards. The characters are encoded in the Unicode standard without duplication. The codes within the Unicode standard are 16-bits (or 2 bytes) wide.

A character code standard such as the Unicode standard facilitates code conversion and enables the implementation of useful processes operating on textual data. For example, in accordance with the above example, the computer or other electronic device in France can transmit Unicode characters and the computer or other electronic device in Israel can convert the Unicode characters it receives into a Hebrew based character set that is compatible with the computer or other electronic device in Israel.

Below is a general overview discussion of the Unicode standard. For additional detail about the Unicode standard, see, e.g., The Unicode Standard, Worldwide Character Encoding, Version 1.0, Addision-Wesley 1991 (Version 1.1 is also available for additional details).

The design of the Unicode encoding scheme is independent of the design of basic text processing algorithms, with the exception of directionality. Unicode implementations are assumed to contain suitable text processing and/or rendering algorithms. For convenience, all codes in the Unicode standard are grouped by a linguistic and functional category, though all the codes in the Unicode standard are equally accessible. "The code space in the Unicode standard is divided into six zones: General Scripts (alphabetic and other scripts that have relatively small character sets), Symbols, CJK (Chinese, Japanese, and Korean) Auxiliary, CJK ideographs, Private Use and Compatibility. The General Script zone covers alphabetic or syllabic scripts such as Latin, Cyrillic, Greek, Hebrew, Arabic, Devanagari and Thai. The Symbol zone includes a large variety of characters for punctuation, mathematics, chemistry, dingbats, and so on. The CJK Auxiliary zone includes punctuation, symbols, Kana, Bopomofo, and single and composite Hangul. The CJK Ideographic zone provides space for over 20,000 ideographic characters or characters from other scripts. The Private Use zone is used for defining user- or vendor- specific graphic characters. The Compatibility Zone contains characters from widely used corporate and national standards that have other canonical representations in Unicode encoding." The Unicode Standard, supra, Version 1.0, p.13.

The Unicode standard provides character properties and control characters. Character properties are useful for use in parsing, sorting, and other algorithms requiring semantic knowledge about the code points within the Unicode encoding. The character properties identified by the Unicode standard include: digits, numbers, space characters, non-spacing marks, and direction. The Unicode characters are grouped based on the characters properties. Digits, numbers and space characters are well known. The non-spacing marks group houses non-spacing marks, and the direction group houses the direction characters.

Non-spacing marks (e.g., accent marks in Greek and Roman scripts, vowel marks in Arabic and Devanagari) do not appear linearly in the final rendered text. In a Unicode character code sequence, all such characters follow the base character which they modify, or the character after which they would be articulated in phonetic order (for example, Roman "Á" is stored as "A"' when not stored in a precomposed form). When rendered, these characters (i.e., non-spacing marks) are intended to be positioned relative to the preceding base character in some manner, and not themselves occupy a spacing position. Control characters are encoded in the Unicode standard, but are not themselves graphic characters. These control characters can, for example, be used for indicating a horizontal tab, or supplying additional information about text such as formatting attributes or structure, or for controlling by directional formatting. Because the Unicode standard also provides bidirectional character ordering, the Unicode encoding scheme also includes characters to specify changes in direction. For example, Greek, Roman and Thai have a dominant direction of left-to-right, while Arabic and Hebrew have a dominant direction of right-to-left. The use of control characters to change directions will sometimes be needed by the user or system, for example, when left-to-right characters are to be displayed in right-to-left order.

One problem with conventional code converters is that they are able to convert only one source character to one target character. This type of conversion works for some character sets, but is unsatisfactory for certain character sets (e.g., Unicode) which includes numerous non-spacing characters or combining marks which are normally associated with other characters. The conventional code converters are also incapable of converting to or from symbols, ligatures or ideographs associated with multiple characters.

As a result, convention code converters do not provide round trip fidelity in which the code converters can convert and then unconvert producing the originally input character string. This is important when using the code converter as a hub for the conversion to one character code to another.

Thus, there is a need for a code converter that is able to convert from multiple source characters to a single target character, or to convert a single source character to multiple target characters so as to ensure fidelity in round trip character code conversions.

Another problem with conventional code converters is that they do not take direction into consideration when converting characters of a source character set to characters of a target character set. This can lead to erroneous conversions because some characters sets are ordered from left-to-right, while others are ordered from right-to-left. This typically occurs when converting to a target character which has two equivalent characters for a given source encoding, with the only difference being the direction. In this case, to map the correct target character, the direction of the source character must be known. The conventional code converters are also unsatisfactory because they are not flexible enough to handle certain character sets (e.g., Unicode) that include characters corresponding to languages that are ordered (directional) from left-to-right as well as languages that are ordered from right-to-left. For example, a Unicode character string in which the ordering or directionality of the characters changes within the Unicode character string would not be correctly converted by conventional code converters because the conventional code converters assume a fixed direction for the entire character string.

Thus, there is a need for a code converter that is able to convert characters from a source character set to characters of a target character set while taking the direction of the characters into consideration.

From the document US-A-5309358 (ANDREWS ET AL) 3 May 1994 conversion of double-byte character strings from one interchange code to another is known. The conversion uses column and row indices into a conversion array and a national double-byte conversion table.

Another problem with some conventional code converters occurs as follows. When receiving text over a network, the data associated with the text typically arrives in blocks of data. The data is completely received only after all the blocks comprising the data have been received. The received data is placed in a buffer where it awaits conversion of character codes. The buffer, however, in many cases is unable to store the entire data stream or sometimes even a block thereof. In any case, the end of the buffer (i.e., the last character in the buffer) may occur in the middle of what is later to be determined by the scanner 408 to be a text element. When the end of the buffer occurs in the middle of a text element, the scanner 408 is unable to correctly obtain the last text element because subsequent characters may effect or be part of the last text element.

Another problem with most conventional code converters is that they do not take into consideration context when converting characters of a source character set to characters of a target character set. With certain character sets (e.g., Unicode) the character set includes separate character codes for the different context presentation forms, while at other times only a single character code is provided and the context is used to determine the presentation form. Conventional code converters are, however, unable to convert codes in accordance with their context. Context-based code conversion is particularly problematic when the character set (such as Unicode) involved in the conversion utilizes a mixture of techniques for accommodating character contexts.

Thus, there is a need for a code converter that is able to accurately, as well as flexibly, convert characters from a source character set to characters of a target character set while taking into consideration the context of the characters.

### Disclosure of the Invention

Broadly speaking, the invention pertains to code conversion and/or truncation processing techniques.

In a first aspect of the invention, a code conversion technique provides round trip fidelity, while ensuring that the resulting character codes are interchangeable with other platforms. The code conversion system is able to map a single source character or a sequence of characters to either a single target character or a sequence of target characters. With round trip fidelity, source text can be converted to target text and then back again to the original source text. The interchangability is ensured by maximizing the use of standard target characters, and by minimizing the use of private characters. The code conversion is particularly useful for converting to/from Unicode characters from/to other character sets. The mapping of a sequence of Unicode characters to a single character in a target character set has heretofore been unavailable. The invention provides a robust solution which provides a great deal of flexibility in operation as well as in data storage. The invention can be implemented in numerous ways, including as a method, apparatus or system, or on a computer readable medium.

As a method for converting a source string into a target string, an embodiment of the invention according to the first aspect of the invention performs the operations of: receiving a source string having a first character encoding; sequentially dividing the source string into text elements, each text element including one or more characters of the source string; looking up in a mapping table a conversion code associated with a second character encoding for each of the text elements; and combining the conversion codes for the text elements so as to form a target string of the second character encoding.

Additionally, with respect to the first aspect of the invention, the mapping table may includes regular mappings and fallback mappings, and the looking up operation may determine the conversion code for each of the text elements using the fallback mappings when the mapping table does not contain a conversion code for the text elements using the regular mappings. Also, it is preferred that each of the characters have a character class associated therewith, and that the dividing of the source string be based at least in part on the character class of the characters within the source string.

As a code conversion system for converting a source string to a target string, an embodiment of the invention according to the first aspect of the invention includes: a converter for controlling the conversion of the source string having a first character encoding into the target string having a second character encoding; a scanner, for dividing the source string into text elements, each text element including one or more characters of the source string; a mapping table for storing target encodings for text elements of the source encoding; and a lookup handler, for looking up in the mapping table a conversion code associated with a second character encoding for each of the text elements.

The code conversion system according to the first aspect of the invention may further include a fallback handler and a scanner table. The fallback handler provides fallback conversion codes in certain cases, when the lookup handler is unable to provide a conversion code for one or more text elements. The fallback conversion codes contain one or more code points in the target encoding that are not exactly equivalent to the characters in the text element but have a graphical appearance that is similar. The scanner table assists the scanner in determining whether individual characters in the input string should be included within a current text element or alternatively begin a new next text element.

As a scanning system for scanning an input character string, an embodiment of the invention according to the first aspect of the invention includes: an input device for obtaining an input character from the input character string, the input character string having a character encoding, and each character of the input character string having a character class; an attributes table for providing attributes for the input character; and a state machine for determining both a next state for the state machine and a next action in accordance with the attributes for the input character and a current state of the state machine. The scanning system determines whether the input character of the input character string should be included within a current text element or whether the current text element should end and a new text element begun based on the next action determined by the state machine. Preferably, the attributes include at least a character class for the input character, and the state machine determines the next state and the next action based on the character class for the input character and the current state of the state machine.

As a computer readable medium containing program instructions for converting a source string into a target string, an embodiment of the invention according to the first aspect of the invention includes: computer readable code configured to cause a computer to effect receiving a source string having a first character encoding; computer readable code configured to cause a computer to effect dividing the source string into text elements, each text element including one or more characters of the source string; computer readable code configured to cause a computer to effect looking up in a conversion code associated with a second character encoding for each of the text elements; and computer readable code configured to cause a computer to effect combining the conversion codes for the text elements so as to form a target string of the second character encoding.

In a second aspect of the invention, a code conversion system takes direction into consideration when converting characters from a source character encoding to a target character encoding.

The code conversion system according to the second aspect of the invention is able to map a single source character or a sequence of characters to either a single target character or a sequence of target characters. By determining or resolving the direction of the characters being converted, the code conversion system can then utilize the determined or resolved direction of the characters to ensure that the correct mapping to the target character encoding is utilized. Hence, with the invention correct code conversion is achieved even when the directionality of the characters within a source string varies. The invention can be implemented in numerous ways, including as a method, apparatus or system, or on a computer readable medium.

As a code conversion system for converting a source string to a target string, an embodiment of the invention according to the second aspect of the invention includes a converter for controlling the conversion of the input string having a source character encoding into the target string having a target character encoding, the input string including a plurality of characters; a scanner for determining a direction of the characters in the input string; a mapping table for storing target encodings for characters of the source encoding; and a lookup handler for looking up in said mapping table a conversion code associated with a target character encoding for each of the characters in the input string based on the direction and the source encoding for the characters in the input string. Preferably, the scanner further divides the input string into text elements with each text element including one or more characters of the input string, the scanner determines the direction of the text elements, the mapping table stores target encodings for text elements of the source encoding, and the lookup handler looks up the target character encoding for each of the text elements based on the direction and the source encoding for the characters in the text elements. The embodiment may also include a fallback handler for providing fallback conversion codes in certain cases, when said lookup handler is unable to provide a conversion code for one or more text elements.

As a method for converting a source string into a target string, an embodiment of the invention according to the second aspect of the invention performs the operations of: receiving a source string having a first character encoding, the source string including a plurality of source characters; determining a direction for the source characters of the source string; looking up in a mapping table a conversion code associated with a second character encoding for each of the source characters based on the first character encoding and the direction determined; and combining the conversion codes for the source characters so as to form a target string of the second character encoding.

As a computer readable medium containing program instructions for converting a source string into a target string, an embodiment of the invention according to the second aspect of the invention includes: computer readable code configured to cause a computer to effect receiving a source string having a first character encoding; computer readable code configured to cause a computer to effect determining a direction for each of the source characters in the source string and to effect dividing the source string into text elements, each text element including one or more characters of the source string; computer readable code configured to cause a computer to effect looking up in a conversion code associated with a second character encoding for each of the text elements; and computer readable code configured to cause a computer to effect combining the conversion codes for the text elements so as to form a target string of the second character encoding.

In a third aspect of the invention, a code conversion system that takes context into consideration when converting characters from a source character encoding to a target character encoding.

The code conversion system according to the third aspect of the invention is able to map a single source character or a sequence of characters to either a single target character or a sequence of target characters. By determining the context of the characters being converted, the code conversion system can then utilize the determined context of the characters to ensure that the correct mapping to the target character encoding is utilized. Hence, with the invention, the correct code conversion is achieved even when the context of the characters leads to different target encodings. The invention can be implemented in numerous ways, including as a method, apparatus or system, or on a computer readable medium.

As a code conversion system for converting a source string to a target string, an embodiment of the invention according to the third aspect of the invention includes a converter for controlling the conversion of the input string having a source character encoding into the target string having a target character encoding, the input string including a plurality of characters; a scanner for determining a context for each of the characters in the input string; a mapping table for storing target encodings for characters of the source encoding; and a lookup handler for looking up in said mapping table a conversion code associated with a target character encoding for each of the characters in the input string based on the context and the source encoding for the characters in the input string. Preferably, the scanner further divides the input string into text elements, with each text element including one or more characters of the input string. The embodiment may also include a fallback handler for providing fallback conversion codes in certain cases, when the lookup handler is unable to provide a conversion code for one or more text elements.

As a code conversion system for converting a source string to a target string, another embodiment of the invention according to the third aspect of the invention includes converter means for controlling the conversion of the source string having a source character encoding into the target string having a target character encoding; state machine means for determining a context for each of the characters in the source; mapping means for storing target character encodings for characters of the source character encoding; and lookup handler means for looking up in said mapping means a conversion code associated with a target character encoding for each of the characters in the source string.

As a method for converting a source string into a target string, an embodiment of the invention according to the third aspect of the invention performs the operations of: receiving a source string having a first character encoding, the source string including a plurality of source characters; determining a context for each of the source characters in the source string; looking up in a mapping table a conversion code associated with a second character encoding for each of the source characters based on the first character encoding and the context determined for the source character; and combining the conversion codes for the source characters so as to form a target string of the second character encoding.

As a computer readable medium containing program instructions for converting a source string into a target string, an embodiment of the invention according to the third aspect of the invention includes: computer readable code configured to cause a computer to effect receiving a source string having a first character encoding; computer readable code configured to cause a computer to effect determining a context for each of the source characters in the source string and to effect dividing the source string into text elements, each text element including one or more characters of the source string; computer readable code configured to cause a computer to effect looking up in a conversion code associated with a second character encoding for each of the text elements; and computer readable code configured to cause a computer to effect combining the conversion codes for the text elements so as to form a target string of the second character encoding.

In a fourth aspect of the invention, a truncation processing technique ensures that a source string received for conversion is accurately converted into a different, target character encoding even when the source string exceeds the length of an input buffer which holds the source string for conversion.

The truncation processing according to the fourth aspect of the invention operates to truncate a portion of the source string held in the input buffer so that the truncated portion is able to be converted to the target character encoding without being affected by subsequent characters in the source string. Of course, the portion of the source string held in the input buffer after truncation (truncated portion) should be maximized so that the code conversion can be carried out efficiently. The invention is particularly useful when the input source string is data received over a network. For example, the data may be textual data being electronically transferred over the Internet. In any case, the invention can be implemented in numerous ways, including as a method, apparatus or system, or on a computer readable medium.

As a code conversion system for converting a source string to a target string, an embodiment of the invention according to the fourth aspect of the invention includes: a converter for controlling the conversion of the source string having a first character encoding into the target string having a second character encoding; a buffer for receiving a portion of the source string at a time, the source string including more than one portion; a truncator for truncating the portion of the source string; a scanner for dividing the truncated portion of the source string into text elements, each text element including one or more characters of the truncated portion of the source string; a mapping table for storing target encodings for text elements of the source encoding; and a lookup handler for looking up in the mapping table a conversion code associated with a second character encoding for each of the text elements.

As a first method for truncating a source string for character conversion to a target string, an embodiment of the invention according to the fourth aspect of the invention performs the operations of: receiving a buffer portion of a source string in a buffer, the source string including more than one buffer portion; determining a subpart of the buffer portion of the source string that can be converted to a target string without being affected by subsequent buffer portions of the source string; and converting the subpart of the buffer portion of the source string into target encodings. Preferably, the first method also performs the operation of saving a remaining part of the buffer portion for conversion with a next buffer portion or subpart thereof, where the remaining part together with the subpart equals the buffer portion.

As a second method for truncating a source string for character conversion to a target string, an embodiment of the invention according to the fourth aspect of the invention performs the operations of: receiving a portion of a source string in a buffer; determining a text element within the portion of the source string, each text element including one or more characters of the source string; determining whether the text element is complete; including the text element in a truncated portion of the source string when the text element is complete; repeating the text element determining until the portion of the source string has been completely considered; and thereafter outputting the truncated portion of the source string for character conversion. Preferably, the second method also performs the operation of saving any remaining portion of the source string for use with a next portion of the source string received in the buffer.

As a computer readable medium containing program instructions for converting a source string into a target string, an embodiment of the invention according to the fourth aspect of the invention includes: computer readable code configured to cause a computer to effect receiving a portion of a source string having a first character encoding in a buffer; computer readable code configured to cause a computer to effect truncating the portion of the source string; computer readable code configured to cause a computer to effect dividing the truncated portion of the source string into text elements, each text element including one or more characters of the truncated portion of the source string; computer readable code configured to cause a computer to effect looking up in a conversion code associated with a second character encoding for each of the text elements; and computer readable code configured to cause a computer to effect combining the conversion codes for the text elements so as to form a target string of the second character encoding.

Other aspects and advantages of the invention will become apparent from the following detailed description, taken in conjunction with the accompanying drawings, illustrating by way of example the principles of the invention.

### Brief Description of the Drawings

The present invention will be readily understood by the following detailed description in conjunction with the accompanying drawings, wherein like reference numerals designate like structural elements, and in which:
FIG. 1 is block diagram of a representative computer system in accordance with the invention;
FIG. 2 illustrates the format of Unicode character encodings;
FIG. 3 illustrates a block diagram of a basic Unicode code conversion system according to the invention which receives a source string and outputs a target string;
FIG. 4 illustrates a block diagram of an embodiment of a From-Unicode code conversion system according to an embodiment of the invention;
FIG. 5 is a schematic diagram of a preferred arrangement for a mapping table of the Unicode code conversion system;
FIG. 6A is a flow chart of processing performed by an application program making use of the Unicode code conversion system according to an embodiment of the invention;
FIG. 6B is a flow chart of truncation processing in accordance with an embodiment the invention;
FIG. 7 is a flow chart of Unicode converter processing according to an embodiment of the invention;
FIG. 8 is a flow chart of update offsets processing according to an embodiment of the invention;
FIGS. 9A and 9B are flow charts of next text element processing according to an embodiment of the invention;
FIGS. 10A, 10B and 10C are flow charts of next text element processing according to an embodiment of the invention;
FIG. 11 is a block diagram of a scanner according to an embodiment of the invention;
FIG. 12 is a schematic diagram of a preferred format for the attributes table shown in FIG. 10.
FIG. 13 is a flow chart of attributes lookup processing according to an embodiment of the invention;
FIGS. 14A and 14B are schematic diagrams associated with a scanner table utilized by the scanner to determine the next action according to an embodiment of the invention;
FIG. 15 is a table which represents both a preferred layout and the information which would be stored in the scanner table according to a preferred embodiment of the invention;
FIGS. 16A and 16B are tables which represents both a preferred layout and the information which would be stored in the scanner table according to a preferred embodiment of the invention;
FIG. 17A is a flow chart illustrating resolve direction processing according to an embodiment of the invention;
FIGS. 17B - 17D are tables which represent a preferred layout of bidirectional state tables according to the invention;
FIG. 18 is a flow chart of determine initial direction processing according to an embodiment of the invention;
FIG. 19 is a flow chart of lookup text element processing according to an embodiment of the invention;
FIG. 20 is a flow chart of chain format processing according to an embodiment of the invention;
FIG. 21 is a flow chart of range format processing according to an embodiment of the invention;
FIG. 22 is a flow chart of list format processing according to an embodiment of the invention;
FIGS. 23A and 23B illustrate segment array format processing according to an embodiment of the invention;
FIG. 24 is a flow chart illustrating search variant list processing according to an embodiment of the invention;
FIGS. 25A and 25B are schematic diagrams of tables and data formats associated with the variant list processing according to an embodiment of the invention;
FIGS. 26A, 26B and 26C are flow charts illustrating map lookup target to output sequence processing according to an embodiment of the invention;
FIG. 27 is a flow chart illustrating fallback handling processing in accordance with the invention processing according to an embodiment of the invention;
FIG. 28 is a flow chart illustrating default processing according to an embodiment of the invention; and
FIG. 29 illustrates a block diagram of an embodiment of a To-Unicode code conversion system according to an embodiment of the invention.

### Best Modes for Carrying out the Invention

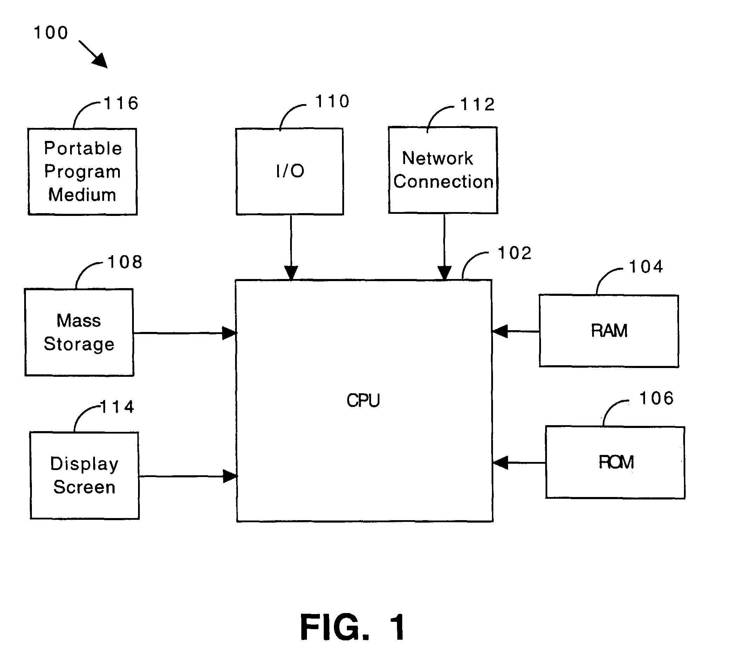

Embodiments of the invention are discussed below with reference to figures 1- 29. However, those skilled in the art will readily appreciate that the detailed description given herein with respect to these figures is for explanatory purposes as the invention extends beyond these limited embodiments.

A code conversion system according to the first aspect of the invention converts source characters to target characters of a different encoding. The invention is a code conversion system that provides round trip fidelity, while ensuring that the resulting character codes are interchangeable with other platforms. The code conversion system is able to map a single source character or a sequence of characters to either a single target character or a sequence of target characters. With round trip fidelity, source text can be converted to target text and then back again to the original source text. The interchangability of the resulting character codes with other platforms is ensured by maximizing the use of standard target characters, and by minimizing the use of private characters. The code conversion system is particularly useful for converting to/from Unicode characters from/to other character sets. The mapping of a sequence of Unicode characters to a single character in a target character set has heretofore been unavailable.

The code conversion system can be a computer system or other electronic device for performing these code conversion operations. This computer system may be specially constructed for the required purposes, or it may be a general purpose computer operating in accordance with a computer program. The processing presented herein is applicable to any computer system or other electronic device. In particular, various general purpose computing machines may be used with software written in accordance with the teachings herein, or it may be more convenient to construct a more specialized electronic device to perform the required operations.

A code conversion system according to the second aspect of the invention takes direction into consideration when converting characters from a source character encoding to a target character encoding. The code conversion system is able to map a single source character or a sequence of characters to either a single target character or a sequence of target characters. By determining or resolving the direction of the characters being converted, the code conversion system can then utilize the determined or resolved direction of the characters to ensure that the correct mapping to the target character encoding is obtained. Hence, with the invention correct code conversion is achieved even when the directionality of the characters within a source string varies.

The invention is particularly useful when Arabic or Hebrew based character sets are utilized because they have a right-to-left direction. The invention provides flexibility to handle either direction as well as the capability to change directions midstream. The capability to change directions midstream is important in cases where Arabic or/and Hebrew are used with the other character sets having the more common left-to-right direction. One example of the use of a character with different directions is the space character. In Unicode, there is only one encoding and it has no inherent direction. In MacArabic, on the other hand, there are distinct left-to-right and right-to-left space characters.

The determining or resolving the direction of the source characters being converted is achieved with a resolve direction technique which is described in detail below with reference to a code conversion system that converts source characters to target characters of a different encoding.

A code conversion system according to the third aspect of the invention takes context into consideration when converting characters from a source character encoding to a target character encoding. The code conversion system is able to map a single source character or a sequence of characters to either a single target character or a sequence of target characters. By determining the context of the characters, the code conversion system can then utilize the determined context of the characters to ensure that the correct mapping to the target encoding is obtained. Hence, with the invention, correct code conversion is achieved even when the context of the characters effects the mapping to the target encoding.

With certain character sets, the context in which the characters are used causes the characters to have different presentation forms. These presentation forms of a character are glyphs. The different presentation forms appear differently when displayed. The context with which the character is used determines the presentation form. Arabic is a language having characters which have different presentation forms depending on their context.

Arabic scripts are used to write the Arabic language. The Arabic script is cursive, even in its printed form. As a result, the same letter may be written in different forms depending on how it joins with its neighbors. An example of such a character is Arabic letter "HEH" (Unicode character encoding of u0647). For example, an Arabic character in Unicode may map to one of four different presentation forms in DOS Arabic depending on the context.
Consequently, the code conversion system according to the invention operates to determine the context of the Arabic character within the Unicode stream so that the correct mapping can be obtained.

The determining of the context of the source characters being converted is achieved with contextual processing which is described in detail below with reference to a code conversion system that converts source characters to target characters of a different encoding.

With respect to the second and third aspects of the invention, the code conversion system converts source characters to target characters of a different encoding. The invention is a code conversion system that provides round trip fidelity, while ensuring that the resulting character codes are interchangeable with other platforms. The code conversion system is able to map a single source character or a sequence of characters to either a single target character or a sequence of target characters. With round trip fidelity, source text can be converted to target text and then back again to the original source text. The interchangability of the resulting character codes with other platforms is ensured by maximizing the use of standard target characters, and by minimizing the use of private characters. The code conversion system is particularly useful for converting to/from Unicode characters from/to other character sets. The mapping of a sequence of Unicode characters to a single character in a target character set has heretofore been unavailable.

The code conversion system can be a computer system or other electronic device for performing these code conversion operations. This computer system may be specially constructed for the required purposes, or it may be a general purpose computer operating in accordance with a computer program. The processing presented herein is applicable to any computer system or other electronic device. In particular, various general purpose computing machines may be used with software written in accordance with the teachings herein, or it may be more convenient to construct a more specialized electronic device to perform the required operations.

In the fourth aspect of the invention, a truncation processing technique ensures that a source string received for conversion is accurately converted into a different, target character encoding even when the source string exceeds the length of an input buffer which holds the source string for conversion. The truncation processing technique operates to truncate a portion of the source string held in the input buffer so that the truncated portion is able to be converted to the target character encoding without being affected by subsequent characters in the source string. Of course, the portion of the source string held in the input buffer after truncation (truncated portion) should be maximized so that the code conversion can be carried out efficiently.

The truncation processing technique according to the invention is described in detail below with reference to a code conversion system that converts source characters to target characters of a different encoding.

FIG. 1 is block diagram of a representative computer system 100 in accordance with the present invention. The computer system 100 includes a central processing unit (CPU) 102, which CPU is coupled bidirectionally with random access memory (RAM) 104 and unidirectionally with read only memory (ROM) 106. Typically RAM 104 includes programming instructions and data, including tables as described herein, in addition to other data and instructions for processes currently operating on CPU 102. The ROM 106 typically includes basic operating instructions, data and objects used by the computer system 100 to perform its functions. In addition, a mass storage device 108, such as a hard disk, CD ROM, magneto-optical (floptical) drive, tape drive or the like, is coupled bidirectionally with CPU 102. Mass storage device 108 generally includes additional programming instructions, data and text objects that typically are not in active use by the CPU, although the address space may be accessed by the CPU, e.g., for virtual memory or the like. Each of the above described computers further includes an input/output source 110 that typically includes input media such as a keyboard, pointer devices (e.g., a mouse or stylus) and the like. The computer system 100 can also include a network connection 112 over which data and instructions can be transferred. Additional mass storage devices (not shown) may also be connected to CPU 102 through network connection 112. The computer system 100 further includes a display screen 114 for viewing text and images generated or displayed by the computer system 100.

The CPU 102 together with an operating system (not shown) operate to execute computer code. The computer code may reside on the RAM 104, the ROM 106, or a mass storage device 108. The computer code could also reside on a portable program medium 116 and then be loaded or installed onto the computer system 100 when needed. Portable program mediums 116 include, for example, CD-ROMS, PC Card devices, RAM devices, floppy disk, magnetic tape.

### I. Definitions

1. Code Point: A code point is a bit pattern in a particular encoding. Usually the bit pattern is one or more bytes long. A Unicode code point is always 16 bits or two bytes.
2. Encoding: An encoding is a one-to-one mapping between a set of characters and a set of code points. For example, the ASCII encoding maps a set including a-z, A-Z, and 0-9 to the code points x00 through x7F.
3. Text Element: A text element is a sequence of one or more code points that are treated as a unit for a particular operation. For example, LATIN CAPITAL LETTER U followed by NON-SPACING DIAERESIS is a text element (e.g., two adjacent characters in this example) for the code conversion operation in accordance with the invention.
4. Glyphs: A displayed form that provides the visual representation of a character. For example an italic "*a*" and a roman "a" are two different glyphs representing the same underlying character.
5. Presentation Form: A presentation form is a glyph that varies its visual form depending on the context. Some encodings map only abstract characters, which are independent of context, while other encodings map only presentation forms. For example, a ligature such as "fi" is a presentation form for the character sequence LATIN CAPITAL LETTER F followed by LATIN CAPITAL LETTER I.
6. Fallback: A fallback is a sequence of one or more code points in the target encoding that are not exactly equivalent to the source code points but which preserve some of the information of the original. For example, (C) is a possible fallback for ©.
7. Default: A default is a sequence of one or more code points in the target encoding that are used when nothing in the target encoding even resembles the source code points.

### II. Unicode Converter

The general conversion technique according to the invention converts source characters to target characters of a different encoding. Preferably, either the source characters or the target characters are Unicode characters.

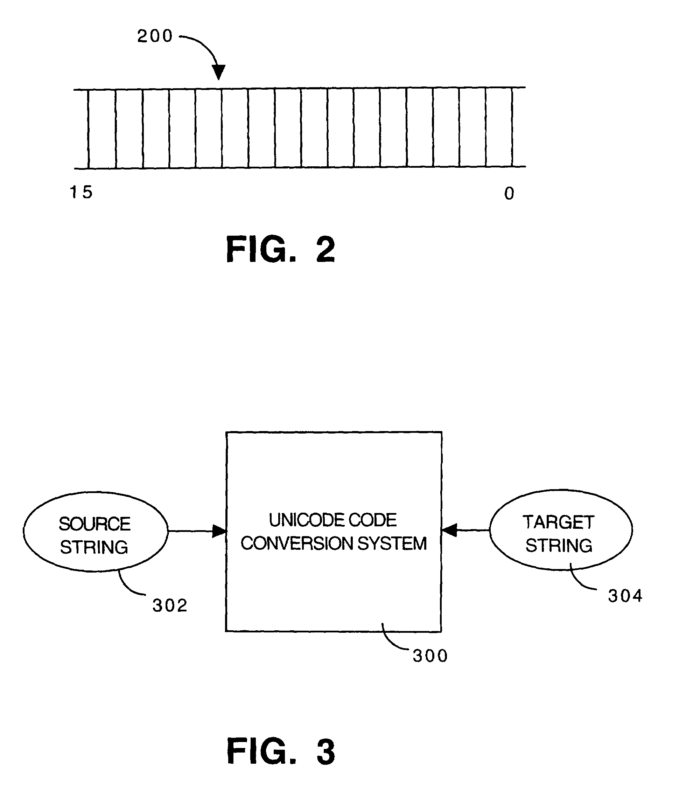

The Unicode standard is a compilation of character encodings developed into a single, universal, international character encoding standard. FIG. 2 illustrates the format of the Unicode character encodings. Specifically, the Unicode standard provides for codes which are 16 bits wide as illustrated by a format 200 shown in FIG. 2. Within this document, Unicode characters are represented in hexadecimal with a preceding u (e.g., u0041), and characters in other encodings are represented in hexadecimal with a preceding x (e.g., x41 for a 1-byte character, x8140 for a 2-byte character).

FIG. 3 illustrates a block diagram of a basic Unicode code conversion system 300 according to the invention which receives a source string 302 and outputs a target string 304. The Unicode code conversion system 300 operates to convert characters of the source string 302 into one or more characters in the target stream which are of a different character encoding than the encoding utilized in the source string. Preferably, the Unicode code conversion system 300 converts from Unicode to a different target encoding (From-Unicode) or converts from a different source encoding (To-Unicode).

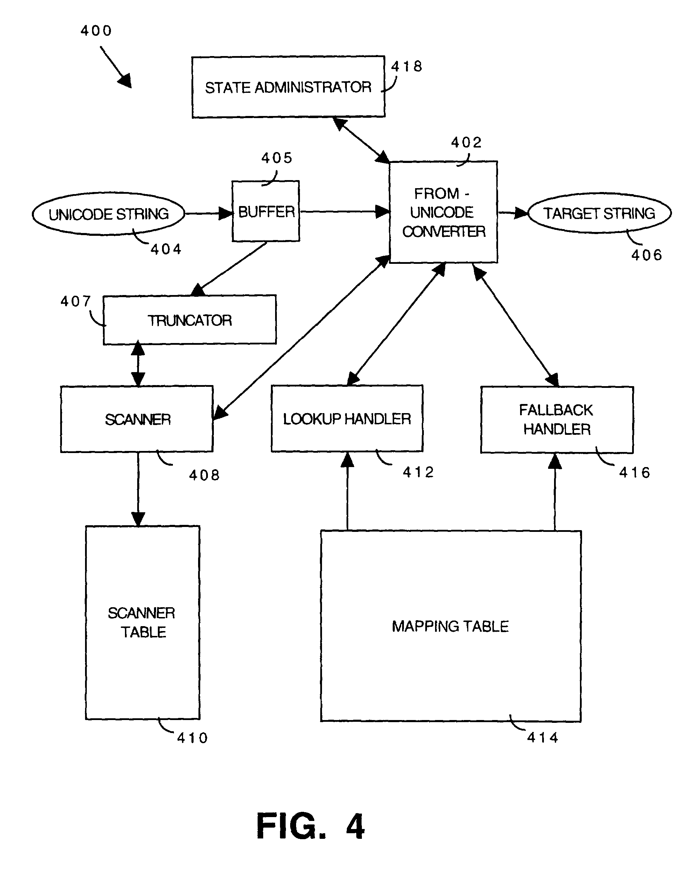

FIG. 4 illustrates a block diagram of an embodiment of a Unicode code conversion system 400 according to the invention. The truncator 407 and the buffer 405 are present in and apply to the fourth aspect of the invention, but are not necessarily present for and do not necessarily apply to the first, second or third aspects.

With respect to the first, second and third aspects of the invention, a Unicode code conversion system 400 includes a From-Unicode converter 402 which receives a Unicode string 404 and produces a target string 406. The From-Unicode converter 402 performs the code conversion process in accordance with the invention. In so doing, the From-Unicode converter 402 interacts with a scanner 408. The scanner 408 in conjunction with a scanner table 410 scans the Unicode string 404 to identify a text element. The From-Unicode converter 402 then uses a lookup handler 412 to look up the one or more characters in target encoding for the text element identified by the scanner 408. The lookup handler 412 uses a mapping table 414 to obtain the one or more characters in the target encoding for the text element.
Additionally, the From-Unicode converter 402 may also use a fallback handler 416. The fallback handler 416 operates together with the mapping table 414 to identify one or more characters in the target encoding that are able to be used as a fallback mapping for the text element in cases where the look-up handler 412 has been unable to identify one or more characters in the target encoding for the text element. A state administrator 418 maintains or stores information on the current state of the conversion. This information may, for example, include context, direction and state of symmetric swapping.

With respect to the fourth aspect of the invention, a Unicode code conversion system 400 includes a From-Unicode converter 402 which receives a Unicode string 404 and produces a target string 406. The Unicode string is stored in a buffer 405. A truncator 407 is provided to truncate the length of the Unicode string 404 stored in the buffer 405 so that accurate conversion is ensured.

The From-Unicode converter 402 controls the overall operation code conversion. In so doing, the From-Unicode converter 402 interacts with a scanner 408. The scanner 408 in conjunction with a scanner table 410 scans the truncated Unicode string 404 (supplied by the truncator 407) to identify a text element. The From-Unicode converter 402 then uses a lookup handler 412 to look up the one or more characters in target encoding for the text element identified by the scanner 408. The lookup handler 412 uses a mapping table 414 to obtain the one or more characters in the target encoding for the text element. Additionally, the From-Unicode converter 402 may also use a fallback handler 416. The fallback handler 416 operates together with the mapping table 414 to identify one or more characters in the target encoding that are able to be used as a fallback mapping for the text element in cases where the look-up handler 412 has been unable to identify one or more characters in the target encoding for the text element. A state administrator 418 maintains or stores information on the current state of the conversion. This information may, for example, include context, direction and state of symmetric swapping. Such information is needed for non-block delimited conversion in which the truncated Unicode string does not end at the end of a block. In such a case, by storing information on the current state of the conversion, the code conversion process provides correct code conversions even when the input string 404 is larger than the size of the buffer 405.

### A. Scanner and Scanner Table

The scanner 408 in conjunction with the scanner table 410 scans the Unicode string 404 string and returns the next text element and any additional information needed by the look-up handler 412. The additional information includes one or more of direction information, context information, and various state indicators. The general operation of the scanner 408 is as follows. The scanner 408 scans through the characters of the input Unicode string 404. If direction information is needed for the target encoding, then the character direction is obtained for each character in the text element. Also, if character context information is needed for the target encoding, then character context information is obtained for each character in the text element. Then, as the scanner 408 scans through each of the characters, the scanner 408 takes an action for the character in accordance with information residing in the scanner table 410. The particular action that the scanner 408 takes is determined based on state and character class. The actions that the scanner 408 can take include: marking the current character, setting or clearing the symmetric swapping bit, noting the contextual form of a text element, setting a flag that indicates that the text element will need reordering, and indicating end of the text element. The symmetric swapping bit, the context and the direction are saved by the state administrator 418 as information pertaining to the state of the scanner. Before returning, the scanner 408 saves context information for the text element. The scanner 408 returns the text element (each text element within the input string) and its attributes. The attributes include the following: direction, class, priority, symmetric swapping state, subset and context. After the scanner 408 determines a text element, then the characters may need to be reordered into canonical order. As an example, reordering of the characters within a text element is done when the text element includes non-spacing marks that are not in canonical order as defined by Unicode.

Preferably, the scanner 408 together with the scanner table 410 are implemented as a pair of state machines that operate in parallel. A first state machine resolves the character direction, and a second state machine computes text elements and character form context information where applicable and also maintains the symmetric swapping state. By using two separate state machines, the Unicode code conversion system 400 is easier to design and maintain. The first and second state machines can be implemented as two-dimensional arrays (or tables) indexed by state and class. In cases where the action the scanner 408 is to take depends on the character direction, then the state machine entry is an index into another table which contains the appropriate action for the scanner 408 to take for each direction.

The function of the scanner 408 is to convert the input Unicode string 404 into text elements and to return the text elements and their attributes. The scanner 408 needs to save certain characteristics of the text element so that it can be properly converted in the target encoding. Namely, the characteristics include the direction, the context and the symmetric swapping state.
However, the scanner 408 need not know what the target encoding is because its operation is independent of the particular target encoding. Nevertheless, the Unicode conversion system 400 is preferably implemented such that the definition of a text element (i.e., the chunking behavior) could vary with the target encoding simply by modifying the scanner table 410.

The directionality of characters is used for presentation of the characters. For example, when Arabic or Hebrew are displayed on a display screen, they are ordered from right-to-left. Most Unicode characters have an implicit direction, see Unicode Version 1.0, at p. 407 (Section 4.6) and p. 611 (Appendix A). The implicit direction classes provided with the Unicode standard and their values include: Left-Right (0), Right-Left (1), European Number (2), European Number Separator (3), European Number Terminator (4), Arabic Number (5), Common Number Separator (6), Block Separator (7), Segment Separator (8), Whitespace (9), and Other Neutrals (10). The scanner 408 looks up the direction class for characters of the text element. The direction class is then used to resolve the direction of the text element. There are also special Unicode characters which cause overriding or embedding of directionality. These special direction Unicode characters are treated by the scanner 408 as single character text elements.

There are some basic rules that the scanner 408 follows in forming the text elements. The base rule is that if none of the rules apply, then the text element is a single Unicode character. Another rule is that non-spacing or combining marks following a base character are grouped with the base character as a single text element. Yet another rule is that characters associated with symbols (e.g., Korean Hangul Jamos characters), ligatures or ideographs are encountered, they are combined into text elements. Still another rule is that when a fraction slash is surrounded on each side by a sequence of one or more decimal digits, they are combined as a numeric fraction text element.

The rule for non-spacing or combining marks is now explained in greater detail. According to the Unicode standard, non-spacing marks follow the base character. Hence, the non-spacing marks that follow a base character become part of the text element that includes the base character. See, The Unicode Standard, Version 1.0, at p. 403 (Section 4.5). For example, when a single, non-spacing character is followed by a character that is not a non-spacing character, then the non-spacing character is combined with the previous character as a text element. The length of the text element is then two and the attributes for the text element are defined by the base character.
If there is no preceding character, the non-spacing character is just passed on as a single text element. Multiple non-spacing characters can also be combined in this manner.

The rule for Korean Hangul Jamos characters is now explained in greater detail. Each Hangul character has an implicit value which is of one of the classes: Choseong (initial), Jungseong (medial) or Jongseong (final). The Unicode Standard, Version 1.1, (Section 5), lists the codes and the permitted combinations for these characters. The scanner 408 will group the Korean Jamos characters according to the permitted combinations of these characters. For input combinations which are not permitted, the scanner 408 will return the character as a single text element. As before, when a Hangul syllable is followed by a combining mark, the combining mark is included within the text element for the Hangul syllable.

The rule for numeric fractions is now explained in greater detail. The scanner 408 initially treats each character of fraction slash numbers as if they were single character text elements. However, when a complete fraction slash sequence is encountered, the scanner 408 will join the characters associated with the sequence into a single text element. If a digit is encountered with a combining mark, the digit and the combining mark cannot be part of a fraction slash, but the digit and the combining mark can together form a text element.

Except for non-spacing characters, all Arabic characters are passed through the scanner 408 as single text elements. The Arabic form shaping state characters are also passed through the scanner as single text elements. The directional formatting codes are passed through the scanner 408 as single text elements.

### B. Lookup Handler, Mapping Tables and Fallback Handler

The mapping table 414 is used by the lookup handler 412 to match an input sequence of one or more Unicode characters to an output sequence of one or more characters in the target encoding. In addition to the Unicode sequence (i.e., text element) itself, certain additional pieces of information about the input sequence are available (e.g., direction, context, symmetric swapping state, vertical forms request, fallback request, tolerance, variant), and some tables make use of this information. Preferably, the mapping table 414 also stores data needed by the fallback handler 416, though a separate table could be provided for use by the fallback handler 416.

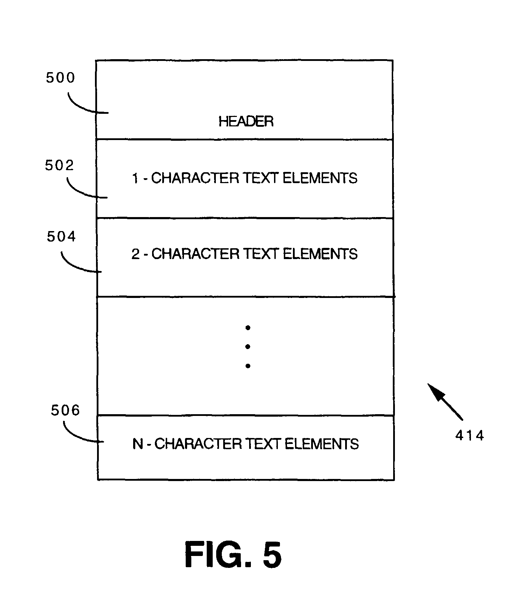

FIG. 5 is a schematic diagram of a preferred arrangement for the mapping table 414 of the Unicode code conversion system 400. The mapping table 414 preferably includes a header portion 500 and then segments of data within the mapping table 414 partitioned based on the number of characters in the text element. The contents of the header portion 500 is discussed in detail below. The mapping table 414 illustrated in FIG. 5 supports encodings for text elements of one to N characters. When the look-up handler 412 searches the mapping table 414 for target encodings for one-character text elements, the segment 502 of the mapping table 414 would be utilized. Similarly, if the text element is two-characters wide, then segment 504 would be used, and if the text element was N characters wide, then segment 506 would be used. Although FIGS. 4 and 5 illustrate a single mapping table 414, the Unicode code conversion system 400 uses a plurality of different mapping tables 414, namely one mapping table for each target character set. Each mapping table includes multiple subtables.

The mapping tables 414 are designed with size and overall conversion speed requirements kept in mind. The mapping tables 414 should be as small as possible without severely degrading lookup time, and the lookup time should be as fast as possible without significantly increasing the table size. The Unicode code conversion system 400 supports multiple table formats so that different formats are possible for each subtable, thereby enabling the speed/size tradeoff to be adjusted for a particular table as needed. Preferably, the design of the mapping table 414 should make the mapping from a single Unicode character to a single character in the target encoding as fast as possible since it is the most common case.

The mapping table 414 design is such that the tables support at least some of the needs of the fallback handler 416, support multiple mapping tolerances, support multiple target character set variants. The table format is also capable of mapping Unicode sequences of one or more characters to an output sequence of zero or more characters. The mapping tables 414 can also specify several possible output sequences for a single input sequence, with the particular output sequence determined by attributes such as direction, context and symmetric swapping state. Relative to the third aspect of the invention, the focus is the selection of a particular one of the output sequences based on the context. The mapping tables are also easily extended, so as to facilitate customization of the encoding behavior of the Unicode code conversion system 400.

The information needed by the mapping tables 414 includes the following: the text element from the scanner 408 (i.e., input sequence of characters to convert ,with any combining marks in canonical order); whether vertical forms should be used instead of horizontal forms where available; the resolved direction of the text element; the character form context information for the text element (initial, medial, final, or isolated); current state of symmetric swapping (activated or inhibited); information about what level of lookup to be invoked (tolerance level (strict or loose) and fallbacks (on or off)); and an identifier for a particular encoding variant (a variant identifier). The information about the lookup level is provided by a call or an application program which calls the Unicode code conversion system 400. In a language or character set in which direction and context are unimportant, the resolved direction and the context information are not needed.

The definition of variants, the actual mappings from Unicode sequences to target sequences, and the table formats used to access them are alterable by the design of the mapping table 414. Hence, the accuracy and to some extent the performance/size tradeoffs are highly dependent the design of the mapping tables 414. It is preferable that the mapping tables 414 support strict and loose mappings, fallback mappings, and default mappings.

Strict mappings are code conversions in which round trip fidelity is guaranteed. Strict mappings from Unicode to a target character set are the converse of the to Unicode mappings from that character set to Unicode. Loose mappings from Unicode to the target character set are additional mappings that fall within the range of definition or established usage for the characters in the target character set. Loose mappings appear properly mapped but have some ambiguity. For example, in many character sets, a single character may have multiple semantics, either by explicit definition, ambiguous definition, or established usage. For example, the Shift-JIS character x8161 is specified to have two meanings: "double vertical line" and "parallel". Each of these meanings corresponds to a different Unicode character: u2016 "DOUBLE VERTICAL LINE" and u2225 "PARALLEL TO". When mapping from Shift-JIS to Unicode, the code conversion system must choose one of these Unicode characters, say DOUBLE VERTICAL LINE. When mapping from Unicode to Shift-JIS, the code conversion system can - and normally should - map both Unicode characters to the same Shift-JIS character. However, only one of these From-Unicode mappings is the converse of the To-Unicode mapping.

Strict verses Loose Mapping Examples:
- If Unicode u000D is strictly mapped to ASCII x0D "carriage return", then Unicode u2029 "PARAGRAPH SEPARATOR" can be loosely mapped to ASCII x0D.
- If Unicode u002D "HYPHEN-MINUS" is strictly mapped to ASCII x2D "hyphen-minus", then Unicodes u2010 "HYPHEN" and u2212 "MINUS SIGN" can be loosely mapped to ASCII x2D.
- If Unicode u00EO "LATIN SMALL LETTER A WITH GRAVE" is strictly mapped to ISO 8859-1 xEO "small letter a with grave accent", then the two-character Unicode sequence u0061+u0300 "LATIN SMALL LETTER A" + "COMBINING GRAVE ACCENT" can be loosely mapped to ISO 8859-1 xEO.
- Since Shift-JIS distinguishes halfwidth and fullwidth characters, loose mappings for Shift-JIS must also keep these distinct. Say Unicode uFF40 "FULLWIDTH GRAVE ACCENT" is strictly mapped to Shift-JIS x814D "grave accent [fullwidth]", which is distinct from Shift-JIS x60, "grave accent [halfwidth]". The Unicode sequence u3000+u0300 "IDEOGRAPHIC SPACE" + "COMBINING GRAVE ACCENT" can be loosely mapped to Shift-JIS x814D. However, the Unicode sequence u0020+u0300 "SPACE" + "COMBINING GRAVE ACCENT" should not be loosely mapped to Shift-JIS x814D; instead, it should be loosely mapped to Shift-JIS x60.

With respect to the first aspect of the invention, round-trip mapping from Unicode to some other character set and back again is possible when using only Unicode characters for which strict mappings to the other character set exist.

Further with respect to the first through fourth aspects of the invention, fallback mappings are mappings from Unicode that do not preserve the meaning or identity of the Unicode character. That is, they map a Unicode character (or sequence of characters) to a character (or sequence) in the target set whose definition or usage does not include the meaning or usage of the Unicode character. Nevertheless, the fallback mapping, when available, provides a character (or sequence) in the target encoding that corresponds closest to the Unicode character (or sequence of characters).

Fallback Mapping Examples:
- The Unicode character u0300 "COMBINING GRAVE ACCENT" can be mapped to ASCII x60 "grave accent [spacing]" as a fallback mapping. The difference is that the Unicode character is a combining mark (non-spacing), whereas the ASCII character is a spacing mark.
- The Unicode character u01C0 "LATIN LETTER DENTAL CLICK" could be mapped to ASCII x7C "vertical line" as a fallback mapping.
- The Unicode character u2001 "EM QUAD" could be mapped to ASCII x20 "space" as a fallback mapping.

Hence, as illustrated in the above examples, fallback mappings are used to generate a target character (or sequence) that is a graphic approximation of the Unicode character (or sequence).

For performance reasons (i.e., the speed with which the encoding can be obtained from the mapping table), there are several possible formats for indexing into the mapping table 414. The possible formats may include a segment format, a list format, a range format, or a chain format. Separate indexes are preferably provided for different length character sequences. As a result, the index associated with each of the segments 502, 504, 506 can be in a different format, and information at the beginning of each index specifies its format. Regardless of format, each index ultimately maps an input sequence either directly to an output sequence, or if the output sequence is long, to an offset that specifies the location of the corresponding output sequence.

The chain format for indexing into the mapping table 414 warrants further discussion. With the chain format, the beginning of the section is checked to determine whether it is a chain header for a chain format table or some other format. The chain format specifies a chain of multiple index tables, each possibly in a different format. If the desired mapping was not found in the first index table, the lookup handler 412 will then check the second, and so on. The chain format is useful, for example, when one index format (which is efficient in space and/or time) can map most but not all of the input sequences, while another less efficient index format can handle the few remaining sequences. Without a chain mechanism, the less-efficient format would have to be used for all of the index sequences. The chain format is also useful when different variants and different tolerance levels require different subtables. Each subtable in the chain has bit flags that can cause it to be excluded or included based on the mapping tolerance and variant currently being handled. With respect to the second, third and fourth aspects of the invention, when the lookup handler 412 searches the mapping table 414 for target encodings only the included subtables are considered.

Further with respect to the first through fourth aspects of the invention, these bit flags associated with each subtable, form a subtable mask. Also, the caller requests (e.g., encoding variant and tolerance) and determined attributes (e.g., resolved direction and context) form a selection mask. The bit assignment within the subtable mask and the selection mask are identical. Hence, the determination of whether or not to include a particular subtable is implemented as a bitwise AND of the subtable mask with the selection mask, and then a comparison of the result with the subtable mask. If the result of the bitwise AND is the same as the subtable mask for the subtable, the subtable is included; otherwise, it is not included.

The header 500 of the mapping table 414 preferably contains:
- General identifying information - format, length, checksum, and version.
- The minimum target character size (in bytes) (also referred to as charsize).
- General flags (for example, whether this lookup table requires direction or context data).
- The maximum input sequence length handled by this table, and a list of offset/length pairs specifying the tables that handle input sequence lengths from one through this maximum.
- The default fallback character or character sequence for this From-Unicode mapping.
- A count and list of variants supported by this table. For each variant, one or more associated bit masks are specified. When there are multiple bit masks for a single variant, attribute information (such as direction, context, and vertical forms request) is used to determine which bit mask is used. Bits set to "1" in a bit mask are used to turn on various subtables to support the different variants.
- An additional set of bit masks associated with each of the four possible tolerance settings (strict/loose, fallbacks on/off). The appropriate tolerance level mask is ORed with the variant mask to form the bit mask used to enable or disable subtables.

### C. Code Conversion Processing

The processing performed by a preferred embodiment of the Unicode code conversion system 400 is explained in detail below.

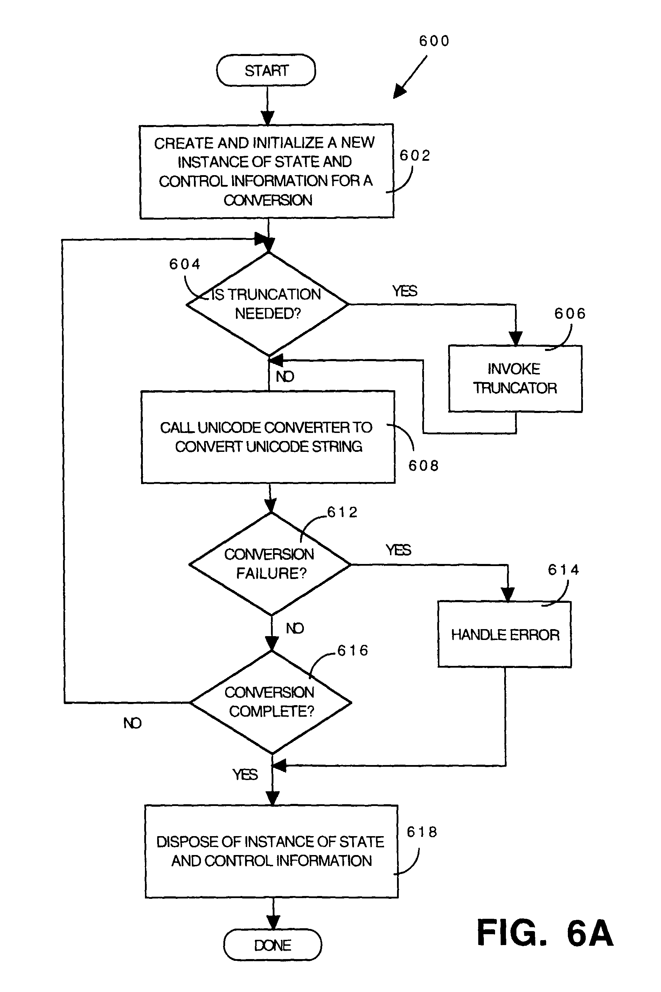

FIG. 6A is a flow chart of processing 600 performed an application (i.e., calling application process or program) making use of the Unicode code conversion system 400. In particular, FIG. 6A concerns From-Unicode processing, but it should be recognized that analogous operations would be performed to convert in the other direction (To-Unicode processing). The From-Unicode converter 402 controls the overall conversion process.

Initially, the processing 600 creates and initializes 602 a new instance of state and control information for a conversion. Because the processing 600 establishes instances, multiple scanning operations can be ongoing and distinguishable by their instance. Next, a decision 604 is made based on whether truncation is needed. In the case where truncation is needed, the truncator 407 is invoked 606. Truncation is used when the input data stream exceeds the capacity of the receiving buffer 405 which holds the data for conversion. In a case where truncation is not needed or following block 606 in the case where truncation is needed, the From-Unicode converter 402 is called 608 to convert the Unicode string 404. The From-Unicode converter 402 function operates to obtain the text element and lookup the target mapping therefor as is discussed in detail below. Once the conversion function returns, the processing 600 receives the target string 406 from the From-Unicode converter 402.

The processing 600 then determines 612 whether there has been a conversion failure. If there has been a conversion failure, then the error is handled 614. On the other hand, if the conversion was successful, then a decision 616 is made based on whether the conversion is complete. The conversion is complete when the characters of the Unicode string 404 have been converted to target encodings. If the conversion is complete, then the processing 600 is complete and the target string 406 is made available to process or application which requested the code conversion. In addition, the processing 600 disposes 618 of the instance of state and control information for a conversion. On the other hand, if decision 616 determines that the conversion is not yet complete, then the processing 600 repeats blocks 604-616 until the conversion is complete or an error results.

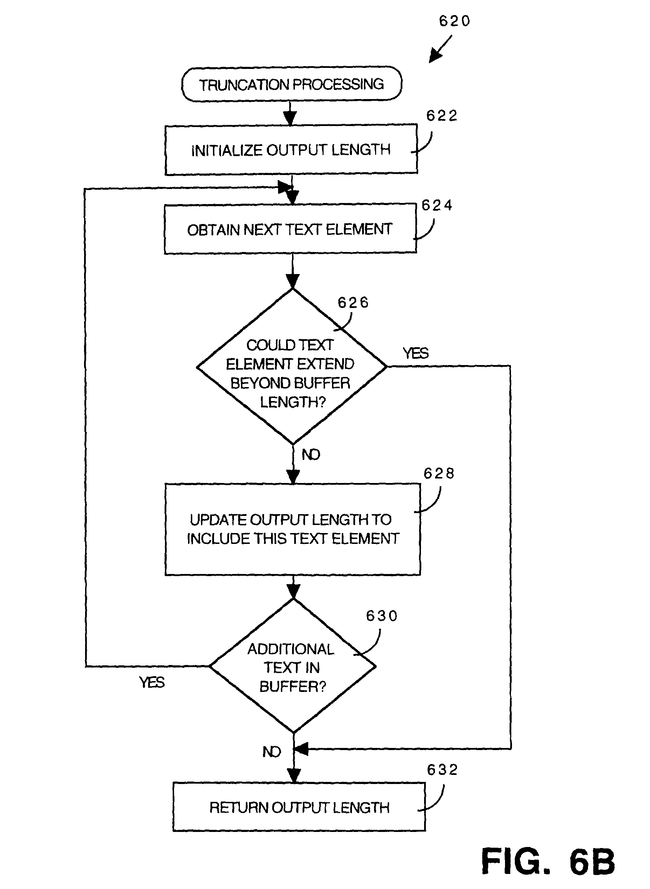

FIG. 6B is a flow chart of truncation processing 620 in accordance with the fourth aspect of the invention. The truncation processing 620 is invoked by block 606 in FIG. 6A and performed by the truncator 407.

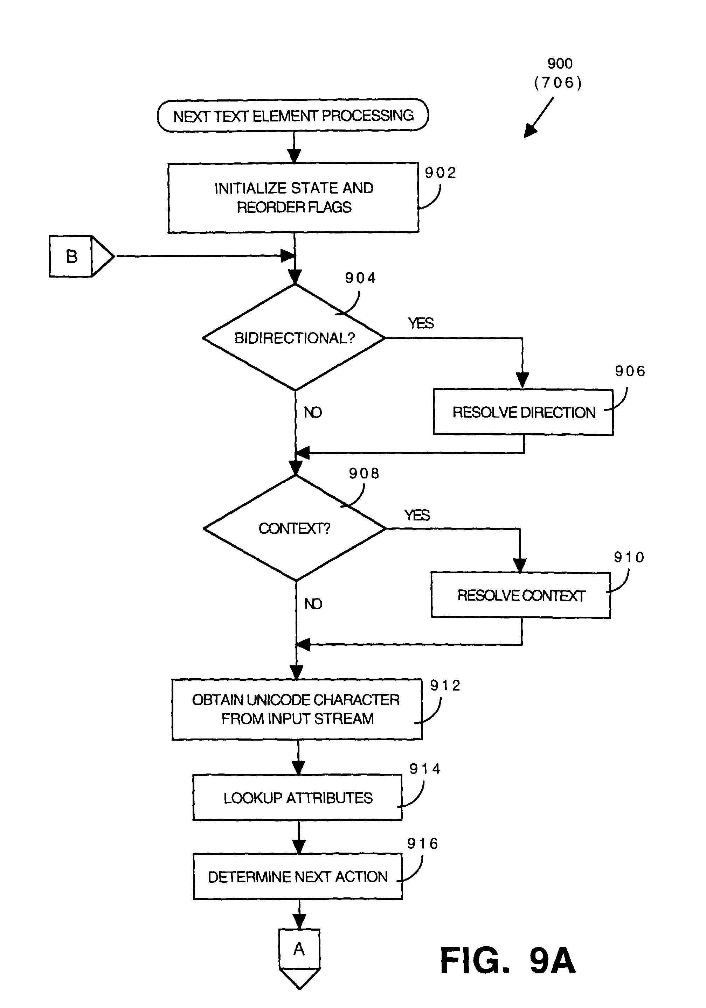

The truncation processing 620 initializes 622 an output length to zero (0). The output length corresponds to the effective length of the buffer, that is, the truncated length of the buffer. Next, the next text element is obtained 624. The processing associated with obtaining 624 the next text element is performed by the scanner 408 and is described in detail below with reference to FIGS. 9A-9C. A decision 626 is then made based on whether the text element could extend beyond the physical length of the buffer (buffer length). If the text element could not possibly extend beyond the buffer length, then the output length is updated 628 to include this text element. Here, the effective length is grown text element-by-text element so long as the text element cannot possibly extend beyond the buffer length. Following block 628, a decision 630 is made based on whether additional text remains to be considered in the buffer. When there is additional text in the buffer to be considered, then processing loops back to block 624 to repeat the truncation processing 620. On the other hand, when there is no additional text in the buffer to be considered, or when block 626 determines that the text element could possibly extend beyond the buffer length, the output length is returned 632. The output length returned 632 is the effective (i.e., truncated) length of the buffer so that the buffer effectively ends at the end of a text element (namely, the last text element for the text within the buffer).

Thus, the truncation processing determines the effective (i.e., truncated) length of the buffer. This is also referred to as a truncated portion of the buffer. The extra text remaining in the buffer after truncation is referred to as a remaining portion. The remaining portion is carried over to and considered with a next buffer portion of the input source string. This processing ensures that text elements will be correctly determined.

An example of usage of the truncation processing is as follows:
Example: "...ABCD`EFG..."
If the portion held in the buffer ends just after "D", then the truncation processing will truncate the portion held in the buffer such that the truncated length ends after "C". It is necessary to truncate the portion in the buffer because failure to do so causes the text element "D" to be disconnected from its combining mark "`"which follows. When disconnected, the text will not be properly converted to the target encoding. The remaining portion is then "D`" and is carried over into the next portion, i.e., "D'EFG ...".

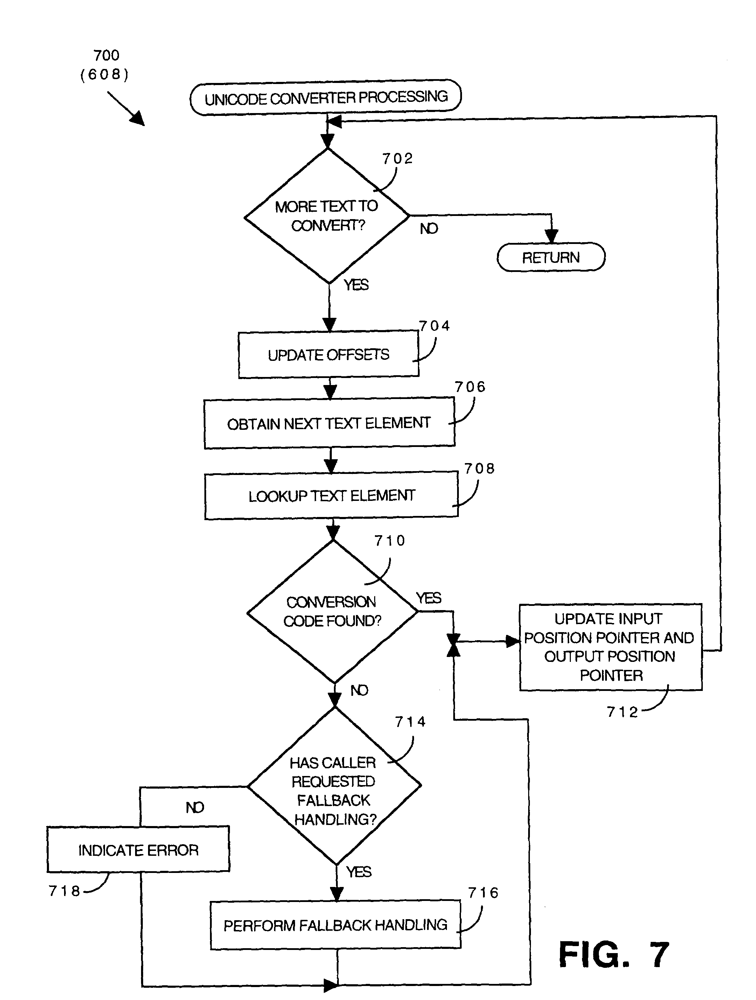

FIG. 7 is a flow chart of Unicode converter processing 700. The Unicode converter processing 700 is associated with the operations performed by block 608 in FIG. 6A.

The Unicode converter processing 700 begins with a decision 702. The decision 702 determines whether there is text to be converted. If there is no text to be converted, the Unicode converter processing 700 simply returns (or completes). On the other hand, if there is text to be converted (i.e., the Unicode string 404 has not been completely processed), then processing 700 proceeds. First, offsets are updated 704 for an offset array. The offset array is an array of offsets (pointers) associated with an input string that indicate where certain changes such as font changes, line breaks, language changes, etc., occur within the input string 404 that the calling application deems significant. The updating 704 of the offset array involves adjusting the offsets (pointers) for different length characters. For example, the Unicode characters of the input Unicode string 404 are two-bytes long, while the size of the characters associated with a target encoding of ASCII is one-byte long. Here, the updating 704 of the offset array would adjust the offsets so that they point to the corresponding character in the target encoding. In effect, the offsets in the input string are mapped to the output string which has a different encoding. The next text element is then obtained 706. The scanner 408 using the scanner table 410 determines the text elements from the Unicode string 404. The obtaining 706 of the next text element is discussed in detail below. The text element obtained 706 is then looked-up 708 in the mapping table 414 to obtain a conversion code for the text element in the target encoding. The lookup is performed by the lookup handler 412 in conjunction with the mapping table 414. The looking-up 708 of the conversion code is also discussed in detail below.

Next, a decision 710 is made based on whether a conversion code was found for the text element. When a conversion code is found, an input position pointer and an output position pointer for the Unicode string 404 and the target string 406 are, respectfully, updated 712. The input position pointer indicates how much of the input string 404 has been converted. The output position pointer indicates the length of the target string 406. Following block 712, processing 700 returns to the beginning of the Unicode converter processing 700 so that the next text element (if any) of the Unicode string 404 being converted may be processed.

However, in the case when decision 710 determines that no conversion code is found in the mapping table 414, then a decision 714 is made based on whether the caller (e.g. calling application) has requested fallback handling. If the caller has requested fallback handling, then fallback handling is performed 716. The fallback handling is performed by the fallback handler 416 and is discussed in detail below. On the other hand, if the caller has not requested fallback handling, then an error is indicated 718 because the text element could not be converted to the target encoding by the lookup handler 412. Following blocks 716 and 718, the input position pointer and the output position pointer for the Unicode string 404 and the target string 406 are, respectively, updated 702, and then processing returns to the beginning of the Unicode converter processing 700 so that the next text element (if any) of the Unicode string 404 being converted may be processed..

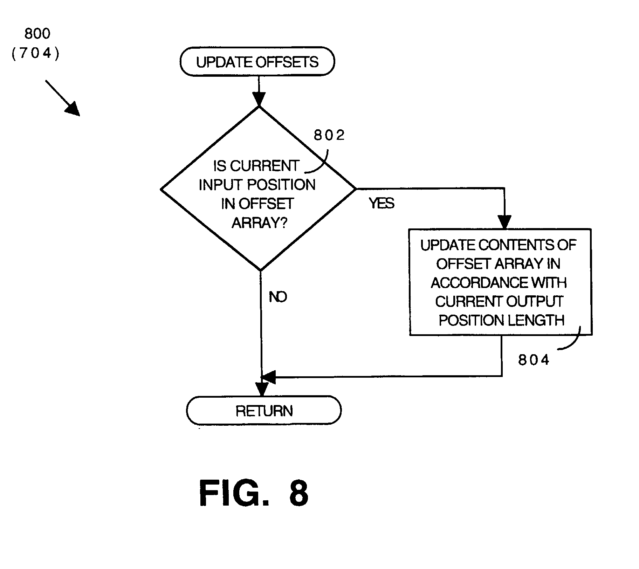

FIG. 8 is a flow chart of update offsets processing 800. The update offsets processing 800 is associated with the block 704 in FIG. 7 in which the offset array is updated.

The update offsets processing 800 begins with a decision 802 based on whether the current input position is in the offset array. If the current input position is in the offset array, then the contents of the offset array are updated 804 in accordance with the current output position length following block 804, the update offsets processing 800 returns. On the other hand, when the current input position is not within the offset array, then decision 802 simply causes the update offsets processing 800 to return because there is no offset to update.

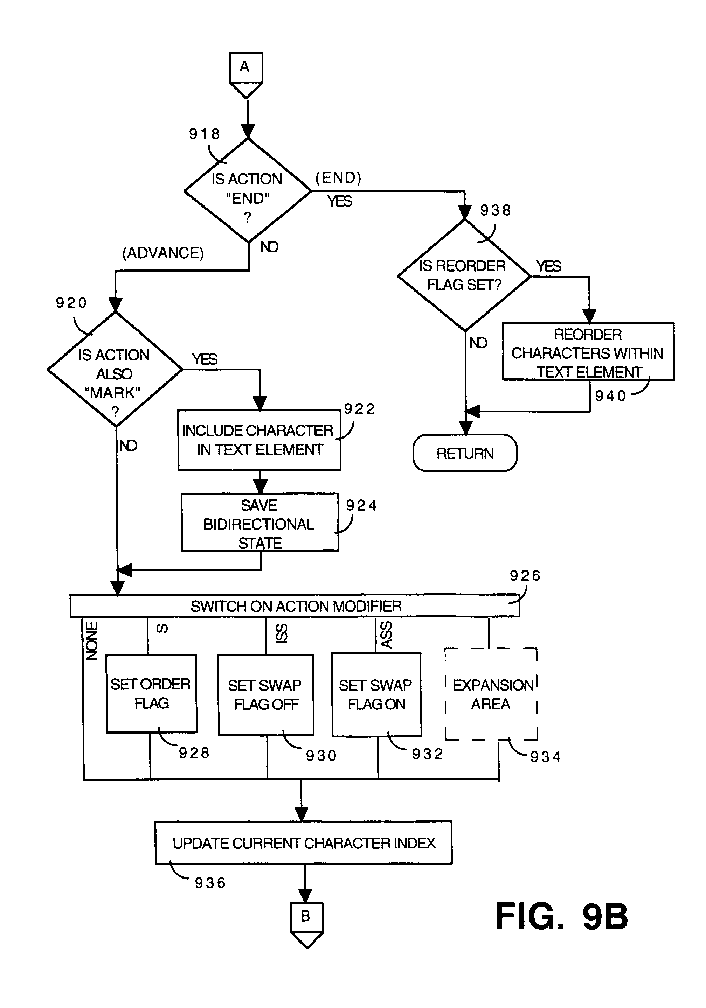

FIGS. 9A and 9B are flow charts of next text element processing 900 with respect to the first, second and fourth aspects of the invention. The next text element processing 900 details the operations performed by the block 706 in FIG. 7 in obtaining the next text element. Preferably, the next text element processing 900 is performed by the scanner 408 in conjunction with the scanner table 410.

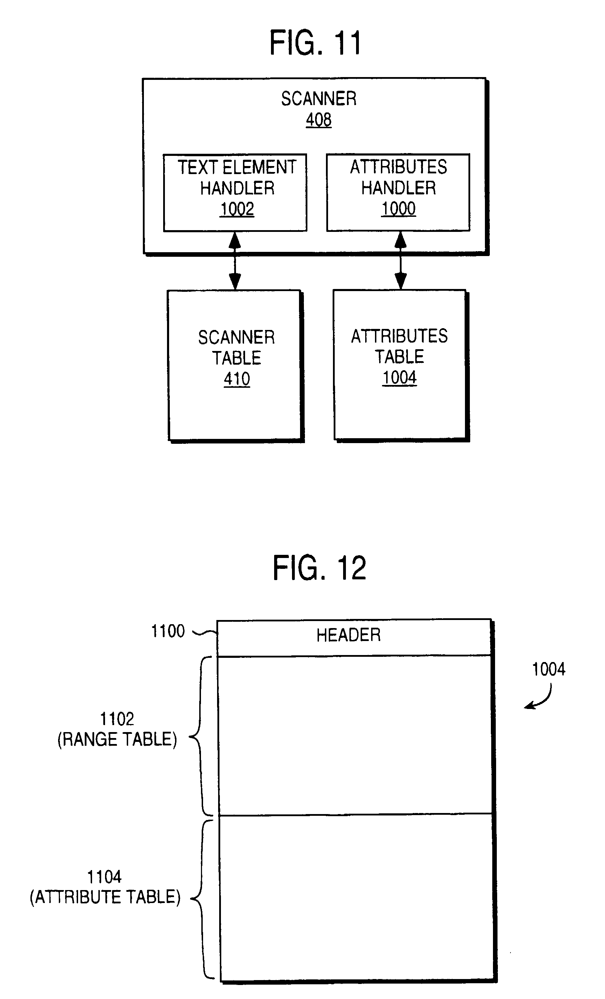

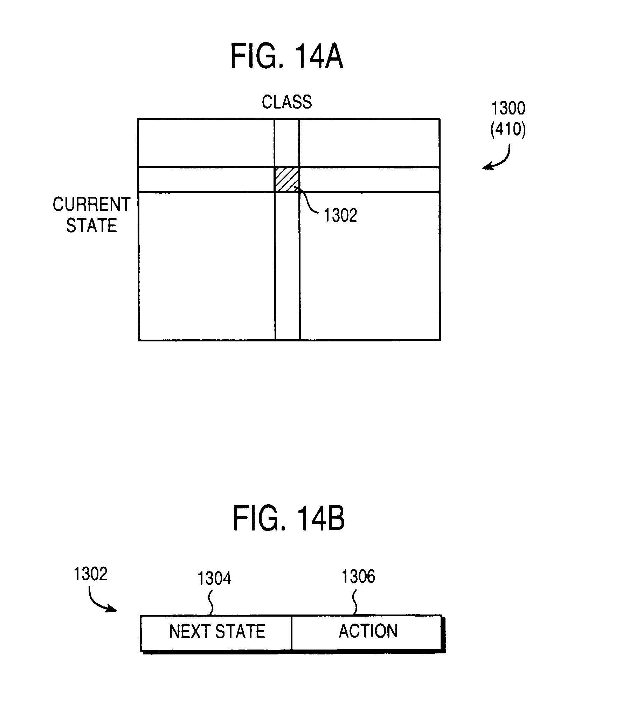

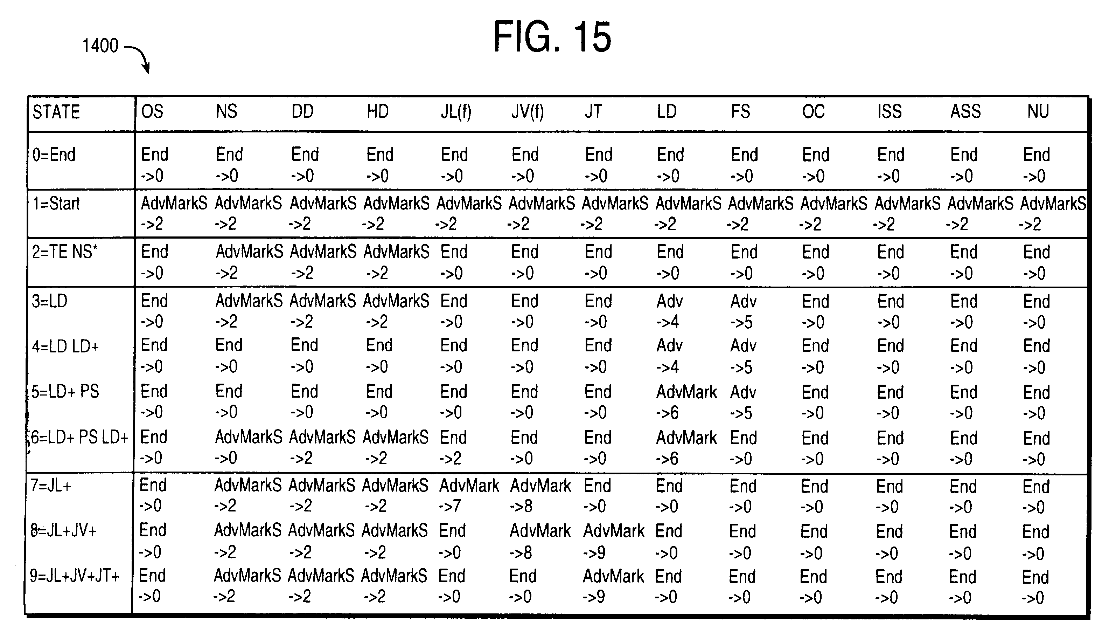

The next text element processing 900 begins by initializing 902 state and reorder flags. Next, a decision 904 is made based on whether the mapping table 414 needs direction information. If the mapping table 414 requires direction information, then the direction of the Unicode string 404 is resolved 906. In the second aspect of the invention, if the mapping table 414 requires direction information, then the direction of the next input character of the Unicode string 404 is resolved 906. After the direction is resolved 906 or after the decision 904 in the case where direction is not required, a decision 908 is made based on the context of the character. If the context of the characters within the Unicode string 404 can effect the code conversion (mapping), the context is resolved 910. Following block 910 or following decision 908 when context is not important, the Unicode character is obtained 912 from the Unicode string 404. Here, the next character in the Unicode string 404 is obtained. Next, the attributes for the Unicode character obtained are looked-up 914. The attributes looked-up 914 are discussed in detail below with reference to FIGS. 11 - 13. Then, the action for the next text element processing 900 is determined 916. The determination 916 of the action is explained in greater detail below with reference to FIGS. 14A, 14B and 15.

Next, a decision 918 is made based on whether the action is "END". If the action is not "END", then the action is at least an "ADVANCE". When the action is "ADVANCE", a decision 920 is then made based on whether the action is also "MARK". When the action is also "MARK", then the character is included 922 in the text element. Additionally, the bidirectional state is saved 924 when a "MARK" action is taken. The bidirectional state includes the directional embedding stack and the current state of the birdirectional state machine. Following block 924 or following decision block 920 when the action is not also "MARK", a switch operation 926 is performed based on an action modifier. The action modifier is a part of the action and includes modifiers such as "S", "ISS", "ASS". The action may also not have any action modifier. When the action modifier is "S", then a reorder flag is set 928. The reorder flag indicates (when set) that the characters within the text element may need to be reordered. When the action modifier is "ISS" (i.e., Inhibit Symmetric Swapping), then a swap flag is set off 930. When the action modifier is "ASS" (i.e., Activate Inhibit Swapping), the swap flag is set on 932. The swap flag indicates whether or not symmetric swapping is needed. The switch 926 can easily be adapted to include additional action modifiers using an expansion area 934. The expansion area 934 enables users to modify the behavior of the scanner 408. Also, if there is no action modifier, then the next text element processing 900 does not perform any operation associated with action modifiers. Following the action modifier operations, a current character index is updated 936. The current character index is a pointer into the source string used to scan through the source string when performing the next text element processing 900. The next text element processing 900 then repeats operations beginning at block 904. The processing loops through blocks 904-936 until the decision 918 determines that the action is "END". When the action is "END", decision 918 causes a decision block 938 to be performed. The decision block 938 determines whether the reorder flag is set. If the reorder flag is set (block 928), then characters within the text element are reordered 940. The reordering is preferably performed using the priority attribute which provides weighting values for different character classes. Following block 938 in the case where the reorder flag is not set or following block 940 in the case when the reorder flag is set, the next text element processing 900 is complete and returns to the Unicode converter processing 700.

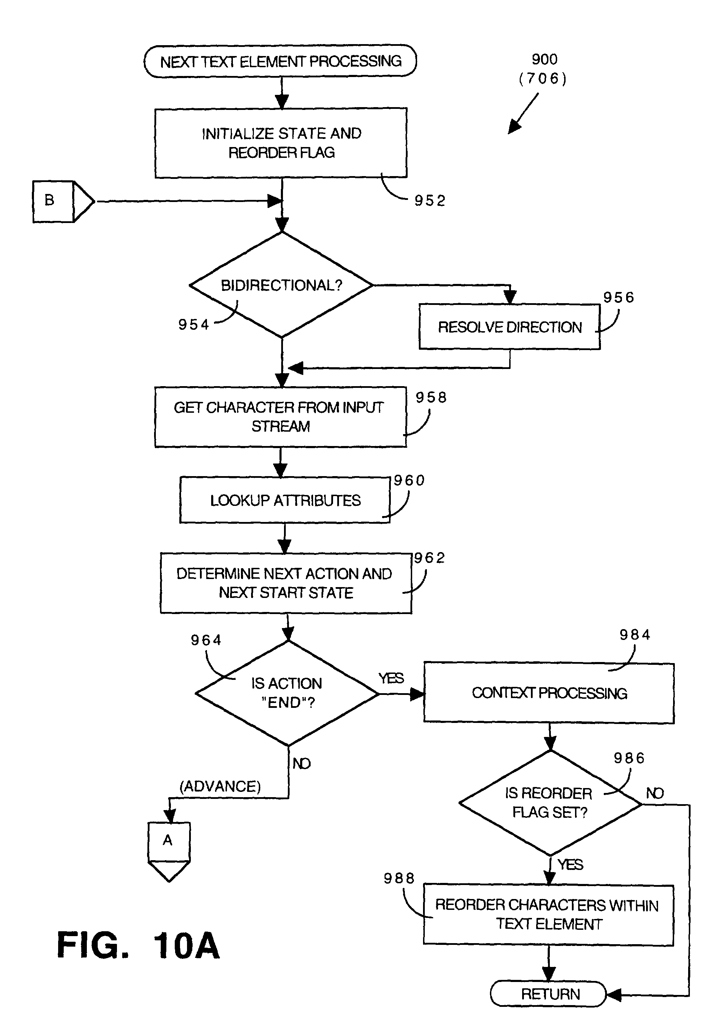

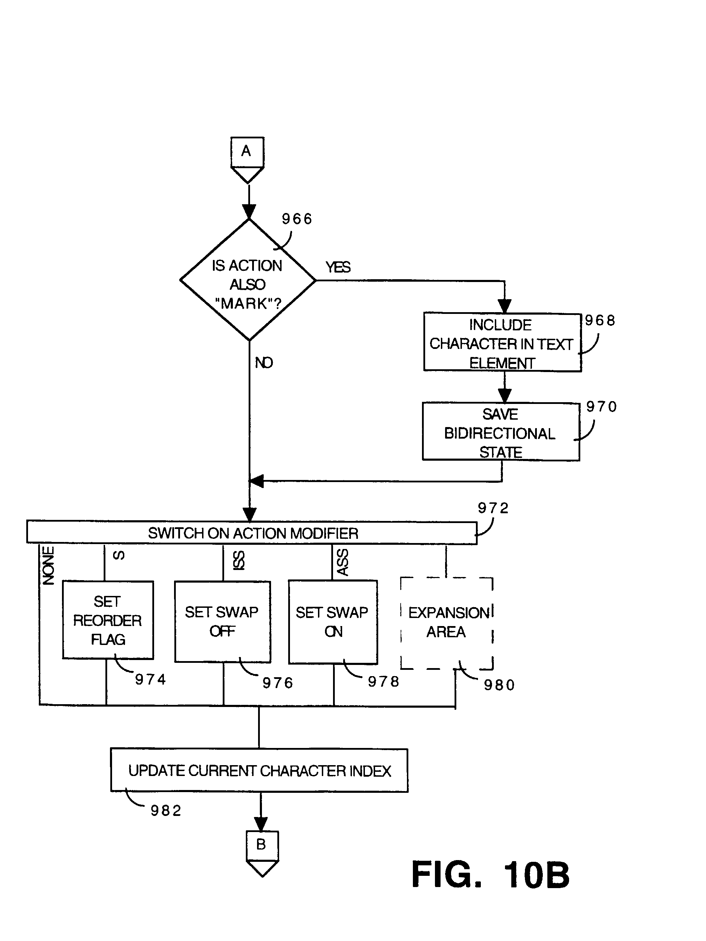

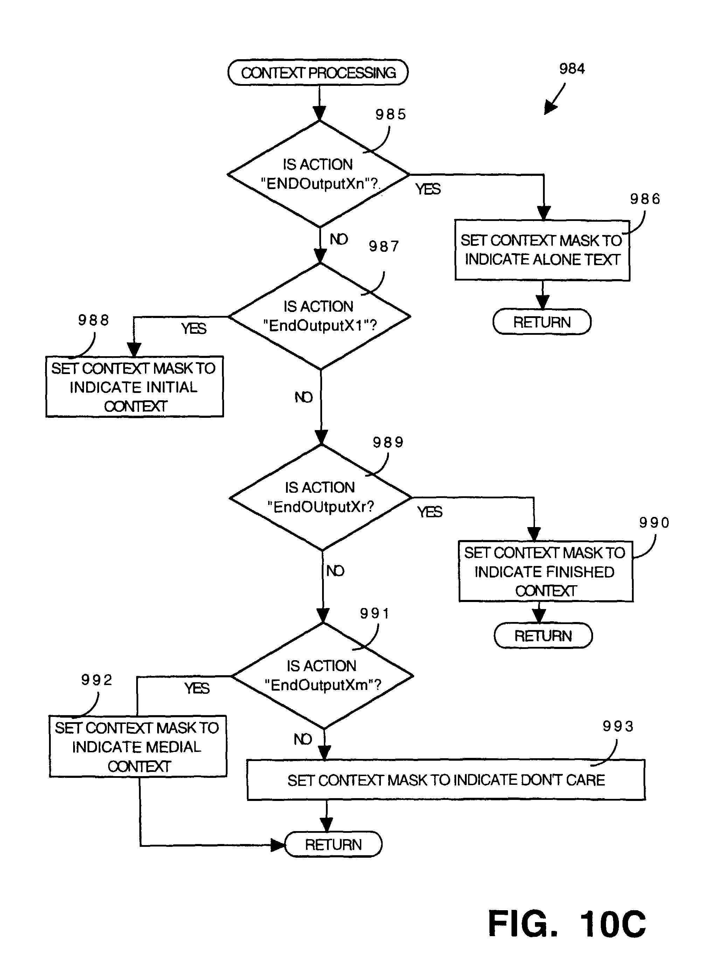

FIGS. 10A, 10B and 10C are flow charts of next text element processing 900 according to the third aspect of the invention. The next text element processing 900 details the operations performed by the block 706 in FIG. 7 in obtaining the next text element. Preferably, the next text element processing 900 is performed by the scanner 408 in conjunction with the scanner table 410.

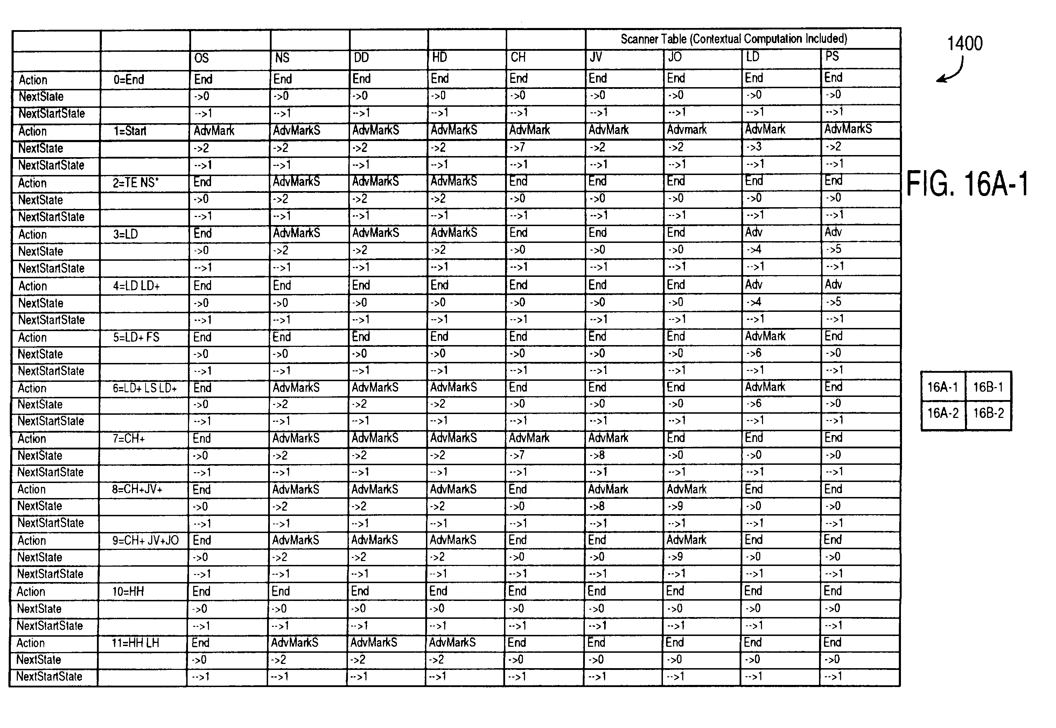

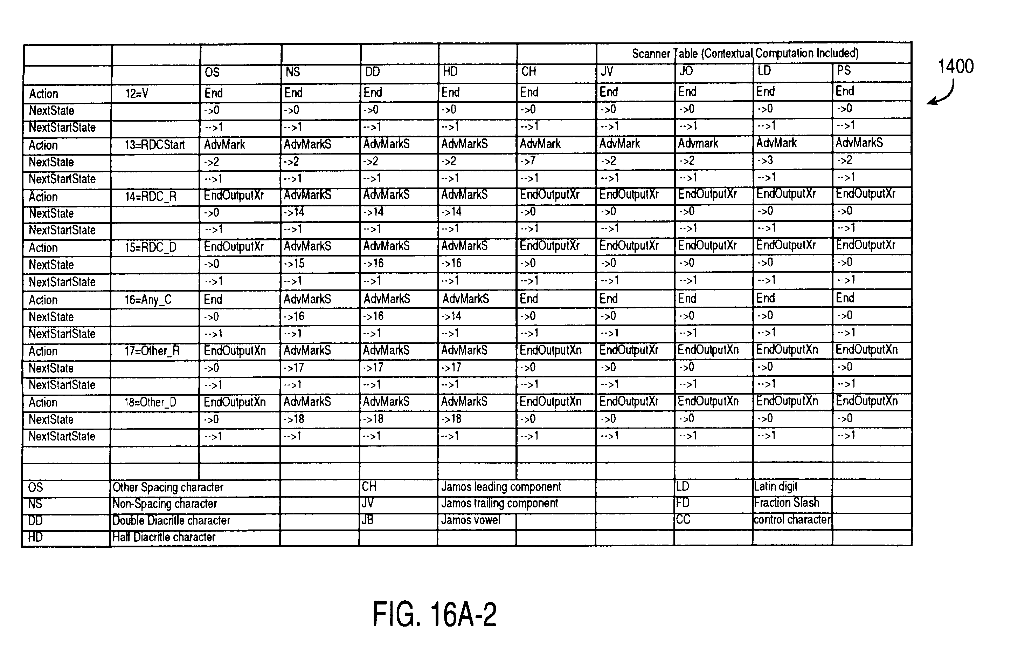

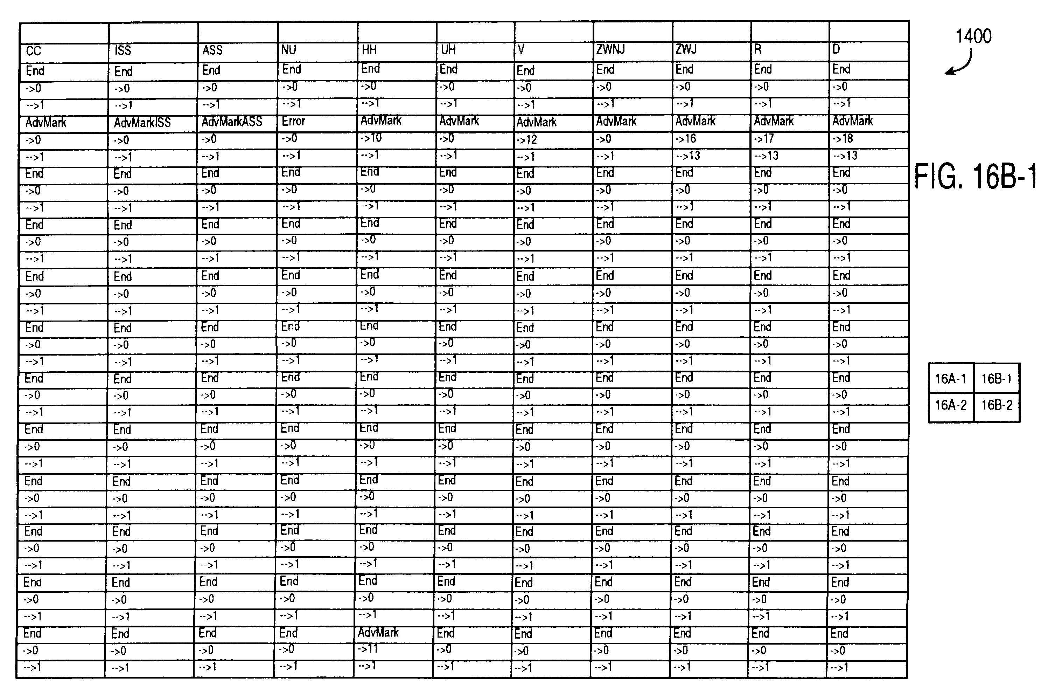

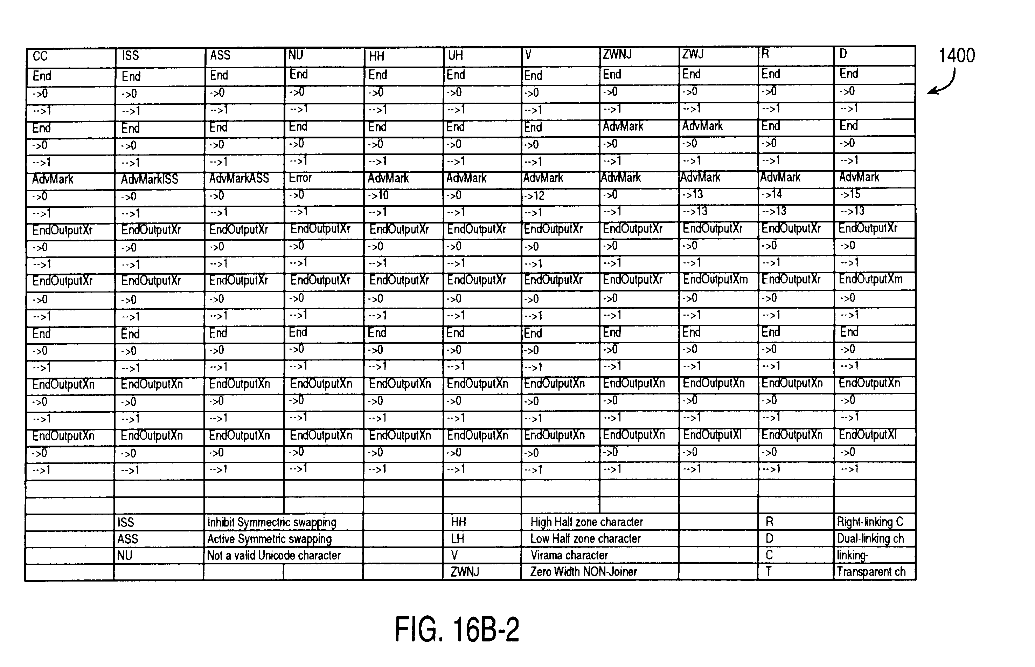

The next text element processing 900 begins by initializing 952 state and reorder flags. Next, a decision 954 is made based on whether the mapping table 414 needs direction information. If the mapping table 414 requires direction information, then the direction of the next input character of the Unicode string 404 is resolved 956. Then, the Unicode character is obtained 958 from the Unicode string 404. Here, the next character in the Unicode string 404 is obtained 958. Next, the attributes for the Unicode character obtained are looked-up 960. The attributes looked-up 960 are discussed in detail below with reference to FIGS. 11 - 13. Then, the action and next state for the next text element processing 900 are determined 962. The determination 962 of the action and the next state are explained in greater detail below with reference to FIGS. 14A, 14B, 16A and 16B.

Next, a decision 964 is made based on whether the action is "END". If the action is not "END", then the action is at least an "ADVANCE". When the action is "ADVANCE", a decision 966 is then made based on whether the action is also "MARK". When the action is also "MARK", then the character is included 968 in the text element. Additionally, the bidirectional state is saved 970 when a "MARK" action is taken. The bidirectional state includes the directional embedding stack and the current state of the bidirectional state machine. Following block 970 or following decision block 966 when the action is not also "MARK", a switch operation 972 is performed based on an action modifier. The action modifier is a part of the action and includes modifiers such as "S", "ISS", "ASS". The action may also not have any action modifier. When the action modifier is "S", then a reorder flag is set 974. The reorder flag indicates (when set) that the characters within the text element may need to be reordered. When the action modifier is "ISS" (i.e., Inhibit Symmetric Swapping), then a swap flag is set off 976. When the action modifier is "ASS" (i.e., Activate Symmetric Swapping), the swap flag is set on 980. The swap flag indicates whether or not symmetric swapping is needed. The switch 972 can easily be adapted to include additional action modifiers using an expansion area 980. The expansion area 980 enables users to modify the behavior of the scanner 408. Also, if there is no action modifier, then the next text element processing 900 does not perform any operation associated with action modifiers. Following the action modifier operations, a current character index is updated 982. The current character index is a pointer into the source string used to scan through the source string when performing the next text element processing 900. The next text element processing 900 then repeats operations beginning at block 954. The processing loops through blocks 954-982 until the decision 964 determines that the action is "END". When the action is "END", decision 964 causes context processing 984 to be performed. After the context processing 984, the decision block 986 determines whether the reorder flag is set. If the reorder flag is set (see block 974), then characters within the text element are reordered 988. The reordering is preferably performed using the priority attribute which provides weighting values for different character classes. Following block 986 in the case where the reorder flag is not set or following block 988 in the case when the reorder flag is set, the next text element processing 900 is complete and returns to the Unicode converter processing 700.

The context processing 984 is now described with reference to FIG. 9C. The context processing 984 is implemented in this described embodiment by the scanner 408 together with the scanner table 410. The context processing 984 begins with a decision 985 that determines whether the action is EndOutputXn (i.e., alone context). If so, then the context mask is set 986 to indicate that the context is alone and the context processing 984 is complete and returns. On the other hand, if the action is not EndOutputXn, then a decision 987 determines whether the action is EndOutputX1 (i.e., initial context). If so, then the context mask is set 988 to indicate that the context is initial and the context processing 984 is complete and returns. On the other hand, if the action is not EndOutputX1, then a decision 989 determines whether the action is EndOutputXr (i.e., finished context). If so, then the context mask is set 990 to indicate that the context is initial and the context processing 984 is complete and returns. On the other hand, if the action is not EndOutputXr, then a decision 991 determines whether the action is EndOutputXm (i.e., medial context). If so, then the context mask is set 992 to indicate that the context is initial and the context processing 984 is complete and returns. If the decision 991 determines that the action is not EndOutputXm, then the text element has no context associated therewith so the context mask is set 993 to don't care.

Thus, the context processing 984 is implemented in the above embodiment in such a manner that the text element and the context are determined together. Both determinations make use of scanning ahead provided by the scanner 408 and the scanner table 410 to ensure that the text element is complete and that the context of the text element within the input text stream is known. The context information residing in the context mask is thereafter used by the lookup handler 412 when interacting with the mapping table 414 seeking the correct target encoding for the text element having the determined context. More detail on the operation of the context processing is presented below with reference to FIGS. 16A and 16B.

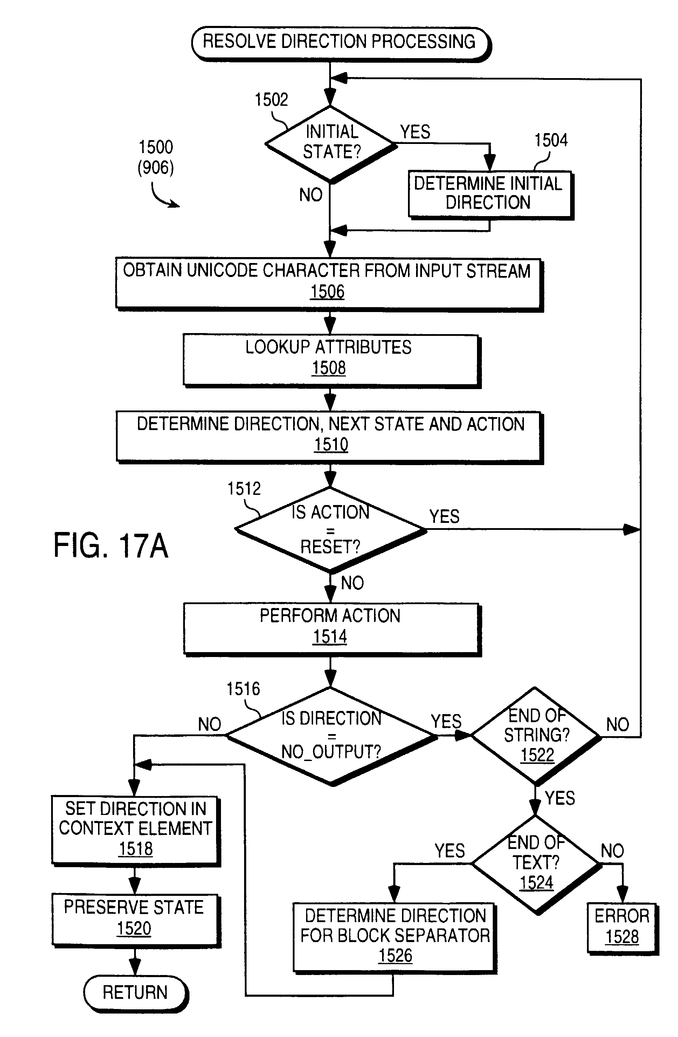

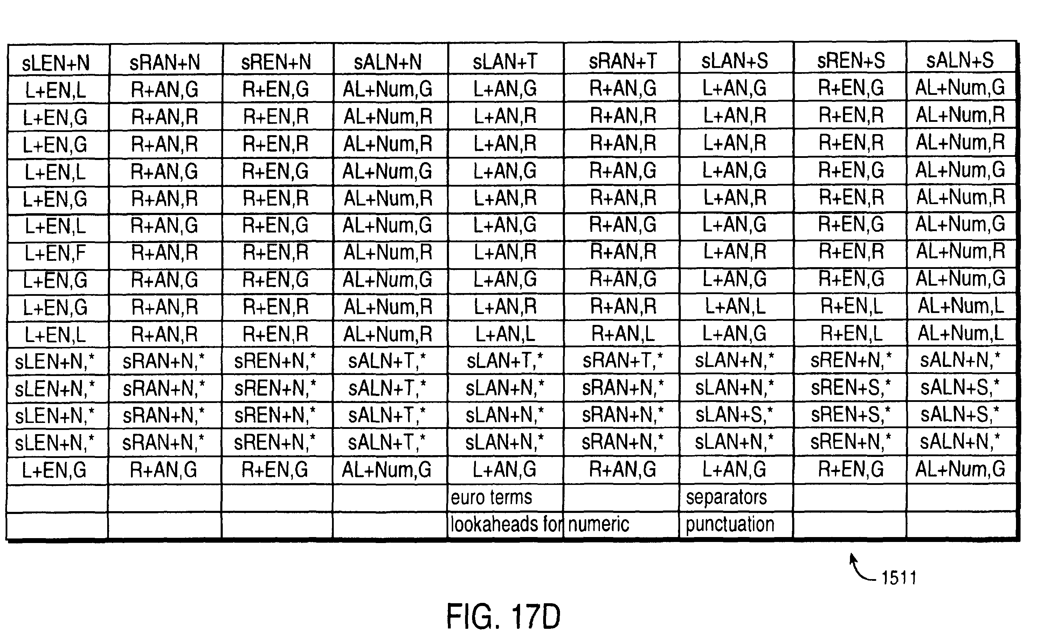

FIG. 11 is a block diagram of the scanner 408. The scanner 408 among other things, includes an attributes handler 1000 and a text element handler 1002. The text element handler 1002 performs the next text element processing 900 described above with reference to FIGS. 9A and 9B and FIGS. 10A - 10C. The attributes handler 1000 interacts with an attributes table 1004 to obtain the attributes for a Unicode character, as needed by the next text element processing 900 (see block 914 of FIG. 9A and block 960 of FIG. 10A). The attributes include the following: direction, class, priority, symmetric swapping, subset and context. The direction attribute is used in resolving direction (block 906 FIG. 9A and block 956 FIG. 10A and FIG. 17A. The class attribute is used by the scanner 408 to determine actions (e.g., ADVANCE, END). The priority attribute is used for recording the characters within a text element (see block 940, FIG. 9B and block 988 FIG. 10A). The symmetric swapping attribute is used to whether or not symmetric swapping is needed. The context attribute is used in resolving context (block 910 FIG. 9A).

FIG. 12 is a schematic diagram of a preferred format for the attributes table 1004 of FIG. 11. The attributes table 1004 includes a header portion 1100, a range table portion 1102, and an attributes table portion 1104. The header portion 1100 includes information concerning the following: total table size, checksum value, version, offset and number of elements for each table. The elements within the range table portion 1102 provide ranges in which the attributes are commonly grouped, and then for each such group provides a pointer to the appropriate portion of the attributes table portion 1104. The format of the range table portion 1102 of the attributes table 1004 includes, for each entry, a beginning of range value, an ending of range value, and a data word associated with the range. The arrangement of the attributes table 1004 facilitates compact storage of the attribute information. Alternative storage arrangements are possible but may be less efficient in terms of compactness of data storage.

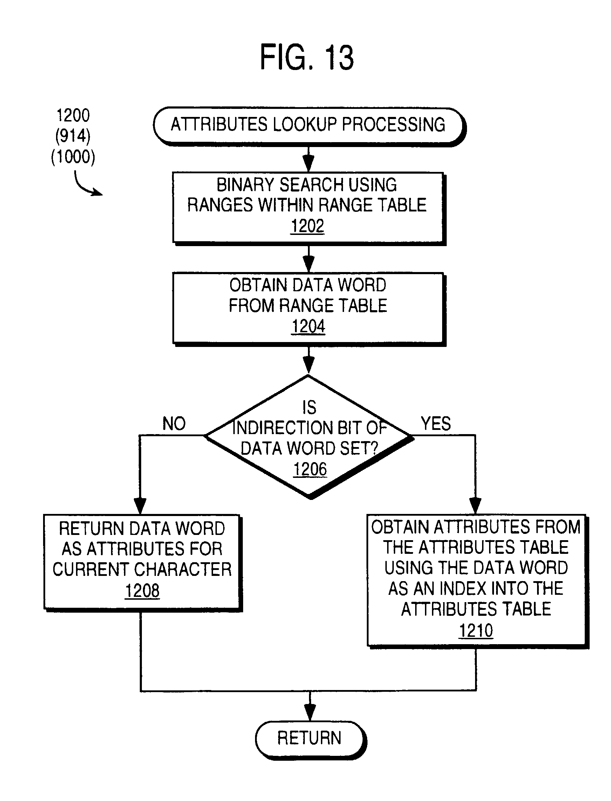

FIG. 13 is a flow chart of attributes lookup processing 1200. The attributes look-up processing 1200 is performed by the attributes handler 1000, and initiated by the next text element processing 900 in block 914 of FIG. 9A or block 960 of FIG. 10A.

The attributes lookup processing 1200 begins with a binary search using the ranges within the range table portion 1102 of the attributes table 1004. Once the appropriate range is identified by the binary search, the data word associated with that range is obtained 1204 from the range table portion 1102. Preferably, the first bit of the data word is an indirection bit. A decision 1206 is then made based on whether the indirection bit of the data word is set. In the case where the indirection bit of the data word is not set, the data word itself contains the attributes for the current character, therefore, the data word is returned 1208 as the attributes. On the other hand, when the indirection bit of the data word is set, then the attributes are obtained 1210 from the attributes table portion 1104 using the data word obtained from the range table portion 1102 as an index or offset into the attributes table portion 1104. Hence, the data word in this case is an index or offset to an array that contains the attributes for each character in the range. Following either blocks 1208 or 1210, the attribute lookup processing 1200 completes and returns.

FIGS. 14A and 14B are schematic diagrams associated with a scanner table 1300 (410) utilized by the scanner 408 to determine the next action. The next action determination is invoked by block 916 of the next text element processing 900 (FIG. 9A) or by block 962 (FIG. 10A). Recall, that the next action is used in determining the next text element. FIG. 14A illustrates a preferred format for the scanner table 1300 for use with the invention. The scanner table 1300 is a two-dimensional array having "current state" as one index and "class" as another index. The "class" refers to the class attribute. These indexes select a representative element 1302 within the scanner table 1300. FIG. 14B illustrates the representative element 1302 of the scanner table 1300. The representative element 1302 includes a next state portion 1304 containing a next state for the scanner 408, and the action portion 1306 indicates the action for the scanner 408. In effect, the scanner 408 together with the scanner table 1300 implement a state machine to determine how the scanner should operate.

The scanner table 1300 provides different next states and actions for different character encodings.

With respect to the first, second and fourth aspects of the invention, FIG. 15 is a table 1400 which represents both a preferred layout and the information which would be stored in the scanner table 1300. The notations associated with the table are as follows:

### Character Classes:

- CC: - Control character
- OS: - Other spacing
- NS: - Non-spacing
- LD: - Latin digit
- FS: - Fraction slash
- JL (f): - JaMos leading consonant (filler)
- JV (f): - Jamos vowel (filler)
- JT: - Jamos consonant trailer
- NU: - Not a valid Unicode character
- ISS: - Inhibit symmetric swapping
- ASS: - Activate symmetric swapping

### Next States:

- State 0: - End, determines if text element should be returned based on states of double and half diacritics
- State 1: - Start state
- State 2: - Add non-spacing (diacritics)
- State 3: - check for numeric fraction
- State 7: - Korean Jamos

### Actions:

- Adv: - [ADVANCE] advance to next character (the current may or may not be included in the current text element (TE)).
- AdvMark: - [ADVANCE+MARK] mark current character as last and advance to next character.
- AdvMarkS: - [ADVANCE+MARK+S] mark current character as last and advance to next character and set reorder flag.
- AdvMarkASS: - [ADVANCE+MARK+ASS] mark current character as last and advance to next character and activate symmetric swapping.
- AdvMarkISS: - [ADVANCE+MARK+ASS] mark current character as last and advance to next character and inhibit symmetric swapping.
- End: - End text element with last marked character.
NOTES - All functions check to see if reorder flag is set and reorder the non-spacing characters starting at start pointer. It is best to check the whole string because there may be more than one set of non-spacing marks which need to be reordered. Of course, after reordering the characters, the reorder flag is cleared.

With respect to the third aspect of the invention, FIGS. 16A and 16B contain a table 1400 which represents both a preferred layout and the information which would be stored in the scanner table 410 to facilitate the determination of both the text element and their context within the source string. The notations associated with the table are as follows:

### Character Classes:

- CC: - Control character
- OS: - Other spacing
- NS: - Non-spacing
- LD: - Latin digit
- FS: - Fraction slash
- DD: - Double Diacritic
- HD: - Half Diacritic
- CH: - Jamos leading consonant (filler)
- JO: - Jamos vowel (filler)
- JV: - Jamos consonant trailer
- NU: - Not a valid Unicode character
- ISS: - Inhibit symmetric swapping
- ASS: - Activate symmetric swapping
- HH: - High Half Zone
- LH: - Low Half Zone
- V: - Virama
- ZWNj: - Zero Width Non-joinder
- R-: -Right-linking
- D: - Dual-linking
- C: - Linking-causing
- T: - Transparent

### Next States:

- State 0: - End, determines if text element should be returned based on states of double and half diacritics
- State 1: - Start state
- State 2: - Add non-spacing (diacritics)
- State 3: - Latin digit
- State 4: - Latin digit sequence
- State 5: - Latin digit sequence followed by fraction slash
- State 6: - Latin digit sequence, fraction slash, Latin digit sequence
- State 7: - Choseong sequence
- State 8: - Choseong sequence followed by Jungseong sequence
- State 9: - Choseong sequence, Jungseong sequence, Jongseong
- State 10: - High half character
- State 11: - High half character followed by low half character
- State 12: - Virama followed by zero width joinder or zero width non-joinder
- State 13: - Special start for context
- State 14: - Right-linking character (in special context state)
- State 15: - Dual-linking character (in special context state)
- State 16: - Link-causing character (in normal or special state)
- State 17: - Right-linking character (in normal state)
- State 18: - Dual-linking character (in normal state)

### Next Start State: [actually a subset of Next States]

- State 1: - Start State
- State 13: - Special start state for context

### Actions:

- Adv: - [ADVANCE] advance to next character (the current may or may not be included in the current text element (TE)).
- AdvMark: - [ADVANCE+MARK] mark current character as last and advance to next character.
- AdvMarkS: - [ADVANCE+MARK+S] mark current character as last and advance to next character and set reorder flag.
- AdvMarkASS: - [ADVANCE+MARK+ASS] mark current character as last and advance to next character and activate symmetric swapping.
- AdvMarkISS: - [ADVANCE+MARK+ASS] mark current character as last and advance to next character and inhibit symmetric swapping.
- End: - End text element with last marked character.
- EndOutputXn: - [END+Alone Context] end text element and indicate that the alone context.
- EndOutputX1: - [END+Initial Context] end text element and indicate that the initial context.
- EndOutputXr: - [END+Finished Context] end text element and indicate that the finished context.
- EndOutputXm: - [END+Medial Context] end text element and indicate that the medial context.
NOTES - All functions check to see if reorder flag is set and reorder the non-spacing characters starting at start pointer. It is best to check the whole string because there may be more than one set of non-spacing marks which need to be reordered. Of course, after reordering the characters, the reorder flag is cleared.

Three examples of usage of the scanner table 1400 follow. The first two examples pertain to the first, second, third and fourth aspects of the invention, while the third example pertains to the third aspect.

Example 1: Input string "AAB"

The character class is OS for all three characters. The first character "A" is obtained. Beginning at the start state (state 1), the first action is AdvMark and the next state is state 2. This causes the first character "A" to be included within the current text element and causes the next character (second character "A") to be obtained. Then, at state 2, the action is End and the next state is state 0. Hence, the text element includes only the first text element. The same sequencing repeats for the second and third characters of this particular input string. Thus, each of the characters of the input string is assigned to a separate, but adjacent, text element.

Example 2: Input string "A`B"

The character class is OS for the first and last characters of the input string. The character class for the second character is NS because it is a combining mark. The first character "A" is obtained. Beginning at the start state (state 1), the first action is AdvMark and the next state is state 2. This causes the first character "A" to be included within the current text element and causes the next character (second character " ` ") to be obtained. Then, at state 2, the action is AdvMarkS and the next state is state 2. This causes the second character " ` " to be included in the current text element. The third character is then obtained. The action at state 2 this time is End and the next state is state 0. Hence, the text element includes the first and second characters of the input string. The third character will be placed in its own text elements as was the case with Example 1.

Example 3: Input string "OS R D OS OS". [There are no spaces between the characters and each character is represented by its character class. The R and D character classes include character having context based presentation forms, but the OS character class does not.]

The first character is of character class OS. Beginning at the start state (state 1), the first action is AdvMark, the next state is 2, and the next start state is 1. This causes the first character to be included in the current text element and causes the second character to be obtained.
The second character is of character class R. Then, at state 2, the action is End, the next state is 0, and the next start state is 1. Hence, the first text element only includes the first character and the context flags are set to don't care.

In determining the next text element, the processing begins with the second character and at the new start state of 1. This time the scanner table yields an action of AdvMark, the next state is 17, and the next start state is 13.. This causes the second character to be included in the current text element and causes the third character to be obtained.
The third character is of character class R. Then, at state 17, the action is EndOutputXn, the next state is 0, and the next start state is 1. Hence, the second text element includes only the second character and the context is Xn (alone).

In determining the next text element, the processing begins with the third character and at the new start state of 13. This new start state is the next start state indicated by the table for the last character. Here, the scanner table yields an action of AdvMark, the next state is 15, and the next start state is 13. The third character is then part of the current text element and causes the fourth character to be obtained. The fourth character is of character class OS. Then, at state 15, the action is EndOutputXr, the next state is 0, and the next start state is 1. Hence, the third text element includes only the third character and the context is Xr (finish).

In determining the next text element, the processing begins with the fourth character and at the new start state of 13. The scanner table yields an action of AdvMark, the next state is 2, and the next start state is 1. This causes the fourth character to be included in the current text element and causes the fifth character to be obtained. The fifth character is of character class OS. Then, at state 2, the action is End, the next state is 0, and the next start state is 1. Hence, the fourth text element only includes the fourth character and the context flags are set to don't care.

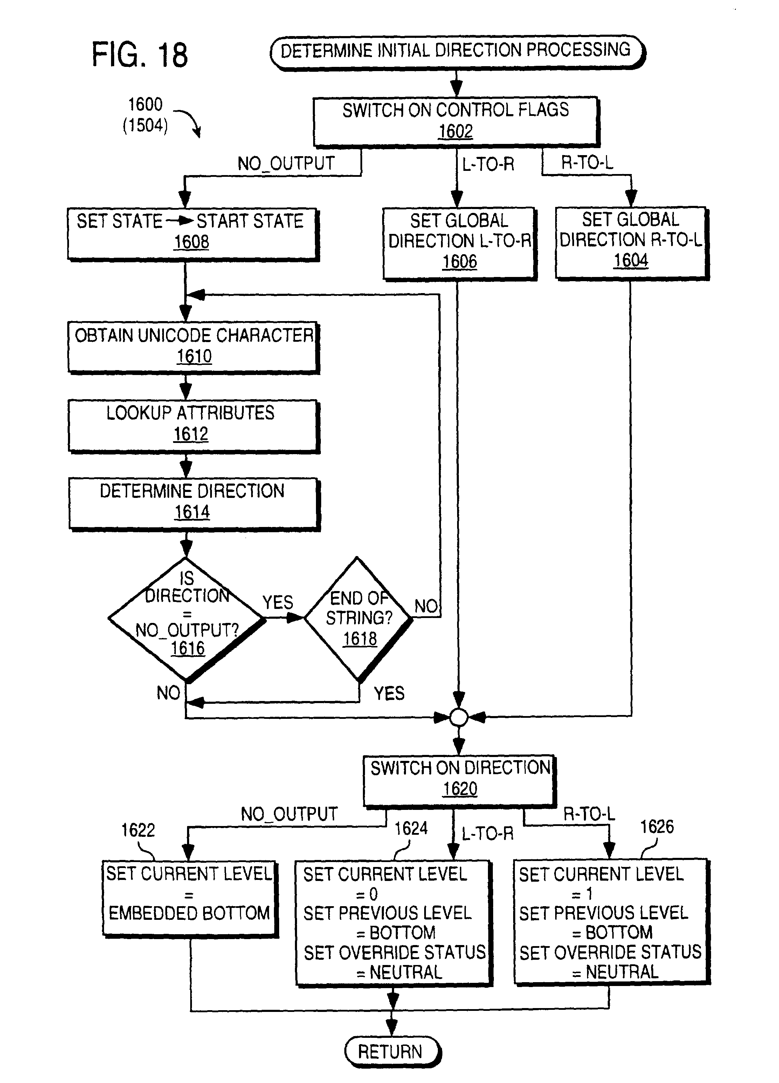

FIG. 17A is a flow chart illustrating resolve direction processing 1500 in accordance with the second aspect of the invention. The resolve direction processing 1500 is the processing carried out by block 906 within the next text element processing 900 (FIG. 9A). The resolve direction processing 1500 begins with a decision 1502 which determines whether the state of direction resolved for the scanner 408 is in its initial state. In the initial state, the scanner 408 has no idea of the direction of the characters in the text element. If the state of direction resolved for the scanner 408 is in the initial state, then an initial direction for the input string is determined 1504. The processing associated with determining 1504 of the initial direction is described in detail below with reference to FIG. 18. On the other hand, when the state of direction resolved for the scanner 408 is not in the initial state, then the initial direction need not be determined. In either case, following block 1502 or block 1504, a Unicode character is obtained 1506 from the input stream. The attributes associated with the Unicode character are then looked-up 1508. The direction attribute is the important attribute for the resolve direction processing 1500. The blocks 1506 and 1508 of the resolved direction processing 1500 perform the same operations as blocks 912 and 914 of the next text element processing 900 and therefore need not be further discussed.

Next, direction, next state and action are determined 1510. The direction, next state and action are determined using the direction attribute and the current state and are obtained from a direction table using a table look-up process. The direction table is a two-dimensional array indexed by the direction attribute and the current state. The element within the direction table pointed to by the indexes includes the direction of the character, the next state, and the action the resolve direction processing 1500 is to take. The direction is one of the following: left, right, global, and NO_OUTPUT. The possible actions are: NO_ACTION, PUSH RO, PUSH RE, PUSH LE, PUSH LO, POP, and RESET. Because the direction may change within an input string due to explicit override characters, previous directions are stored on a direction stack. Hence, the use of "push" and "pop" refer to stack manipulation commands which are well known in the art. "RO" refers to right-to-left override, "LO" refers to left-to-right override, "RE" refers to right-to-left embedding, and "LE" refers to left-to-right embedding.
Preferably, the direction table and the resolve direction processing 1500 operate as a state machine. The state machine essentially follows the bidirectional algorithm described in The Unicode Standard, Version 1.0, pp. 611-621 (Appendix A), but achieves the result with only a single pass, whereas the algorithm described in The Unicode Standard requires multiple passes.

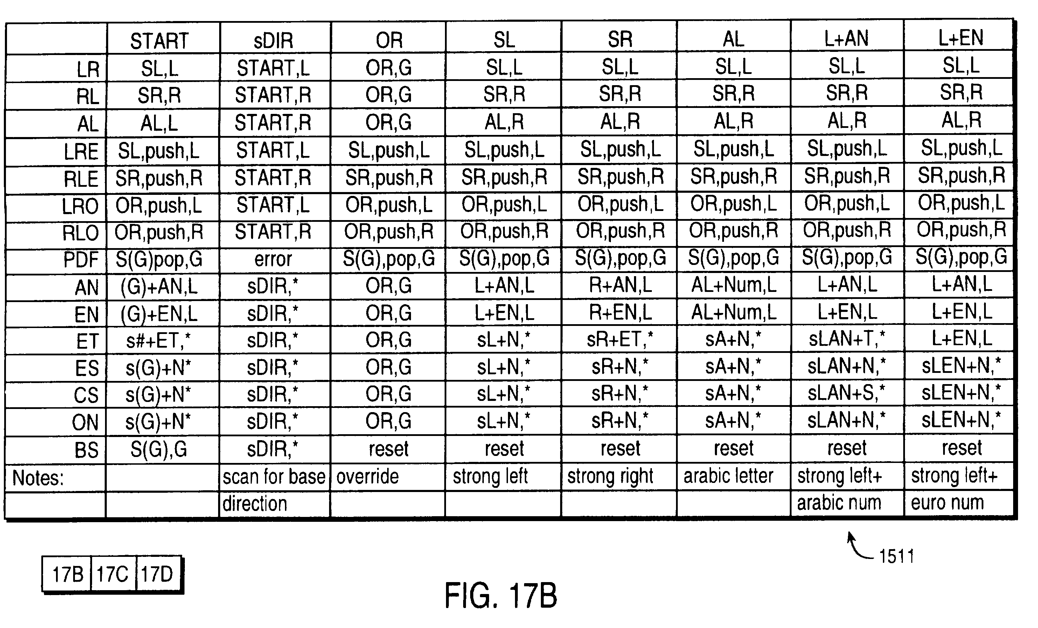

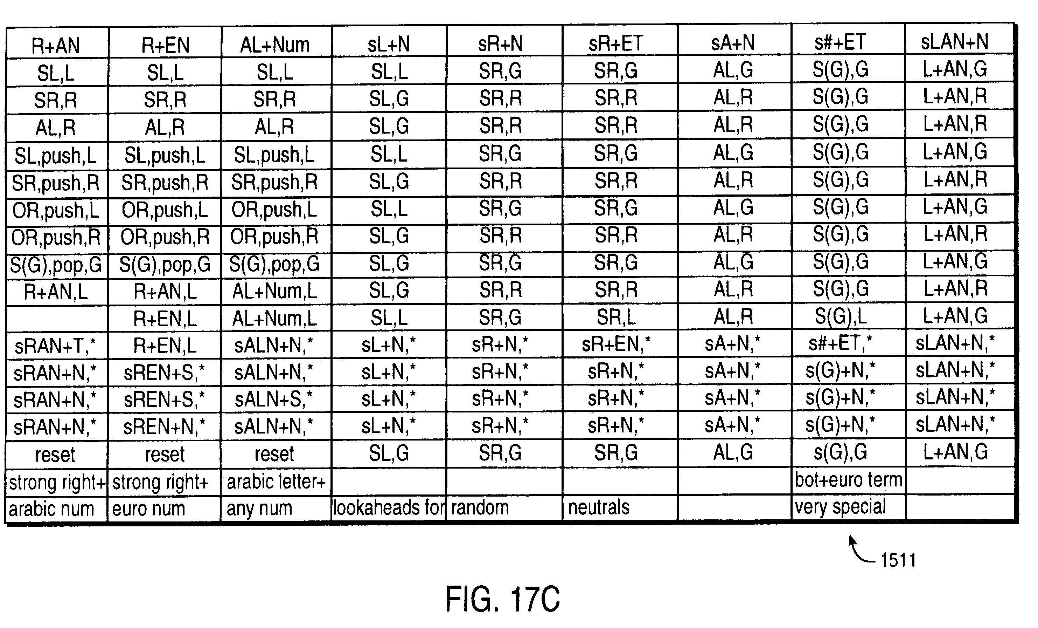

FIGS. 17B - 17D illustrate bidirectional state tables 1511 according to a preferred implementation of the bidirectional algorithm according to the second aspect of the invention. The bidirectional state tables 1511 implement a table-driven state machine. Each column is a single state. The states are given names suggestive of the information they record. Each row extends across FIGS. 17B-17D and is labeled by one of the following character class names.
- LR: strong left to right
- RL: strong right to left
- AL: Arabic letter (strong right to left)
- LRE: left to right embedding mark
- RLE: right to left embedding mark
- LRO: left to right override mark
- RLO: right to left override mark
- PDF: pop directional format mark
- AN: Arabic number
- EN: European number
- ET: European number terminator
- ES: European number separator
- CS: common number separator
- ON: other neutral character
- BS: block separator

Each cell in the bidirectional state tables 1511 represents a transition with associated actions and outputs. The cells contain the name of the new state, an optional action to be taken, and an output, if any. The new state may depend on the current global direction. This is indicated by having a (G) in the new state name. It is an error to make one of these transitions when the global direction is unknown. The possible actions are as follows:
- push: push a new embedding state onto the embedding stack. The actual value to be pushed depends on the actual embedding control encountered. In the implementation, there are 4 different action verbs to handle this.
- pop: pop the current embedding state off the stack and make the new top of stack the current embedding state. If the new embedding is an override, a transition is made to the OR state instead of the target state given in the cell.
- reset: clear the embedding stack and go to START without consuming a character, i.e., make an epsilon transition. There is no output on a reset.
- error: generate an immediate error.

Outputs are either L or R, meaning left-to-right and right-to-left,
respectively, G, meaning output the current global direction, or •, meaning no output. A transition that has an output terminates the scan. The machine may be entered in any state with an name that does not begin with a lower-case 's'. The START state is intended for a new block of text. The sDIR state is used as an entry point for determining the global direction. It should be possible to make this calculation simultaneously with the main scan, but it is separated for simplicity.

Returning to FIG. 15A, following block 510, a decision 1512 is then made based on whether the action is "RESET". If the action is "RESET", then processing returns to the beginning of the resolve direction processing 1500. Otherwise, the resolve direction processing 1500 continues. Namely, following the decision 1512, the action is performed 1514.

Next, a decision 1516 is made based on whether the direction (determined in block 1510) is "NO_OUTPUT". When the direction is not equal to "NO_OUTPUT", then the direction is set 1518 in the context (for each instance), and the state is preserved 1520. Following block 1520, the resolve direction processing 1500 is complete and returns.

However, in the case when the decision 1516 determines that the output is "NO_OUTPUT", then a decision 1522 is made based on whether the entire input string has been processed. If the entire input string has not been processed, then processing returns to the beginning of the resolve direction processing 1500 so that an additional Unicode character can be obtained and processed because so far the direction of the text element has not been determined. On the other hand, when the decision 1522 determines that the entire input string has been processed, then a decision 1524 determines whether the processing has reached the end of the text. That is, whether the text to be converted to the target encoding has been completely processed by the resolve direction processing 1500. If there is additional text to be converted, then an error results 1528 because no direction could be computed for the current character of the input string. However, if there is no additional text, then the direction for a block separator is determined 1526 from the overall direction of the block (see 1504). Following block 1526, blocks 1518 and 1520 are performed as previously described and then the resolve direction processing 1500 is complete and returns.

FIG. 18 is a flow chart of determine initial direction processing 1600 according to the second aspect of the invention. The determine initial direction processing 1600 is associated with the operations performed by block 1504 in FIG. 17A.

The determine initial direction processing 1600 begins with a switch operation 1602 based on control flags. The control flags indicate one of: NO_OUTPUT, L-to-R, or R-to-L. These control flags are set by the application which invokes the Unicode code conversion system 400 (i.e., the control flags are inputs to the converter). In the case when the control flags indicate R-to-L, the global direction is set 1604 to R-to-L. When the control flags are set to L-to-R, then the global direction is set 1606 to L-to-R. When the control flags are set to NO_OUTPUT, then a small loop is initiated to scan through the Unicode characters of the input string until the direction can be determined. The loop begins by setting 1608 the state to "START STATE". Next, a Unicode character is obtained 1610 from the input string. The attributes for the Unicode character are then looked-up 1612. The attributes are looked-up 1612 using the same approach used in block 914 of FIG. 9A and described in detail in FIG. 12. The direction of the Unicode character is then determined 1614 using the attributes (namely, the direction attribute). A decision 1616 is then made based on whether the direction is equal to "NO_OUTPUT". If the direction is "NO_OUTPUT", then a decision 1618 is made based on whether the end of the input string has been reached. If the end of the input string has not been reached, then the processing returns to repeat blocks 1610-1618. Once the end of the string is reached, decision 1618 causes the special direction scanning loop to complete without finding the direction (e.g., NO_OUTPUT). Alternatively, the scanning loop completes when the decision 1616 determines the direction.

In any case, following the direction processing associated with the switch operation 1602, a switch operation 1620 is invoked based on the direction. When the direction determined is "NO_OUTPUT", then the current level is set 1622 to embedded bottom. On the other hand, if the direction is L-to-R, then the current level is set to zero, the previous level is set to bottom, and the override status is set to neutral 1624. When the direction is R-to-L, then the current level is set to 1, the previous level is set to bottom, and the override status is set to neutral 1626. The levels refer to embedding levels as described in The Unicode Standard. Although the special direction scanning loop (e.g., 1610-1618) of determine initial direction processing 1600 is illustrated as a separate loop in FIG. 18, the overall system processing efficiency could be improved by incorporating the special direction scanning loop within the main direction scanning loop.

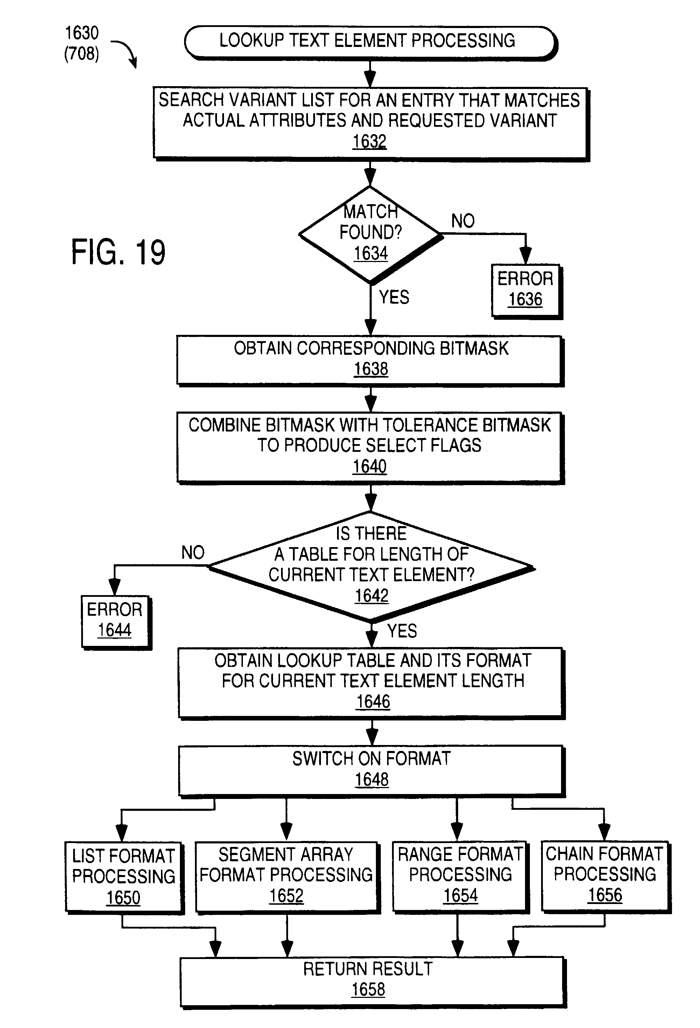

FIG. 19 is a flow chart of lookup text element processing 1630. The lookup text element processing 1630 is performed by the lookup handler 412 and is invoked by the block 708 within the Unicode converter processing 700 (FIG.7).

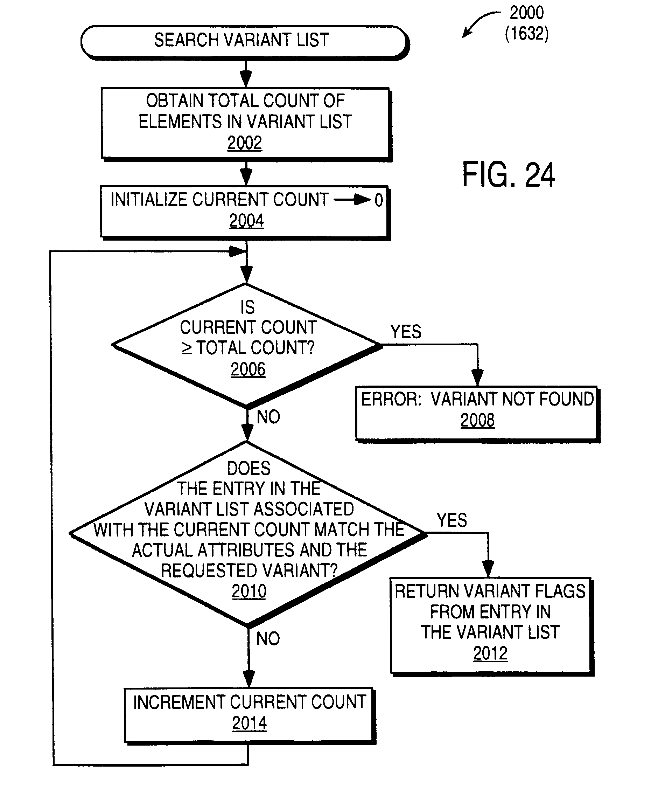

The lookup text element processing 1630 begins by searching 1632 a variant list for an entry that matches actual attributes and requested variant. The searching 1632 of the variant is described in detail below with reference to FIG. 24. Next, a decision 1634 is made based on whether a match was found. If no match was found, then an error results 1636. On the other hand, if a match is found, then the corresponding bit mask is obtained 1638 from the variant list. Preferably, the variant list contains three fields: a variant identifier, a set of attributes, and a bit mask. If the variant identifier and the set of attributes within the variant list match the actual attributes and the requested variant, then the corresponding bit mask is chosen from the variant list. Following block 1638, the bit mask is combined 1640 with a tolerance bit mask to produce select flags. The select flags form the selection mask used in selecting the subtables of the mapping table 414 as was discussed above. Preferably, in the second aspect of the invention, the combining 1640 is a bitwise operation. Preferably, in the first, third and fourth aspects of the invention, the combining 1640 is a bitwise OR operation. Next, a decision 1642 is made based on whether there is a table within the mapping table 414 for the length of the current text element. If not, an error results 1644. On the other hand, if there is a table available for the length of the current text element, the lookup table and its format are obtained 1646 for the current text element length. Then, a switch operation 1648 is performed on the format. The formats available in this implementation are: list, segment array, range and chain. If the format is a list format, then list format processing 1650 is performed. If the format is segment array, then segment array format processing 1652 is performed. If the format is range, then range format processing is performed 1654. If the format is chain, then chain format processing 1656 is performed. Following blocks 1650-1656, the result is returned 1658, thereby completing the lookup text element processing 1630.

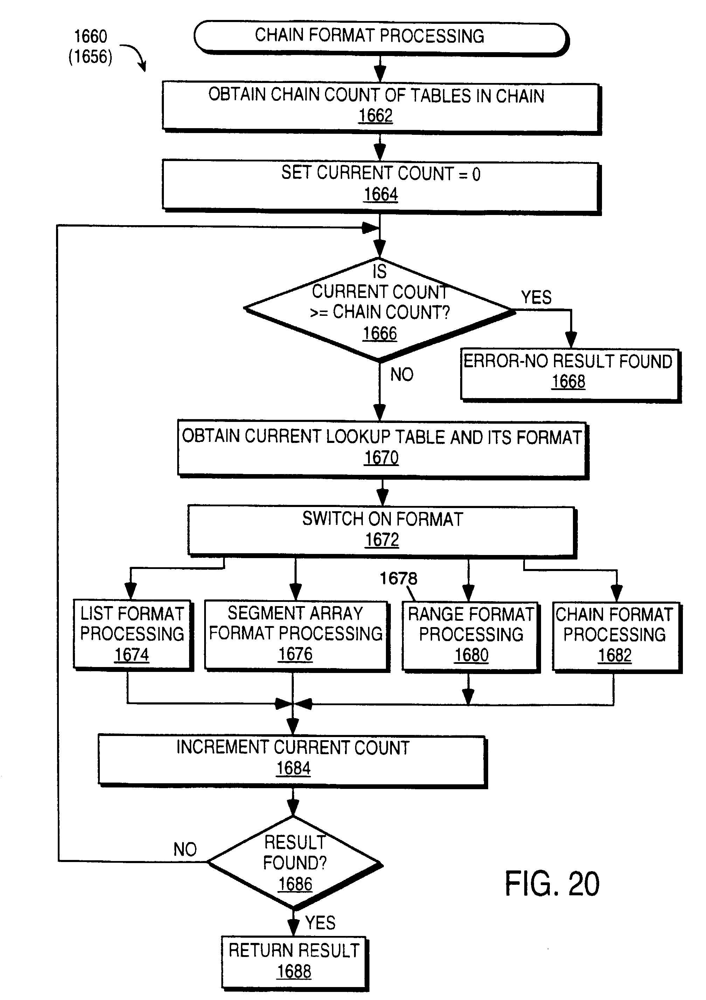

With respect to the first aspect of the invention, FIG. 20 is a flow chart of chain format processing 1660. The chain format processing 1660 is a processing performed by the chain format processing 1656 indicated in FIG. 19.

The chain format processing 1660 obtains 1662 a chain count of the numbers of tables in the chain. The current count is then set to zero 1664. Next, a decision 1666 is made based on whether the current count is greater than or equal to the chain count. If the current count is greater than or equal to the chain count, then the chain format processing 1660 returns 1668 indicating an error because no result was found. Otherwise, when the current count is not greater than or equal to the chain count, then the current lookup table and its format are obtained 1670. The formats used in this implementation are the same as used in FIG. 19. A switch operation 1672 is then performed based on the format. If the format is list, then list format processing 1674 is performed. If the format is segment array, then segment array format processing 1676 is performed. If the format is range, then range format processing 1680 is performed. If the format is chain, then chain format processing 1682 is performed. Following blocks 1614-1622, the current count is incremented 1684. Then, a decision 1686 is performed based on whether a result is found. If no result is found, then the chain format processing 1660 loops back to decision block 1666 to look through the next lookup table within the chain of tables. However, when the decision 1686 determines that the result is found, then the result is returned 1688, thereby completing the chain format processing 1660.

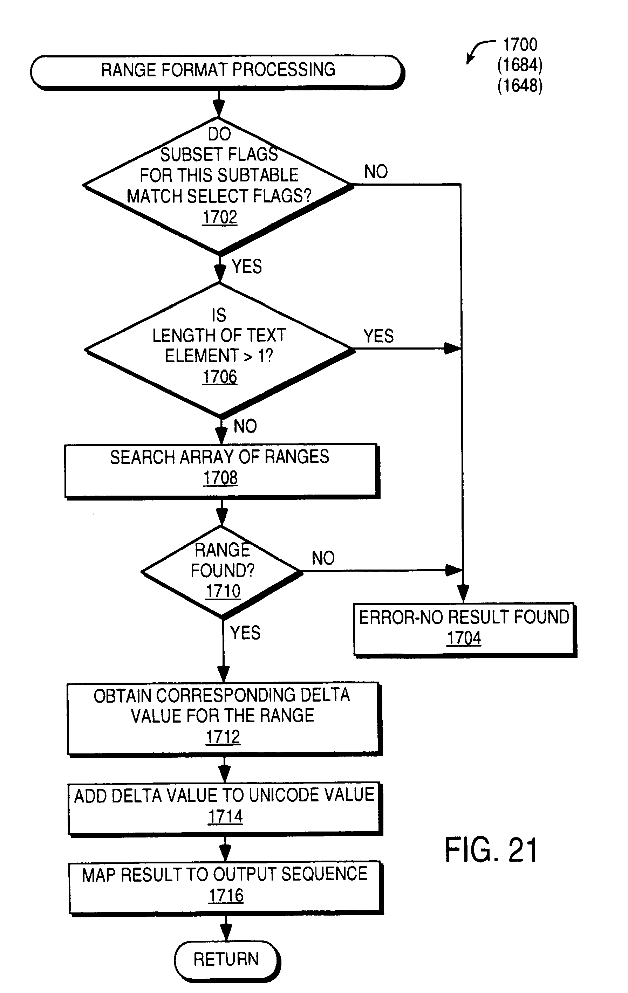

With respect to the first aspect of the invention, FIG. 21 is a flow chart of range format processing 1700. The range format processing 1700 is the processing carried out by block 1654 in FIG. 19 and block 1678 in FIG. 20. The range format is a list of ranges of characters with a delta valve associated with each field.

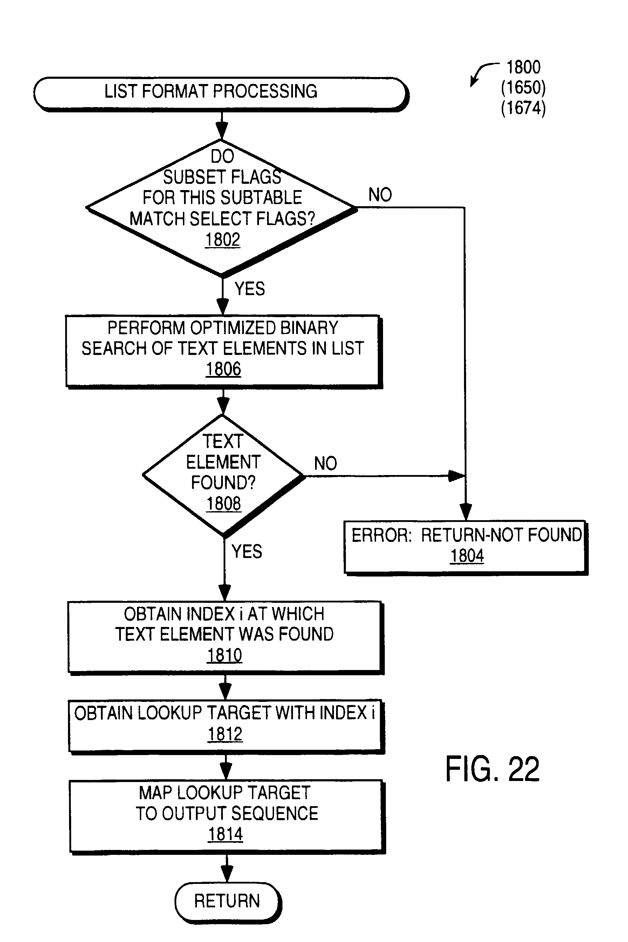

The range format processing 1700 begins with a decision 1702 based on whether the subset flags for this subtable match the select flags. The select flags for the selection mask, and the subset flags are for the subtable mask. If not, the range format processing returns 1704 indicating that no result was found using an error code. On the other hand, if the decision 1702 indicates that the subset flags for this subtable do match the select flags, then a decision 1706 is made based on whether the length of the text element is greater than one. If the length of the text element is greater than one, then this format is erroneously selected because the arrangement of the mapping tables for this particular implementation is such that the range format is only for a text element of length one. Hence, if the text element is greater than one, block 1704 is performed so as to return indicating no result was found. On the other hand, if the text element length is not greater than one, the range format processing 1700 continues. A subtable with the range format has an array of ranges, each range having a delta value associated therewith. The array of ranges is then searched 1708 to find the appropriate range for the Unicode character being converted. A decision 1710 is then made based on whether a range was found. If no range was found, then the range format processing 1700 returns 1704 indicating no result found using an error code, If, however, a range is found, then the corresponding delta value for the range is obtained 1712. The delta value is then added 1714 to the Unicode value. Thereafter, the result is mapped 1716 to an output sequence. The processing associated with the mapping 1716 of the result to the output sequence is explained in detail below with reference to Figs. 22A-22C. Following block 1716, the range format processing 1700 is complete and returns.

With respect to the first aspect of the invention, FIG. 22 is a flow chart of list format processing 1800. The list format processing 1800 is the processing performed by block 1650 in FIG. 19 and block 1674 in FIG. 20. The list format is a ordered list of text elements, and the index i into the ordered list is an index into a corresponding list of lookup targets.

The list format processing 1800 begins with a decision 1802 based on whether the subset flags for this subtable match the select flags. If not, the list format processing 1800 returns 1804 indicating no mapping found using an error code. On the other hand, when the subset flags for this subtable do match the select flags, then an optimized binary search is performed 1806 on the text elements in the list. A decision 1808 is then made based on whether the search has found a text element in the list. If not, again the list processing returns 1804 indicating no mapping found. However, if the text element is found, then index i at which the text element was found is obtained 1810. The index i is then used to obtain 1812 a lookup target. The lookup target is then mapped 1814 to the output sequence. The list format processing 1800 is then complete and returns.

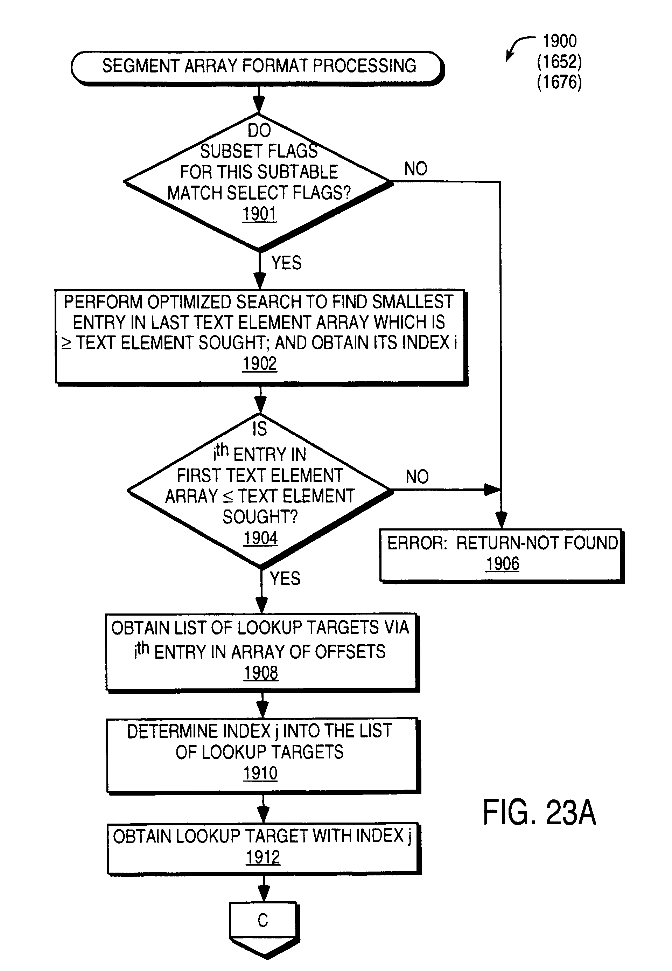

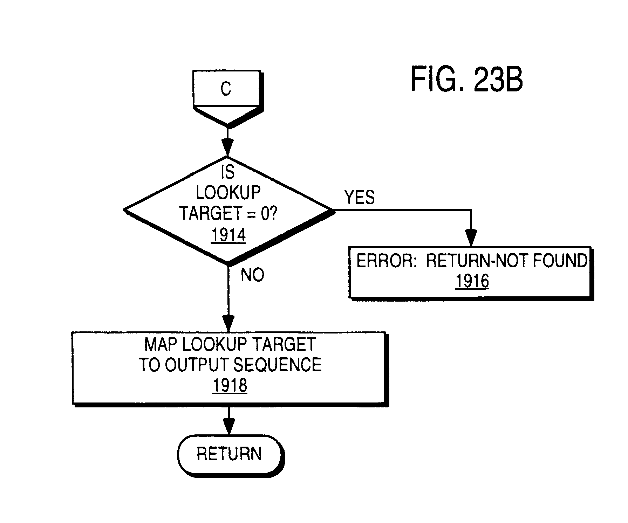

With respect to the first aspect of the invention, FIGS. 23A and 23B illustrate segment array format processing 1900. The segment array format processing 1900 is the processing performed by block 1652 in FIG. 19 and block 1676 in FIG. 20. The segment array format includes a first text element array, a last text element array, and a n array of offsets. The offsets in the array of offsets point to various lists of lookup targets.

The segment array format processing 1900 begins with a decision 1901 based on whether the subset flags for this subtable match the select flags. If the subset flags do match the select flags, then an optimized search is performed 1902. The optimized search finds the smallest entry in the last text element array which is greater than or equal to the text elements sought, and obtains the index i for this entry. Next, a decision 1904 is made based on whether the ith entry in the first text element array is less than or equal to the text element sought. If not, then the segment array format processing 1900 returns 1906 with an error code indicating no mapping found. Also, in the case in which decision 1901 fails, block 1906 is also performed. On the other hand, when the decision 1904 indicates that the ith entry in the first text element array is less than or equal to the text element sought, the ith entry is known to correspond to the text element sought. Then, a list of lookup targets is obtained 1908 via the ith entry in the array of offsets. That is, the offset provided by the ith entry in the array of offsets identifies the list of lookup targets. An index j into the list of lookup targets is then determined 1910. The index j is given the value of the text element sought less the first text element in the list (or range) of lookup targets obtained 1908. The lookup target with index j is then obtained 1912 from the list of lookup targets. Next, a decision 1914 is made based on whether the lookup target is equal to zero. If the lookup target is equal to zero, then the segment array format processing returns 1916 indicating no mapping found using an error code. On the other hand, if the lookup target is not equal to zero, then the lookup target is mapped 1918 to the output sequence. Following block 1918, the segment array format processing 1900 is complete and returns.

FIG. 24 is a flow chart illustrating search variant list processing 2000. The search variant list processing 2000 is processing performed by block 1632 in FIG. 19. In other words, the search variant list processing 2000 is part of the lookup text element processing 1630 performed by the lookup handler 412 in conjunction with the mapping table 414.

The search variant list processing 2000 obtains 2002 a total count of elements in the variant list. Then, the current count is initialized to zero 2004. A decision 2006 is then made based on whether the current count is greater than or equal to the total count. If the current count is greater than or equal to the total count, then the search variant list processing 2000 returns 2008 with an error code indicating the variant not found. On the other hand, if the current count is not greater than or equal to the total count, then a decision 2010 is performed based on whether the entry in the variant list associated with the current count matches the actual attributes and the requested variant. If they do match, then the variant flags from the entry in the variant list are returned 2012. Otherwise, the current count is incremented 2014 and then the processing returns to block 2006 to continue to loop through the available variants in the variant list until either one matches or all of the variants have been considered.

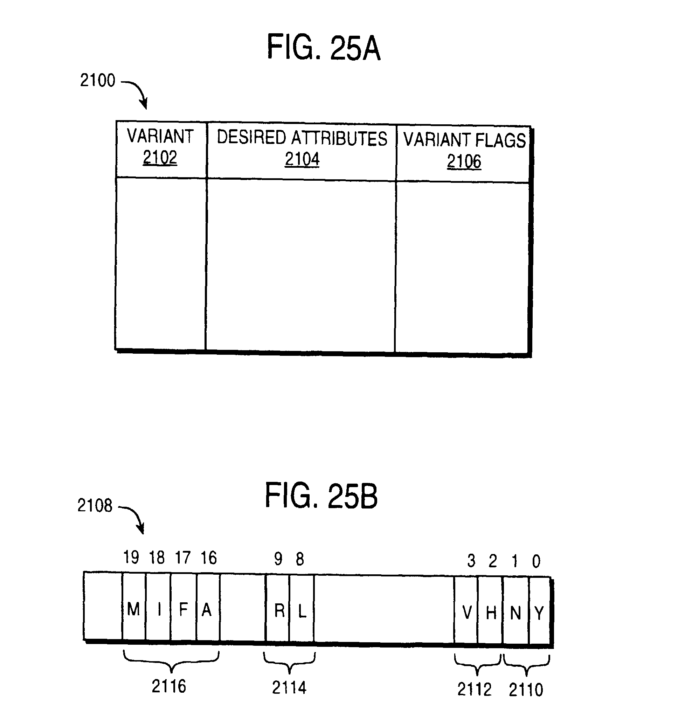

FIGS. 25A and 25B are schematic diagrams of the variant list 2100. As shown in FIG. 25A, the variant list 2100 includes a variant region 2102, a desired attributes region 2104, and variant flags region 2106. FIG. 25B illustrates an actual attributes bit mask in accordance with a preferred implementation. The actual attributes bit mask 2108 is a 32-bit variable having a first portion 2110 (bits 0 and 1) indicating the symmetric swapping state, a second portion 2112 (bits 2 and 3) indicating vertical or horizontal forms, a third portion 2114 (bits 8 and 9) indicating resolved direction, and a fourth portion 2116 (bits 16-19) indicating context. With respect to the third aspect of the invention, the bits of the fourth position 2116 are set by the context masks determined in the context processing 984 (FIG. 10C). Further with respect the first through fourth aspects of the invention, each bit within a portion represents a flag. The bits contain the value "0" if the flag is unknown or not set and contains the value "1" when set. The caller sets the second portion 2110, and the scanner 408 sets the first, third and fourth portions 2110, 2114 and 2116.

A desired attributes bit mask is formatted like the actual attributes bit mask, but sets the bits depending on which of the attributes is important to obtain the correct mapping for the particular table and variant (as determined by the design of the mapping table 414). The bits in the desired attributes bit mask are set to "1" for each attribute to be considered in making the mapping determination, but if all bits of a portion are set to "1", the attribute is ignored during mapping. For example, if bit 0 is "1" and bit 1 is "0", then symmetric swapping is on and will be considered when mapping is performed. On the other hand, if both bits 0 and 1 are "1", symmetric swapping is completely ignored. The remaining unused bits of the desired attributes bit mask are set to "1" and can be later assigned values if needed. A few examples of the desired attributes bit mask follow.

Suppose the direction is to be left-to-right and none of the other attributes matter. Then the desired attribute bit mask would be: xFFFFFDFF. Whereas, if the direction is to be right-to-left, with symmetric swapping on, the desired attribute bit mask would be: xFFFFFEFD. If the direction is to be right-to-left, with symmetric swapping off, the desired attribute bit mask would be: xFFFFFEFE. With each of the above different desired attribute bit mask, a different conversion code could be selected. For example, in mapping the Unicode character u0028 to MacArabic, yields x28 for the desired attribute bit mask xFFFFFDFF, xA8 for the desired attribute bit mask xFFFFFEFD, and xA9 for the desired attribute bit mask xFFFFFEFE.

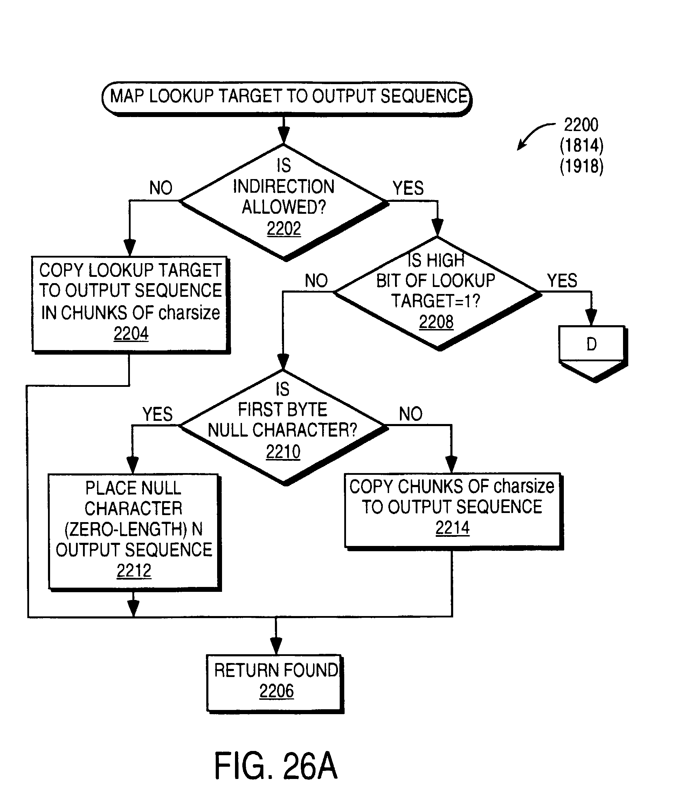

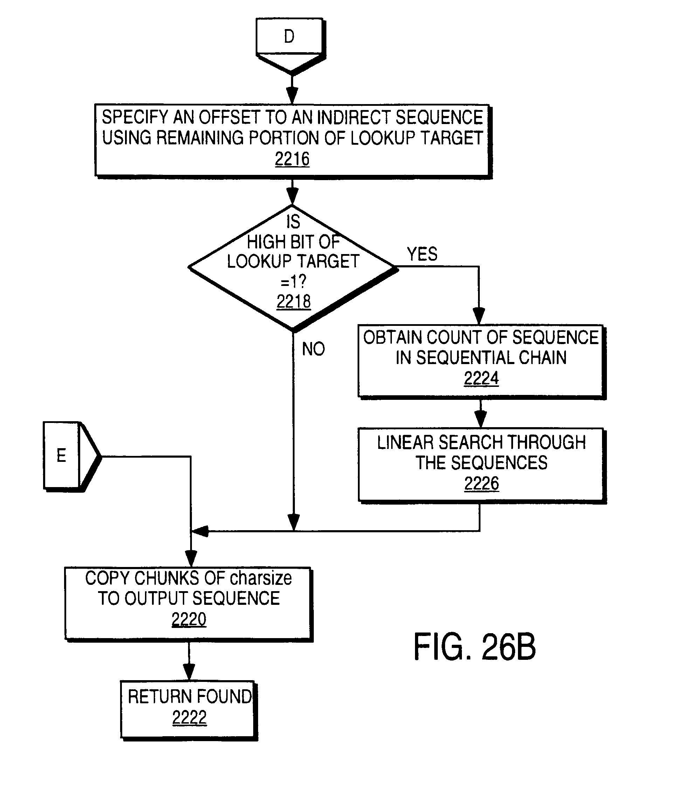

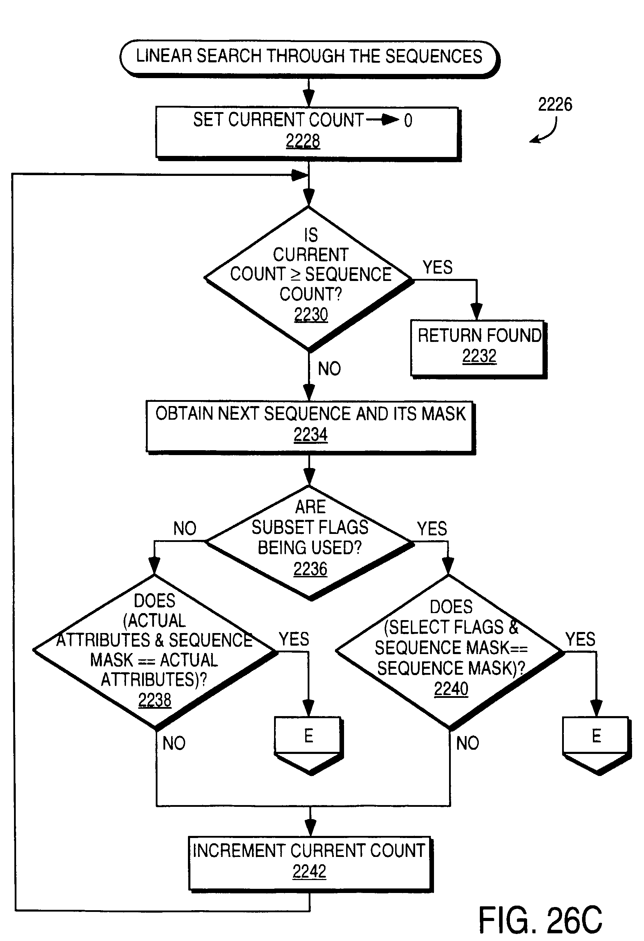

With respect to the first aspect of the invention, FIGS. 26A, 26B and 26C are flow charts illustrating map lookup target to output sequence processing 2200. The map lookup target to output sequence processing 2200 is associated with block 1814 in FIG. 22 and block 1918 in FIG. 23A.

The map lookup target to output sequence processing 2200 begins with a decision 2202 based on whether indirection is allowed. If indirection is not allowed, then the lookup target is copied 2204 to the output sequence in chunks of charsize. Charsize refers to the minimum size of a character in the target encoding and is specified in the header 500 of the mapping table 414. Following block 2204, the processing 2200 is complete and returns 2206 indicating a result found. On the other hand, if decision 2202 determines that indirection is allowed, then a decision 2208 is made based on whether the high bit of the lookup target is equal to one. If the high bit is not equal to one, then a decision 2210 is made based on whether the first byte indicates a null output sequence (i.e., an output sequence of length 0). If the first byte indicates x7F, then a null output sequence is indicated 2212 (a match found, but no characters added to the output sequence). Otherwise, when the first byte does not indicate a null output sequence, chunks of charsize are copied 2214 to the output sequence. In this case, the first byte preferably indicates length of the output sequence. Following blocks 2212 and 2214, block 2206 is performed to thereby complete the processing 2200 and return indicating a result found.

However, in the case where the decision 2208 determines that the high bit of the lookup target is equal to one, then additional processing is required because the lookup target provides an indirect reference to the output sequence desired. In particular, an offset to an indirect sequence is specified 2216 using the remaining portion of the lookup target. A decision 2218 is then made based on whether the high bit of the remaining portion of the lookup target is equal to one. If it is not, then chunks of charsize are copied 2220 to the output sequence, and then the processing 2200 completes by returning 2222 an indication that the mapping was found. On the other hand, when the high bit of the remaining portion of the lookup target is determined 2218 to be equal to one, then a count of sequences in the sequential chain is obtained 2224, and a linear search 2226 is carried out through the sequences to identify a mapping. Following block 2226, previously described blocks 2220 and 2222 are performed.

FIG. 26C details the operations performed by block 2226 in FIG. 26B. Recall, block 2226 in FIG. 26C performs a linear search through the sequences. Initially, the current count is set 2228 to zero. A decision 2230 is then made based on whether the current count is greater than or equal to the sequence count. If the current count is greater than or equal to the sequence count, then the map lookup target to output sequence 2200 returns 2232 with an indication that the mapping was not found. On the other hand, when the current count is not greater than or equal to the sequence count, then a next output sequence and its sequence mask are obtained 2234. The sequence mask is a mask used to choose one of several output sequences. A decision 2236 is then made based on whether the subset flags are being used. If the subset flags are not being used, then a decision 2238 determines whether the actual attributes logically ANDed with the sequence mask is bit-wise equal to the actual attributes. If so, the processing performs blocks 2220 and 2222 previously described because the mapping has been found. If, however, decision 2236 determines that the subset flags are being used, then a decision 2240 is made based on whether select flags logically ANDed with the sequence mask is bit-wise equal to the sequence mask. If so, blocks 2220 and 2222 previously described are performed because the mapping has been found. Hence, blocks 2238 and 2240 are two different ways to obtain the correct output sequence. On the other hand, when either decision blocks 2238 or 2240 indicate that the current sequence is not the correct mapping, then the current count is incremented 2242 and the processing returns to block 2230 to repeat the operations for the next sequence in the chain.

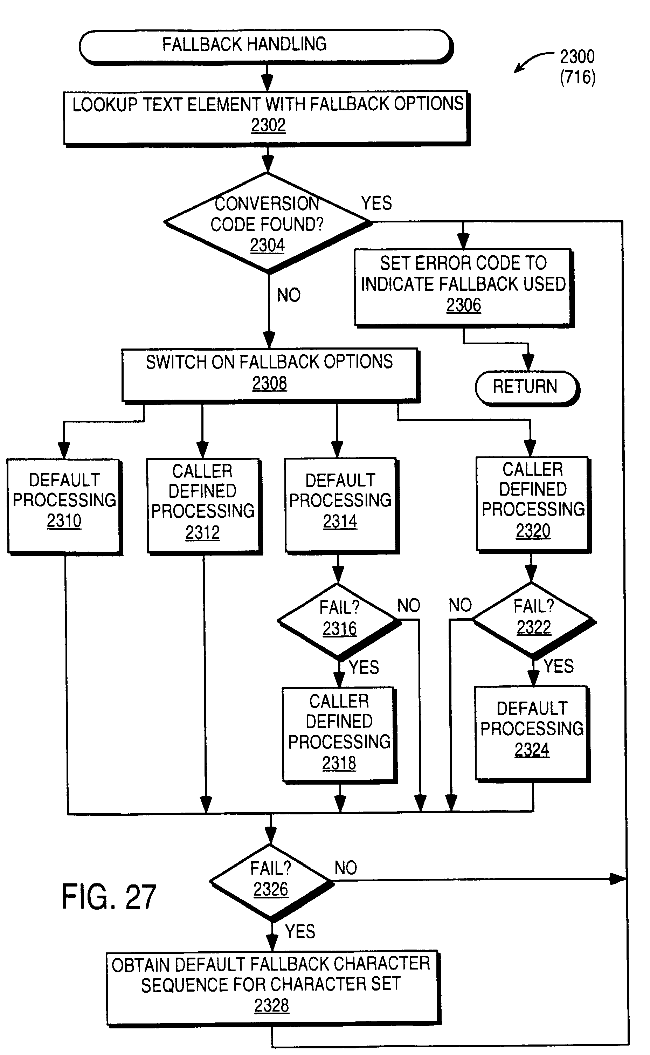

FIG. 27 is a flow chart illustrating fallback handling processing 2300 in accordance with the invention. The fallback handling processing 2300 is the processing performed by the fallback handler 416 and invoked by block 716 of the Unicode converter processing 700 shown in FIG. 7.

The fallback handling processing 2300 looks-up 2302 the text element with fallback options. The lookup 2302 is similar to the lookup text element processing 1630 described above with respect to FIG. 19. The only significant difference is that now the fallback options are set so that additional subtables are considered via the select flags which have changed. Next, a decision 2304 is made based on whether conversion code for the text element was found. If conversion code was found, then an error code is set 2306 to indicate what fallback was used in obtaining the conversion or mapping. Following block 2306, the fallback handling processing 2300 is complete and returns.

On the other hand, when the decision 2304 indicates that the conversion code is not found, then a switch operation 2308 is performed based on the fallback options. The fallback options are: default, caller defined, default followed by caller defined, or caller defined followed by default. If the fallback option is default, then the switch operation 2308 causes default processing 2310 to be performed. If the fallback option is caller defined, then the switch operation 2308 causes caller defined processing 2312 to be performed. If the fallback option is default followed by caller defined, then the switch operation 2308 causes the default processing to be performed 2314, followed by a decision 2316 and caller defined processing 2318. The decision 2316 operates to bypass the caller defined processing 2318 when a default processing 2314 is successful. If the fallback option is caller defined followed by default processing, then the switch operation 2308 causes caller defined processing to be performed 2320, followed by a decision 2322 and default processing 2324. The decision 2322 operates to bypass the default processing 2324 when the caller defined processing 2320 is successful. Following the processing associated with the switch operation 2308, a decision 2326 is made based on whether the fallback processing 2300 has successfully identified a mapping or conversion code. If the fallback processing 2300 has been unsuccessful, then a default fallback character sequence for the character set is obtained 2328. The default fallback character sequence is the conversion code(s) used when fallback lookup 2302 fails to identify a conversion code. Preferably, the default fallback character sequence is contained within the header of the mapping tables 414. For example, for ASCII, the default fallback character is typically "?". Then, following block 2328 or following decision block 2326 in the case when the fallback processing was successful in obtaining a mapping or conversion code, an error code to indicate fallback options have been used is set 2306 and the fallback handling processing 2300 is complete and returns.

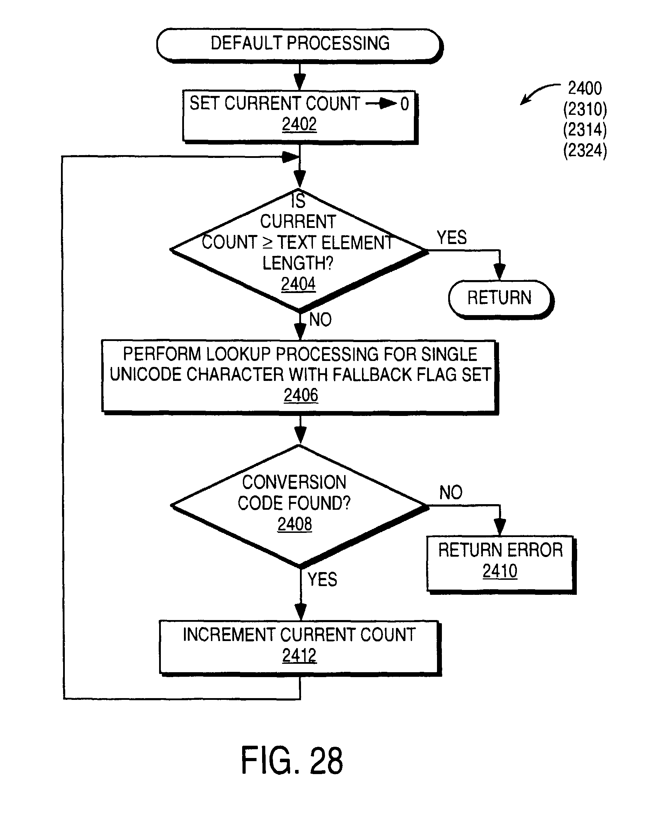

FIG. 28 is a flow chart illustrating default processing 2400. The default processing 2400 is associated with the processing carried out by blocks 2310, 2314 and 2324 in FIG. 27.

A default processing 2400 initially sets 2402 a current count to zero. Next, a decision 2404 is made based on whether the current count is greater than or equal to the text element length. If it is, then the default processing 2400 is complete and returns. Otherwise, lookup processing is performed 2406 for a single Unicode character with fallback flags set. Here, the lookup is for individual characters of the text element, whereas before (block 2302) the lookup was for the entire text element. Then, a decision 2408 is made based on whether conversion code for the single Unicode character has been found. If not, then the default processing 2400 returns 2410 with an error code indicating that no individual mapping was available for the Unicode character. On the other hand, if a code conversion was found, then the current count is incremented 2412 and processing returns to block 2404 for processing of the next Unicode character within the text element.

Although FIGS. 4-28 discussed above pertain to converting from Unicode to a target encoding (From-Unicode), as mentioned above the Unicode code conversion system 300 is equally able to convert to Unicode from a different source encoding (To-Unicode). The To-Unicode is similar to the processing for From-Unicode but is substantially less complex. The To-Unicode processing usually does not need to scan for text elements or lookup multiple character sequences in determining the target encodings. Instead, the To-Unicode processing need only break the source string into individual characters and then find the corresponding code point in Unicode. However, in the rare case in which a mapping for a character can be influenced by the character that follows it (e.g., Indic scripts such as Devanagari, for example), scanning may be performed as discussed above.

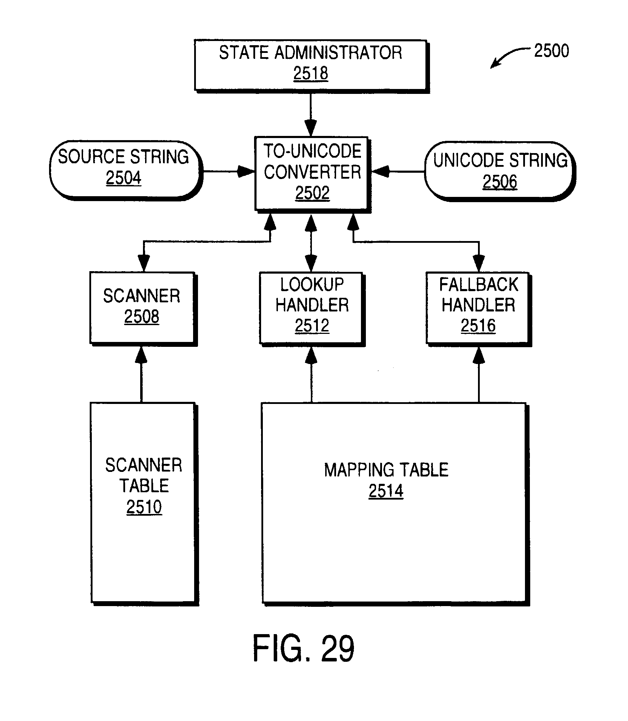

FIG. 29 illustrates a block diagram of an embodiment of a Unicode code conversion system 2500 according to the invention. The Unicode code conversion system 2500 converts to Unicode (i.e., To-Unicode processing). The Unicode code conversion system 2500 includes a To-Unicode converter 2502 which receives a source string 2504 and produces a Unicode string 2506. The To-Unicode converter 2502 performs the code conversion process via To-Unicode converter 2502 which interacts with a scanner 2508. The scanner 2508 in conjunction with the scanner table 2510 scans the source string 2504 to chunk the source string 2504 into characters. Here, unlike the From-Unicode situation, the source string is simply divided into individual characters. The To-Unicode converter 2502 then uses a lookup handler 2512 to look up the individual characters so as to obtain Unicode encodings therefor. The lookup handler 2512 uses the mapping table 2514 to obtain the character in Unicode. Additionally, the To-Unicode converter 2502 may also use a fallback handler 2516. The fallback handler 2516 operates together with the mapping table 2514 to identify one or more characters in the target encoding that are able to be used as a fallback mapping for the text element in cases where the lookup handler 2512 has been unable to identify a Unicode character.

The scanner 2508, the scanner table 2510, the lookup handler 2512, the mapping table 2514, the fallback handler 2516, the state administration 2518 are similar, but substantially less complex, than the corresponding devices in FIG. 4. Hence, these devices can be designed to implement both To-Unicode and From-Unicode processing. Further, when a given computer system or other electronic device is capable of performing both the To-Unicode and the From-Unicode processing, the computer system or other electronic device can operate as a hub. The hub could then operate to convert between various national character sets supported by Unicode. For example, a source national character set would first be converted to Unicode, and then converted to a target national character set.

With respect to the first aspect of the invention, the tables described above preferably use the formats discussed above to effectuate a compression of the data to be stored within the tables. Additionally, with respect to the first aspect of the invention, the compression can be significant, for example, the attributes table is fifty times (50-to-1) smaller when compressed. However, with respect to the first aspect of the invention, those skilled in the art will recognize that the format of the tables may take many forms, some being easier to implement than others. The easiest implementation is typically a table without using any compression, however, this requires the most data storage. Further, according to the first aspect of the invention, although tables are used in the implementations discussed above, the behavior caused by these tables could instead be directly coded. However, direct coding would make changing the operating of the code conversion system difficult, whereas with tables typically only the tables would need to be changed to implement such changes.

The many features and advantages of the present invention are apparent from the written description, and thus, it is intended by the appended claims to cover all such features and advantages of the invention. Further, since numerous modifications and changes will readily occur to those skilled in the art, it is not desired to limit the invention to the exact construction and operation as illustrated and described. Hence, all suitable modifications and equivalents may be resorted to as falling within the scope of the invention.

## Claims

1. A method for converting a source string into a target string, said method comprising:
(a) receiving a source string having a first character encoding;
(b) sequentially dividing the source string into text elements, each text element including one or more characters of the source string;
(c) looking up in a mapping table a conversion code associated with a second character encoding for each of the text elements; and
(d) combining the conversion codes for the text elements so as to form a target string of the second character encoding.

2. A method as recited in claim 1, wherein said method further comprises:
(e) reordering, after said dividing (b) but prior to said look up (c), certain characters within each of the text elements if the certain characters are present in the text elements.

3. A method as recited in claim 2, wherein said reordering (c) is preferably performed using weighting values for different character classes.

4. A method as recited in claim 1, wherein each of the characters has a character class associated therewith, and
wherein said dividing (b) is based at least in part on the character class of the characters within the source string.

5. A method as recited in claim 1, wherein said dividing (b) comprises:
(b1) obtaining a next source character from the source string;
(b2) determining whether the source character obtained should be included within a current text element or alternatively begin a new next text element;
(b3) placing the source character obtained in the current text element or the new next text element in accordance with said determining (b2); and
(b4) repeating (b1) through (b3) until the source string has been completely placed in text elements.

6. A method as recited in claim 5, wherein said determining (b2) comprises:
(i) looking up attributes associated with the source character, the attributes including at least a class indicator; and
(ii) determining whether the source character obtained should be included within the current text element or alternatively begin a new next text element based on the class indicator.

7. A method as recited in claim 5, wherein said determining (b2) comprises:
(i) looking up attributes associated with the source character, the attributes including at least a class indicator;
(ii) providing a state machine having a plurality of states, the state machine being used to determining whether the source character obtained should be included within the current text element or alternatively begin a new next text element based on the class indicator and a current state of the state machine; and
(iii) updating the current state of the state machine.

8. A method as recited in claim 1, wherein said combining (d) comprises
(d1) determining a target character size for the second character encodings; and
(d2) forming the target string by copying the conversion codes for the text elements which have been looked up to the target string in units of the target character size.

9. A method as recited in claim 8, wherein the conversion code looked up (c) specifies an offset to an indirect encoding sequence.

10. A method as recited in any of claims 1-9,
wherein said method further comprises:
(e) determining, prior to said looking up (c), a direction for the source characters of the source string;
wherein said looking up (c) in the mapping table the conversion code associated with the second character encoding for each of the source characters based on the first character encoding and the direction determined.

11. A method as recited in claim 10, wherein the direction of each source character is one of a left-to-right direction and a right-to-left direction.

12. A method as recited in claim 10, wherein said determining (e) comprises:
(e1) determining whether the direction is irrelevant; and
(e2) when the direction is relevant, determining whether the direction is one of a left-to-right direction and a right-to-left direction.

13. A method as recited in claim 10, wherein said determining (c) determines the direction for all or parts of the source string based on the direction of one or more characters of the source string.

14. A method as recited in claim 10, wherein said determining (e) comprises:
(i) looking up attributes associated with the source character, the attributes including at least a class indicator; and
(ii) determining the direction of the source character based on the class indicator.

15. A method as recited in claim 10, wherein said determining (c) comprises:
(i) looking up attributes associated with the source character, the attributes including at least a class indicator;
(ii) providing a state machine having a plurality of states, the state machine being used to determining the direction of the source character based on the class indicator and a state of the state machine; and
(iii) updating the state of the state machine.

16. A method as recited in claim 15, wherein the state machine is further for determining whether the source character should be included within a current text element or alternatively begin a new next text element based on the class indicator and a current state of the state machine.

17. A method as recited in claim 15, wherein said determining (e) determines the direction of the current text element.

18. A method as recited in any of claims 1-17,
wherein said method further comprises:
(e) determining a context for each of the text elements, and
wherein said look up (c) in the mapping table the conversion code associated with the second character encoding for each of the text elements is based on the first character encoding and the context for each of the text elements.

19. A method as recited in claim 18, wherein the context of each source character is dependent upon source characters adjacent thereto in the source string.

20. A method as recited in claim 18, wherein said determining (c) comprises:
(e1) determining whether the context is irrelevant; and
(e2) when the context is relevant, determining whether the context is one of initial, medial, final, or alone.

21. A method as recited in claim 20, wherein when performing said determining (e2) the source string is scanned character-by-character so that with reference to determining the context for a particular source character, adjacent source characters can effect the context for the particular source character.

22. A method as recited in claim 18, wherein said determining (e) comprises:
(i) looking up attributes associated with the source character, the attributes including at least a class indicator; and
(ii) determining the context of the source character based on the class indicator.

23. A method as recited in claim 18, wherein said determining (e) comprises:
(i) looking up attributes associated with the source character, the attributes including at least a class indicator;
(ii) providing a state machine having a plurality of states, the state machine being used to determining the context of the source character based on the class indicator and a state of the state machine; and
(iii) updating the state of the state machine.

24. A method as recited in claim 23, wherein the state machine is further for determining whether the source character should be included within a current text element or alternatively begin a new next text element based on the class indicator and a current state of the state machine.

25. A method as recited in any of claims 1-24,
wherein said receiving (a) the source string operates to receive a portion of a source string in a buffer, and
wherein said determining (b) includes,
(b1) determining a text element within the portion of the source string;
(b2) determining whether the text element is complete;
(b3) including the text element in a truncated portion of the source string when the text element is complete:
(b4) repeating steps (b1) - (b3) until the portion of the source string has been completely considered; and
(b5) saving any remaining portion of the source string for use with a next portion of the source string received in the buffer.

26. A method as recited in any of claims 1-25, wherein the conversion code consists of one or more characters in the second character encoding.

27. A method as recited in any of claims 1-26, wherein the text elements are adjacent to one another, and wherein for each of the text elements including more than one character, the characters are adjacent in the source string.

28. A method as recited in any of claims 1-27, wherein the mapping table includes regular mappings and fallback mappings, and
wherein said looking up (c) determines the conversion code for each of the text elements using the fallback mappings when the mapping table does not contain a conversion code for the text elements using the regular mappings.

29. A method as recited in claim 1, wherein each of the source characters has a character class associated therewith, and
wherein said dividing (f) is based at least in part on the character class of the source characters within the source string.

30. A method as recited in any of claims 1-29, wherein said combining (d) comprises
(d1) determining a target character size for the second character encodings; and
(d2) forming the target string by copying the conversion codes for the text elements which have been looked up to the target string in units of the target character size.

31. A code conversion system for converting a source string to a target string, said system comprising:
a converter (402; 2502) for controlling the conversion of the source string having a fist character encoding into the target string having a second character encoding;
a scanner (408; 2508), operatively connected to said converter, for dividing the source string into text elements, each text element including one or more characters of the source string;
a mapping table (414; 2514) for storing target encodings for text elements of the source encoding; and
a lookup handler (412; 2512), operatively connected to said converter and said mapping table, for looking up in said mapping table a conversion code associated with a second character encoding for each of the text elements.

32. A code conversion system as recited in claim 31, wherein said scanner further determines a direction of the characters in the text elements, and
wherein said a lookup handler looks up in said mapping table the conversion code associated with the target character encoding for each of the text elements based on the direction and the source encoding for the text elements.

33. A code conversion system as recited in claim 31,
wherein said scanner further determines a context for each of the text elements, and
wherein said lookup handler looks up in said mapping table the conversion code associated with the target character encoding for each of the text elements in the source string based on the context and the second character encoding for the text elements.

34. A code conversion system as recited in claim 33.
wherein said mapping table stores target encodings for text elements of the source encoding, and
wherein said lookup handler looks up in said mapping table the target character encoding for each of the text elements based on the context and the source character encoding for each of the text elements.

35. A code conversion system as recited in claim 31,
wherein said code conversion system further comprises:
a buffer (405) for receiving a portion of the source string at a time, the source string including more than one portion;
a truncator (407) for truncating the portion of the source string, and
wherein said scanner divides the truncated portion of the source string into text elements, each text element including one or more characters of the truncated portion of the source string.

36. A code conversion system as re'cited in claim 35, wherein said truncator in conjunction with said scanner scans through the portion of the source string to determine the text elements within the portion, and determines the truncated portion as a subpart of the portion of the source string that consists of completed text elements.

37. A code conversion system as recited in claim 35, wherein said truncator determines the truncated portion as a subpart of the portion of the source string that can be converted to the target string without being affected by subsequent portions of the source string.

38. A code conversion system as recited in any of claims 31-37, wherein said system further comprises:
a fallback handler (416; 2516), operatively connected to said converter, for providing fallback conversion codes in certain cases, when said lookup handler is unable to provide a conversion code for one or more text elements, the fallback conversion codes contain one or more code points in the target encoding that are not exactly equivalent to the characters in the text element but have a graphical appearance that is similar.

39. A code conversion system as recited in any of claims 31-38, wherein said system further comprises:
a scanner table (410; 2510), operatively connected to said scanner, for assisting said scanner in determining whether individual characters in the input string should be included within a current text element or alternatively begin a new next text element.

40. A code conversion table as recited in claim 39, wherein the characters of the source string have character class associated therewith, and
wherein said scanner table comprises an array of elements, said array being indexed by character class.

41. A code conversion system as recited in any of claims 33-40, wherein the characters in the source string are Unicode characters.

42. A code conversion system as recited in any of claims 33-40, wherein the characters in the target string are Unicode characters.

## Patentansprüche

1. Verfahren zur Umwandlung einer Primärzeichenfolge in eine Zielzeichenfolge, wobei das Verfahren aufweist:
(a) Empfang einer Primärzeichenfolge mit einer ersten Zeichencodierung;
(b) sequentielle Unterteilung der Primärzeichenfolge in Textelemente , wobei jedes Textelement ein oder mehrere Zeichen der Primärzeichenfolge umfaßt;
(c) Suchen eines einer zweiten Zeichencodierung zugeordneten Umwandlungscodes für jedes der Textelemente in einer Abbildungstabelle; und
(d) Kombinieren der Umwandlungscodes für die Textelemente, um eine Zielzeichenfolge der zweiten Zeichencodierung zu bilden.

2. Verfahren gemäß Anspruch 1, wobei das Verfahren weiterhin aufweist:
(e) nach der Unterteilung (b), aber vor dem Suchen (c) Aufzeichnung bestimmter Zeichen innerhalb jedes Textelementes, wenn die bestimmten Zeichen in den Textelementen vorhanden sind.

3. Verfahren gemäß Anspruch 2, bei welchem die Aufzeichnung (e) vorzugsweise durchgeführt wird, indem Gewichtungswerte für die verschiedenen Zeichenklassen verwendet werden.

4. Verfahren gemäß Anspruch 1, bei welchem jedes der Zeichen eine ihm zugeordnete Zeichenklasse aufweist, und bei welchem die Unterteilung (b) wenigstens teilweise auf der Zeichenklasse der Zeichen innerhalb der Primärzeichenfolge basiert.

5. Verfahren gemäß Anspruch 1, bei welchem die Unterteilung (b) aufweist:
(b1) Erhalt eines nächsten Primärzeichens aus der Primärzeichenfolge;
(b2) Bestimmung, ob das erhaltene Primärzeichen in ein laufendes Textelement eingefügt oder alternativ ein neues nächstes Textelement begonnen werden soll;
(b3) Anordnung des Primärzeichens in das laufende Textelement oder das neue nächste Textelement in Übereinstimmung mit der Bestimmung (b2); und
(b4) Wiederholung von (bl) bis (b3) bis die Primärzeichenfolge vollständig in Textelementen angeordnet ist.

6. Verfahren gemäß Anspruch 5, bei welchem die Bestimmung (b2) aufweist:
(i) Suchen von dem Primärzeichen zugeordneten Attributen, wobei die Attribute wenigstens eine Klassenanzeige beinhalten; und
(ii) Bestimmung auf der Basis der Klassenanzeige, ob das erhaltene Primärzeichen in das laufende Textelement eingefügt oder alternativ ein neues nächstes Textelement begonnen werden soll.

7. Verfahren gemäß Anspruch 5, bei welchem die Bestimmung aufweist:
(i) Suchen von dem Primärzeichen zugeordneten Attributen, wobei die Attribute wenigstens eine Klassenanzeige beinhalten;
(ii) Bereitstellung eines Zustandsmoduls mit einer Vielzahl von Zuständen, wobei das Zustandsmodul für die Bestimmung, ob das erhaltene Primärzeichen in das laufende Textelement eingefügt oder alternativ ein neues nächstes Textelement begonnen werden soll, basierend auf der Klassenanzeige und einem laufenden Zustand des Zustandsmoduls verwendet wird; und
(iii) Aktualisierung des laufenden Zustands des Zustandsmoduls.

8. Verfahren gemäß Anspruch 1; bei welchem das Kombinieren (d) aufweist:
(d1) Bestimmung einer Zielzeichengröße für die zweiten Zeichencodierungen; und
(d2) Bildung der Zielzeichenfolge durch Kopieren der Umwandlungscodes für die Textelemente, welche gesucht worden sind, in die Zielzeichenfolge in Einheiten der Zielzeichengröße.

9. Verfahren gemäß Anspruch 8, bei welchem der gesuchte (c) Umwandlungscode eine Verschiebung zu einer indirekten Codierungssequenz spezifiziert.

10. Verfahren gemäß irgendeinem der Ansprüche 1-9, wobei das Verfahren weiterhin aufweist:
(e) vor dem Suchen (c) Bestimmung einer Richtung für die Primärzeichen der Primärzeichenfolge;
wobei das Suchen (c) des der zweiten Zeichencodierung zugeordneten Umwandlungscodes für jedes der Primärzeichen in der Abbildungstabelle auf der ersten Zeichencodierung und der bestimmten Richtung basiert.

11. Verfahren gemäß Anspruch 10, bei welchem die Richtung jedes Primärzeichens eine von einer links-nach-rechts-Richtung und einer rechts-nach-links-Richtung ist.

12. Verfahren gemäß Anspruch 10, bei welchem die Bestimmung (e) aufweist:
(e1) Bestimmung, ob die Richtung irrelevant ist; und
(e2) wenn die Richtung relevant ist, Bestimmung, ob die Richtung eine von einer links-nachrechts-Richtung und einer rechts-nach-links-Richtung ist.

13. Verfahren gemäß Anspruch 10, bei welchem die Bestimmung (e) die Richtung für die gesamte oder teilweise Primärzeichenfolge basierend auf der Richtung eines oder mehrerer Zeichen der Primärzeichenfolge bestimmt.

14. Verfahren gemäß Anspruch 10, bei welchem die Bestimmung (e) aufweist:
(i) Suchen von dem Primärzeichen zugeordneten Attributen, wobei die Attribute wenigstens eine Klassenanzeige beinhalten; und
(ii) Bestimmung der Richtung des Primärzeichens basierend auf der Klassenanzeige.

15. Verfahren gemäß Anspruch 10, bei welchem die Bestimmung (e) aufweist:
(i) Suchen von dem Primärzeichen zugeordneten Attributen, wobei die Attribute wenigstens eine Klassenanzeige beinhalten;
(ii) Bereitstellung eines Zustandsmoduls mit einer Vielzahl von Zuständen, wobei das Zustandsmodul verwendet wird, um die Richtung des Primärzeichens basierend auf der Klassenanzeige und einem Zustand des Zustandsmoduls zu bestimmen; und
(iii) Aktualisierung des Zustands des Zustandsmoduls.

16. Verfahren gemäß Anspruch 15, bei welchem das Zustandsmodul außerdem dazu dient, basierend auf der Klassenanzeige und einem laufenden Zustand des Zustandsmoduls zu bestimmen, ob das Primärzeichen in ein laufendes Textelement eingefügt oder alternativ ein neues nächstes Textelement begonnen werden soll.

17. Verfahren gemäß Anspruch 15, bei welchem die Bestimmung (e) die Richtung des laufenden Textelementes bestimmt.

18. Verfahren gemäß irgendeinem der Ansprüche 1-17, wobei das Verfahren weiterhin aufweist:
(e) Bestimmung eines Kontexts für jedes der Textelemente, und
wobei das Suchen (c) des der zweiten Zeichencodierung zugeordneten Umwandlungscodes für jedes der Textelemente in der Abbildungstabelle auf der ersten Zeichencodierung und dem Kontext für jedes der Textelemente basiert.

19. Verfahren gemäß Anspruch 18, bei welchem der Kontext jedes Primärzeichens abhängig von den in der Primärzeichenfolge daran angrenzenden Primärzeichen ist.

20. Verfahren gemäß Anspruch 18, bei welchem die Bestimmung (e) aufweist:
(e1) Bestimmung, ob der Kontext irrelevant ist; und
(e2) wenn der Kontext relevant ist, Bestimmung, ob der Kontext ein Anfangs-, Mitte-, End- oder Einzelkontext ist.

21. Verfahren gemäß Anspruch 20, bei welchem bei der Durchführung der Bestimmung (e2) die Primärzeichenfolge Zeichen für Zeichen abgetastet wird, so daß bezüglich der Bestimmung des Kontexts für ein bestimmtes Primärzeichen angrenzende Primärzeichen den Kontext für das bestimmte Primärzeichen bestimmen können.

22. Verfahren gemäß Anspruch 18, bei welchem die Bestimmung (e) aufweist:
(i) Suchen von dem Primärzeichen zugeordneten Attributen, wobei die Attribute wenigstens eine Klassenanzeige beinhalten; und
(ii) Bestimmung des Kontexts des Primärzeichens basierend auf der Klassenanzeige.

23. Verfahren gemäß Anspruch 18, bei welchem die Bestimmung (e) aufweist:
(i) Suchen von dem Primärzeichen zugeordneten Attributen, wobei die Attribute wenigstens eine Klassenanzeige beinhalten;
(ii) Bereitstellung eines Zustandsmoduls mit einer Vielzahl von Zuständen, wobei das Zustandsmodul verwendet wird, um den Kontext des Primärzeichens basierend auf der Klassenanzeige und einem Zustand des Zustandsmodüls zu bestimmen; und
(iii) Aktualisierung des Zustands des Zustandsmoduls.

24. Verfahren gemäß Anspruch 23, bei welchem das Zustandsmodul außerdem dazu dient, basierend auf der Klassenanzeige und einem laufenden Zustand des Zustandsmoduls zu bestimmen, ob das Primärzeichen in ein laufendes Textelement eingefügt oder alternativ ein neues nächstes Textelement begonnen werden soll.

25. Verfahren gemäß irgendeinem der Ansprüche 1-24,
bei welchem der Empfang (a) der Primärzeichenfolge beinhaltet, einen Abschnitt einer Primärzeichenfolge in einem Puffer aufzunehmen, und
bei welchem die Bestimmung (b) umfaßt:
(b1) Bestimmung eines Textelementes innerhalb des Abschnitts der Primärzeichenfolge;
(b2) Bestimmung, ob das Textelement vollständig ist;
(b3) Einfügen des Textelementes in einen abgekürzten Abschnitt der Primärzeichenfolge, wenn das Textelement vollständig ist;
(b4) Wiederholung der Schritte (b1) - (b3) bis der Abschnitt der Primärzeichenfolge vollständig berücksichtigt ist; und
(b5) Sichern jedes verbleibenden Abschnitts der Primärzeichenfolge zur Verwendung bei einem nächsten in dem Puffer aufgenommenen Abschnitt der Primärzeichenfolge.

26. Verfahren gemäß irgendeinem der Ansprüche 1-25, bei welchem der Umwandlungscode aus einem oder mehreren Zeichen in der zweiten Zeichencodierung besteht.

27. Verfahren gemäß irgendeinem der Ansprüche 1-26, bei welchem die Textelemente aneinander angrenzend sind, und bei welchem für jedes der Textelemente, welches mehr als ein Zeichen umfaßt, die Zeichen in der Primärzeichenfolge aneinander angrenzend sind.

28. Verfahren gemäß irgendeinem der Ansprüche 1-27, bei welchem die Abbildungstabelle reguläre Abbildungen und Ersatzabbildungen beinhaltet, und
bei welchem das Suchen (c) den Umwandlungscode für jedes der Textelemente unter Verwendung von Ersatzabbildungen bestimmt, wenn die Abbildungstabelle bei Verwendung der regulären Abbildungen keinen Umwandlungscode für die Textelemente enthält.

29. Verfahren gemäß Anspruch 1, bei welchem jedes der Primärzeichen eine ihm zugeordnete Zeichenklasse aufweist, und
bei welchem die Unterteilung (f) wenigstens teilweise auf der Zeichenklasse der Primärzeichen innerhalb der Primärzeichenfolge basiert.

30. Verfahren gemäß irgendeinem der Ansprüche 1 -29, bei welchem das Kombinieren (d) aufweist:
(d1) Bestimmung einer Zielzeichengröße für die zweiten Zeichencodierungen; und
(d2) Bildung der Zielzeichenfolge durch Kopieren der Umwandlungscodes für die Textelemente, welche gesucht worden sind, in die Zielzeichenfolge in Einheiten der Zielzeichengröße.

31. Codeumwandlungssystem zur Umwandlung einer Primärzeichenfolge in eine Zielzeichenfolge, wobei das System aufweist:
einen Wandler (402; 2502) zur Steuerung der Umwandlung der Primärzeichenfolge mit einer ersten Zeichencodierung in die Zielzeichenfolge mit einer zweiten Zeichencodierung;
eine Abfrageeinrichtung (408; 2508), welche operativ an den Wandler angeschlossen ist, um die Primärzeichenfolge in Textelemente zu unterteilen, wobei jedes Textelement ein oder mehrere Zeichen der Primärzeichenfolge beinhaltet;
eine Abbildungstabelle (414; 2514) zur Speicherung von Zielcodierungen für Textelemente der Primärcodierung; und
eine Suchvorrichtung (412; 2512), welche operativ an den Wandler und die Abbildungstabelle angeschlossen ist, zum Suchen eines einer zweiten Zeichencodierung zugeordneten Umwandlungscodes für jedes der Textelemente in der Abbildungstabelle.

32. Codeumwandlungssystem gemäß Anspruch 31, bei welchem die Abfrageeinrichtung außerdem eine Richtung der Zeichen in den Textelementen bestimmt, und
bei welchem die Suchvorrichtung basierend auf der Richtung und der Primärcodierung für die Textelemente in der Abbildungstabelle den der Zielzeichencodierung zugeordneten Umwandlungscode für jedes der Textelemente sucht.

33. Codeumwandlungssystem gemäß Anspruch 31,
bei welchem die Abfrageeinrichtung außerdem einen Kontext für jedes Textelement bestimmt, und
bei welchem die Suchvorrichtung basierend auf dem Kontext und der zweiten Zeichencodierung für die Textelemente in der Abbildungstabelle den der Zielzeichencodierung zugeordneten Umwandlungscode für jedes der Textelemente in der Primärzeichenfolge sucht.

34. Codeumwandlungssystem gemäß Anspruch 33,
bei welchem die Abbildungstabelle Zielcodierungen für Textelemente der Primärcodierung speichert, und
bei welchem die Suchvorrichtung basierend auf dem Kontext und der Primärzeichencodierung für jedes der Textelemente in der Abbildungstabelle für jedes der Textelemente die Zielzeichencodierung sucht.

35. Codeumwandlungssystem gemäß Anspruch 31,
wobei das Codeumwandlungssystem außerdem aufweist:
einen Puffer (405) zur Aufnahne eines Abschnittes der Primärzeichenfolge zu einem Zeitpunkt, wobei die Primärzeichenfolge mehr als einen Abschnitt umfaßt;
eine Abkürzungsvorrichtung (407) zur Abkürzung des Abschnitts der Primärzeichenfolge, und wobei die Abfrageeinrichtung den abgekürzten Abschnitt der Primärzeichenfolge in Textelemente unterteilt, wobei jedes Textelement ein oder mehrere Zeichen des abgekürzten Abschnitts der Primärzeichenfolge beinhaltet.

36. Codeumwandlungssystem gemäß Anspruch 35, bei welchem die Abkürzungsvorrichtung in Verbindung mit der Abfrageeinrichtung den Abschnitt der Primärzeichenfolge abfragt, um die Textelemente innerhalb des Abschnitts zu bestimmen, und den abgekürzten Abschnitt als einen Unterabschnitt des Abschnitts der Primärzeichenfolge bestimmt, welcher aus vervollständigten Textelementen besteht.

37. Codeumwandlungssystem gemäß Anspruch 35, bei welchem die Abkürzungsvorrichtung den abgekürzten Abschnitt als einen Unterabschnitt des Abschnitts der Primärzeichenfolge bestimmt, welcher in die Zielzeichenfolge umgewandelt werden kann, ohne von nachfolgenden Abschnitten der Primärzeichenfolge beeinflußt zu werden.

38. Codeumwandlungssystem gemäß irgendeinem der Ansprüche 31-37, wobei das System außerdem aufweist:
eine Ersatzvorrichtung (416; 2516), welche operativ an den Wandler angeschlossen ist, um Ersatzumwandlungscodes in bestimmten Fällen bereitzustellen, wenn die Suchvorrichtung nicht in der Lage ist, einen Umwandlungscode für ein oder mehrere Textelemente zu liefern, wobei die Ersatzumwandlungscodes einen oder mehrere Codepunkte in der Zielcodierung enthalten, welche nicht genau äquivalent zu den Zeichen in dem Textelement sind, aber ein graphisches Aussehen haben, welches ähnlich ist.

39. Codeumwandlungssystem gemäß irgendeinem der Ansprüche 31-38, wobei das System außerdem aufweist:
eine Abfragetabelle (410; 2510), welche operativ an die Abfrageeinrichtung angeschlossen ist, um die Abfrageeinrichtung bei der Bestimmung zu unterstützen, ob einzelne Zeichen in der Eingabezeichenfolge in ein laufendes Textelement eingefügt oder alternativ ein neues nächstes Textelement begonnen werden soll.

40. Codeumwandlungstabelle gemäß Anspruch 39, bei welcher die Zeichen der Primärzeichenfolge eine ihnen zugeordnete Zeichenklasse aufweisen, und
bei welcher die Abfragetabelle einen Datenbereich von Elementen aufweist, wobei der Datenbereich mit Zeichenklassen indiziert ist.

41. Codeumwandlungssystem gemäß irgendeinem der Ansprüche 33-40, bei welchem die Zeichen in der Primärzeichenfolge Unicode-Zeichen sind.

42. Codeumwandlungssystem gemäß irgendeinem der Ansprüche 33-40, bei welchem die Zeichen in der Zielzeichenfolge Unicode-Zeichen sind.

## Revendications

1. Un procédé de conversion d'une chaîne de source en une chaîne de cible, ledit procédé comprenant les étapes consistant à:
(a) recevoir une chaîne de source à premier codage de caractères;
(b) diviser en séquence la chaîne de source en éléments de texte, chaque élément de texte contenant un ou plusieurs caractères de la chaîne de source;
(c) rechercher dans une table de mise en correspondance un code de conversion associé à un deuxième codage de caractères pour chacun des éléments de texte; et
(d) combiner les codes de conversion pour les éléments de texte de façon à former une chaîne cible du deuxième codage de caractères.

2. Un procédé selon la revendication 1, dans lequel ledit procédé comprend en outre l'étape consistant à:
(e) réordonner, après ladite division (b) mais avant ladite recherche (c), certains caractères contenus à l'intérieur de chacun des éléments de texte si certains caractères sont présents dans les éléments de texte.

3. Un procédé selon la revendication 2, dans lequel ledit nouvel ordonnancement (c) est de préférence exécuté en utilisant des valeurs de pondération pour des classes différentes de caractères.

4. Un procédé selon la revendication 1, dans lequel une classe de caractères est associée à chacun des caractères, et
dans lequel ladite division (b) est basée au moins en partie sur la classe de caractères des caractères contenus dans la chaîne de source.

5. Un procédé selon la revendication 1, dans lequel ladite division (b) comprend les étapes consistant à:
(b1) obtenir de la chaîne de source un caractère suivant de source;
(b2) déterminer si le caractère de source obtenu devrait être inclus à l'intérieur d'un élément actuel de texte ou s'il devrait en variante débuter un nouvel élément suivant de texte;
(b3) placer le caractère de source obtenu dans l'élément actuel de texte ou dans le nouvel élément suivant de texte en fonction de ladite détermination (b2); et
(b4) répéter les étapes (b1) à (b3) jusqu'à ce que la chaîne de source ait été complètement placée dans des éléments de texte.

6. Un procédé selon la revendication 5, dans lequel ladite détermination (b2) comprend les étapes consistant à:
(i) rechercher des attributs associés au caractère de source, les attributs incluant au moins un indicateur de classe; et
(ii) déterminer sur la base de l'indicateur de classe si le caractère de source obtenu devrait être inclus à l'intérieur de l'élément actuel de texte ou en variante débuter un nouvel élément suivant de texte.

7. Un procédé selon la revendication 5, dans lequel ladite détermination (b2) comprend les étapes consistant à:
(i) rechercher des attributs associés au caractère de source, les attributs incluant au moins un indicateur de classe;
(ii) agencer une machine d'état à plusieurs états, la machine d'état étant utilisée pour déterminer, sur la base de l'indicateur de classe et d'un état actuel de la machine d'état, si le caractère de source obtenu devrait être inclus à l'intérieur de l'élément actuel de texte ou en variante débuter un nouvel élément suivant de texte
(iii) mettre à jour l'état actuel de la machine.

8. Un procédé selon la revendication 1, dans lequel ladite combinaison (d) comprend les étapes consistant à
(d1) déterminer une dimension de caractère cible pour les deuxième codages de caractères; et
(d2) former la chaîne de cible en copiant à la chaîne de cible, en unités de la dimension du caractère de cible, les codes de conversion pour les éléments de texte qui ont été recherchés.

9. Un procédé selon la revendication 8, dans lequel le code de conversion recherché en (c) spécifie un déport à une séquence de codage indirect.

10. Un procédé selon l'une quelconque des revendications 1 à 9,
dans lequel ledit procédé comprend en outre l'étape consistant à:
(e) déterminer, avant ladite recherche (c), une direction pour les caractères de source de la chaîne de source;
dans lequel ladite recherche (c), dans la table de mise en correspondance, du code de conversion associé au codage du deuxième caractère pour chacun des caractères de source est basé sur le premier codage de caractères et la direction déterminée.

11. Procédé selon la revendication 10, dans lequel la direction de chaque caractère de source est, soit une direction de gauche à droite, soit une direction de droite à gauche.

12. Un procédé selon la revendication 10, dans lequel ladite détermination (e) comprend les étapes consistant à:
(e1) déterminer si la direction est non pertinente; et
(e2) lorsque la direction est pertinente, déterminer si la direction est, soit une direction de gauche à droite, soit une direction de droite à gauche.

13. Procédé selon la revendication 10, dans lequel ladite détermination (e) détermine la direction pour la totalité ou des parties de la chaîne de source sur la base de la direction d'un ou plusieurs caractères de la chaîne de source.

14. Procédé selon la revendication 10, dans laquelle ladite détermination (e) comprend les étapes consistant à:
(i) rechercher des attributs associés au caractère de source, les attributs incluant au moins un indicateur de classe; et
(ii) déterminer la direction du caractère de source sur la base de l'indicateur de classe.

15. Un procédé selon la revendication 10, dans laquelle ladite détermination (e) comprend les étapes consistant à:
(i) rechercher des attributs associés au caractère de source, les attributs incluant au moins un indicateur de classe;
(ii) agencer une machine d'état à plusieurs états, la machine d'état étant utilisée pour déterminer la direction du caractère de source sur la base de l'indicateur de classe et d'un état de la machine d'état; et
(iii) mettre à jour l'état de la machine d'état.

16. Un procédé selon la revendication 15, dans lequel la machine d'état est en outre destinée à déterminer, sur la base de l'indicateur de classe et d'un état actuel de la machine d'état, si le caractère de source devrait être inclus à l'intérieur d'un élément actuel de texte ou débuter en variante un nouvel élément suivant de texte.

17. Un procédé selon la revendication 15, dans lequel ladite détermination (e) détermine la direction de l'élément actuel de texte.

18. Un procédé selon l'une des revendications 1 à 17, dans lequel ledit procédé comprend en outre les étapes consistant à:
(e) déterminer un contexte pour chacun des éléments de texte, et
dans lequel ladite recherche (c), dans la table de mise en correspondance, du code de conversion associé au deuxième codage de caractères pour chacun des éléments de texte est basée sur le premier codage de caractères et le contexte de chacun des éléments de texte.

19. Un procédé selon la revendication 18, dans lequel le contexte de chaque caractère de source dépend de caractères de source qui lui sont adjacents dans la chaîne de source.

20. Un procédé selon la revendication 18, dans lequel ladite détermination (e) comprend les étapes consistant à:
(e1) déterminer si le contexte est non pertinent; et
(e2) lorsque le contexte est pertinent, déterminer si le contexte est un contexte, soit initial, soit médian, soit final, soit seul.

21. Un procédé selon la revendication 20, dans lequel la chaîne de source est explorée caractère par caractère lors de l'exécution de ladite détermination (e2) de sorte que des caractères adjacents de source peuvent, en référence à la détermination du contexte pour un caractère particulier de source, affecter le contexte pour le caractère particulier de source.

22. Un procédé selon la revendication 18, dans lequel ladite détermination (e) comprend l'étape consistant à:
(i) rechercher des attributs associés au caractère de source, les attributs incluant au moins un indicateur de classe; et
(ii) déterminer le contexte du caractère de source sur la base de l'indicateur de classe.

23. Un procédé selon la revendication 18, dans lequel ladite détermination (e) comprend les étapes consistant à:
(i) rechercher les attributs associés au caractère de source, les attributs incluant au moins un indicateur de source;
(ii) agencer une machine d'état à plusieurs états, la machine d'état étant utilisée pour déterminer le contexte des caractères de source, sur la base de l'indicateur de classe et d'un état de la machine d'état; et
(iii) mettre à jour la machine d'état.

24. Un procédé selon la revendication 23, dans lequel la machine d'état est en outre destinée à déterminer, sur la base de l'indicateur de classe et d'un état actuel de la machine d'état, si le caractère de source devrait être inclus à l'intérieur d'un élément actuel de texte ou en variante débuter un nouvel élément suivant de texte.

25. Un procédé selon l'une quelconque des revendications 1 à 24,
dans lequel ladite réception (a) de la chaîne de source intervient pour recevoir dans un tampon une partie d'une chaîne de source, et
dans lequel ladite détermination (b) inclut les étapes consistant à:
(b1) déterminer un élément de texte à l'intérieur de la partie de la chaîne de source;
(b2) déterminer si l'élément de texte est complet;
(b3) inclure l'élément de texte dans une partie tronquée de la chaîne de source lorsque l'élément de texte est complet;
(b4) répéter des étapes (b1) à (b3) jusqu'à ce que la partie de la chaîne de source ait été complètement considérée; et
(b5) sauvegarder toute partie restante de la chaîne de source pour l'utiliser avec une partie suivante de la chaîne de source reçue dans le tampon.

26. Un procédé selon l'une quelconque des revendications 1 à 25, dans lequel le code de conversion consiste en un ou plusieurs caractères du deuxième codage de caractères.

27. Un procédé selon l'une quelconque des revendications 1 à 26, dans lequel les éléments de texte sont adjacents entre eux et dans lequel, pour chacun des éléments de texte qui inclut plus d'un caractère, les caractères sont adjacents dans la chaîne de source.

28. Un procédé selon l'une quelconque des revendications 1 à 27, dans lequel la table de mise en correspondance inclut des mises en correspondance normales et des mises en correspondance de reprise, et
dans lequel ladite recherche (c) détermine le code de conversion pour chacun des éléments de texte en utilisant les mises en correspondance de reprise lorsque la table des mises en correspondance ne contient aucun code de conversion pour les éléments de texte en utilisant les mises en correspondance normales.

29. Un procédé selon la revendication 1, dans lequel une classe de caractères est associée à chacun des caractères de source, et
dans lequel ladite division (f) est basée au moins en partie sur la classe de caractères des caractères de source contenus à l'intérieur de la chaîne de source.

30. Un procédé selon l'une quelconque des revendications 1 à 29 dans lequel ladite combinaison (d) comprend les étapes consistant à:
(d1) déterminer une dimension de caractère de cible pour les deuxièmes codages de caractères; et
(d2) former la chaîne de cible en copiant les codes de conversion à la chaîne de cible, en unités de la dimension des caractères de cible, pour les éléments de texte qui ont été recherchés.

31. Un système de conversion de code, pour convertir une chaîne de source en une chaîne de cible, ledit système comprenant:
un convertisseur (402; 2502) pour commander la conversion de la chaîne de source à premier codage de caractères en la chaîne de cible à deuxième codage de caractères;
un dispositif d'exploration (408; 2508) qui est connecté fonctionnellement audit convertisseur pour diviser la chaîne de source en éléments de texte, chaque élément de texte incluant un ou plusieurs caractères de la chaîne de source;
une table de mise en correspondance (414, 2514) pour mémoriser des codages de cible pour des éléments de texte du codage de source; et
un dispositif de traitement de recherche (412; 2512), connecté fonctionnellement audit convertisseur et à ladite table de mise en correspondance pour rechercher dans ladite table de mise en correspondance un code de conversion associé à un deuxième codage de caractères pour chacun des éléments de texte.

32. Un système de conversion de code selon la revendication 31, dans lequel ledit dispositif d'exploration détermine en outre une direction de caractères dans les éléments de texte, et
dans lequel ledit dispositif de traitement de recherche recherche dans ladite table de mise en correspondance, sur la base de la direction et du codage de source pour l'élément de texte, le code de conversion associé au codage de caractères de cible pour chacun des éléments de texte.

33. Un système de conversion de code selon la revendication 31,
dans lequel ledit dispositif d'exploration détermine en outre un contexte pour chacun des éléments de texte, et
dans lequel ledit dispositif de traitement de recherche recherche dans ladite table de mise en correspondance, sur la base du contexte et du deuxième codage de caractères pour les éléments de texte, le code de conversion associé au codage des caractères de cible pour certains des éléments de texte de la chaîne de source.

34. Un système de conversion de code selon la revendication 33,
dans lequel ladite table de mise en correspondance mémorise des codages de cible pour des éléments de texte du codage de source, et
dans lequel ledit dispositif de traitement de recherche recherche dans ladite table de mise en correspondance, sur la base du contexte et du codage de caractères de source pour chacun des éléments de texte, le codage de caractères de cible pour chacun des éléments de texte.

35. Un système de conversion de code selon la revendication 31,
dans lequel ledit système de transcodage comprend en outre:
un tampon (405) pour recevoir à la fois une partie de la chaîne de source, la chaîne de source incluant plus d'une partie;
un dispositif de troncature (407) pour tronquer la partie de la chaîne de source; et
dans lequel dispositif d'exploration divise la partie tronquée de la chaîne de source en éléments de texte, chaque élément de texte incluant un ou plusieurs caractères de la partie tronquée de la chaîne de source.

36. Un système de transcodage selon la revendication 35, dans lequel ledit dispositif de troncature explore en conjonction avec ledit dispositif d'exploration la partie de la chaîne de source afin de déterminer les éléments de texte à l'intérieur de la partie, et détermine la partie tronquée en tant que sous-partie de la partie de la chaîne de source qui consiste en éléments complétés de texte.

37. Un système de conversion de code selon la revendication 35, dans lequel ledit dispositif de troncature détermine la partie tronquée en tant que sous-partie de la partie de la chaîne de source qui peut être convertie en la chaîne de cible sans être affectée par des parties ultérieures de la chaîne de source.

38. Un système de conversion de code selon l'une quelconque des revendications 31 à 37, dans lequel ledit système comprend en outre:
un dispositif de traitement (416; 2516) de repli, connecté fonctionnellement audit transcodeur pour fournir des codes de conversion de repli dans certains cas où le dispositif de traitement de recherche ne peut pas fournir un code de conversion pour un ou plusieurs des éléments de texte, les codes de conversion de repli contiennent un ou plusieurs points de code dans le codage de cible qui ne sont pas exactement équivalents aux caractères de l'élément de texte, mais sont d'une apparence graphique qui est semblable.

39. Un système de conversion de code selon l'une quelconque des revendications 31 à 38, dans lequel ledit système comporte en outre:
une table (410; 2510) de dispositif d'exploration, connectée fonctionnellement audit dispositif d'exploration pour régler ledit dispositif d'exploration à déterminer si des caractères individuels de la chaîne d'entrée devraient être inclus à l'intérieur d'un élément actuel de texte ou en variante débuter un nouvel élément suivant de texte.

40. Une table de conversion de code selon la revendication 39, dans laquelle une classe de caractères est associée aux caractères de la chaîne de source, et
telle que ladite table de dispositif d'exploration comprend un réseau d'éléments, ledit réseau étant indexé par classe de caractères.

41. Un système de conversion de code selon l'une quelconque des revendications 33 à 40, dans lequel les caractères de la chaîne de source sont des caractères Unicode.

42. Un système de conversion de code selon l'une quelconque des revendications 33 à 40, dans lequel les caractères de la chaîne de cible sont des caractères Unicode.
